(19) Europäisches Patentamt
European Patent Office
Office européen des brevets

(11) EP 4 447 179 A1

(12) # EUROPEAN PATENT APPLICATION

(43) Date of publication:
**16.10.2024 Bulletin 2024/42**

(21) Application number: **24169903.2**

(22) Date of filing: **12.04.2024**

(51) International Patent Classification (IPC):
***H01M 10/0525*** *(2010.01)* ***C08G 64/02*** *(2006.01)*
***C08L 69/00*** *(2006.01)*

(52) Cooperative Patent Classification (CPC):
**H01M 10/0525; C08G 64/0216; C08G 64/305;**
H01M 2300/0082; H01M 2300/0091

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023 US 202363495799 P**

(71) Applicant: **Largan Medical Co., Ltd.**
**Taichung City 408 (TW)**

(72) Inventors:
- **CHEN, Wei-Yuan**
  **408 Taichung City (TW)**
- **CHEN, Po-Tsun**
  **408 Taichung City (TW)**
- **CHEN, Rih-Sian**
  **408 Taichung City (TW)**
- **LU, Yi-Rou**
  **408 Taichung City (TW)**
- **LI, Chia-Ying**
  **408 Taichung City (TW)**
- **TSAI, Cheng-Yu**
  **408 Taichung City (TW)**
- **TENG, Chun-Hung**
  **408 Taichung City (TW)**

(74) Representative: **Berggren Oy**
**P.O. Box 16**
**Eteläinen Rautatiekatu 10A**
**00101 Helsinki (FI)**

(54) **POLYMER, ELECTROLYTE AND BATTERY**

(57) A polymer, which is a composition of a battery, includes a polyester. The polyester is polymerized by at least two monomers, wherein each of the at least two monomers is selected from a group consisting of a carbonate ester and a polyol. The polyester can further include an end-capped polycarbonate ester, and the end-capped polycarbonate ester includes an inert group on an end thereof.

EP 4 447 179 A1

## Description

## BACKGROUND

### Technical Field

The present disclosure relates to a polymer, an electrolyte and a battery. More particularly, the present disclosure relates to a high molecular polymer including a polyester polymerized by at least two monomers and being colloidal state, and an electrolyte and a battery include the aforementioned polymer.

### Description of Related Art

The current goals of research and development of batteries are to achieve the demands of high energy density, high working voltage, fast charging speed, and long cycle life. Thus, the performance under high-temperature conditions and the safety of the battery have become the primary issues to be achieved. However, liquid electrolytes using organic solvents are easy to volatilize so as to cause the expansion of the internal volume of the battery, and the leakage of the electrolytes may also have happened. Further, when the battery is under the situation of excessive charging and discharging or in an environment with high temperature and high voltage, the internal materials of the battery, such as the SEI membrane, the electrolyte, the adhesive, the materials of anode and cathode, are easy to chemically react with each other while reaching to a specific temperature. Thus, it may cause the self-radiation of the materials, and the internal temperature of the battery will rise sharply, correspondingly. Furthermore, the liquid electrolytes with lower pyrolysis temperatures can easily cause the dangers of combustion and explosion. On the other hands, when the battery is charged or discharged, due to the influence of the lattice arrangement of material and surface defects thereof, the lithium metal generated therefrom is easy to form lithium dendrites because of the uneven deposition on the electrode surfaces. Accordingly, the separator may be damaged, resulting in a short circuit of the battery, or even worse, catching fire. Moreover, organic solvents will chemically react with the lithium metal to generate irreversible by-products, so that the interface impedance of the battery is increased, and then the ion conduction efficiency will be affected. Accordingly, the capacity, the performance and the life of the battery will be reduced.

Therefore, using the solid electrolytes to replace the conventional liquid electrolytes has become the mainstream trend of future research.

## SUMMARY

According to one aspect of the present disclosure, a polymer, which is a composition of a battery, includes a polyester. The polyester is polymerized by at least two monomers, wherein each of the at least two monomers is selected from a group consisting of a carbonate ester and a polyol. When a number-average molecular weight of the polyester is Mn, the following condition is satisfied: $Mn \leq 7500$ Dalton.

According to the polymer of the aforementioned aspect, the carbonate ester can be represented by Formula (I):

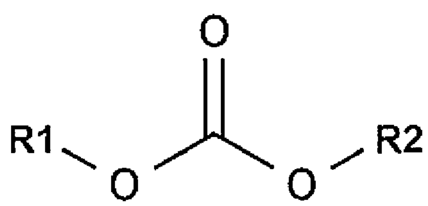

Formula (I),

wherein when a carbon number of R1 is Ncc1, and a carbon number of R2 is Ncc2, the following condition can be satisfied: $2 \leq Ncc1+Ncc2 \leq 10$.

According to the polymer of the aforementioned aspect, when a carbon number of the polyol is Ncp, the following condition can be satisfied: $1 \leq Ncp \leq 10$.

According to the polymer of the aforementioned aspect, when a carbon number of the polyol is Ncp, the following condition can be satisfied: $11 \leq Ncp \leq 20$.

According to the polymer of the aforementioned aspect, the polyester can include a polycarbonate ester, and

when a number-average molecular weight of the polycarbonate ester is eMn, the following condition can be satisfied: 300 Dalton ≤ eMn ≤ 2000 Dalton.

According to the polymer of the aforementioned aspect, when a viscosity of the polycarbonate ester is eVC, the following condition can be satisfied: 10 cP ≤ eVC ≤ 3000 cP.

According to the polymer of the aforementioned aspect, when the number-average molecular weight of the polyester is Mn, the following condition can be satisfied: 100 Dalton ≤ Mn ≤ 3500 Dalton.

According to the polymer of the aforementioned aspect, when a viscosity of the polyester is VC, the following condition can be satisfied: 5 cP ≤ VC ≤ 8000 cP.

According to the polymer of the aforementioned aspect, when a glass transition temperature of the polyester is Tg, the following condition can be satisfied: -80°C ≤ Tg ≤ -22°C.

According to the polymer of the aforementioned aspect, the polyester can be without a glass transition in a range of -80°C to -20°C.

According to the polymer of the aforementioned aspect, the polyester can be without a crystallization in a range of -80°C to 20°C.

According to the polymer of the aforementioned aspect, when a melting point of the polyester is Tm, the following condition can be satisfied: -80°C ≤ Tm ≤ 50°C.

According to the polymer of the aforementioned aspect, the polyester can be without a melting point in a range of -80°C to 50°C.

According to the polymer of the aforementioned aspect, when a pyrolysis temperature of the polyester is Td, the following condition can be satisfied:

$$100^\circ C \leq Td \leq 600^\circ C.$$

According to another aspect of the present disclosure, an electrolyte includes the polymer of the aforementioned aspect, a metal salt and an organic solvent. The polymer, the metal salt and the organic solvent are uniformly mixed.

According to another aspect of the present disclosure, an electrolyte includes the polymer of the aforementioned aspect and a metal salt. The polymer is uniformly mixed with the metal salt.

According to another aspect of the present disclosure, a battery includes the electrolyte of the aforementioned aspect.

According to the battery of the aforementioned aspect, when a maximum of discharge volumetric capacities from a first cycle of the battery to a twentieth cycle of the battery is VMax, the following condition can be satisfied: 40 $mAh/cm^3$ ≤ VMax ≤ 200 $mAh/cm^3$.

According to the battery of the aforementioned aspect, when a discharge volumetric capacity of a fifth cycle of the battery is V5, and a discharge volumetric capacity of a tenth cycle of the battery is V10, the following condition can be satisfied: 0.80 ≤ V10/V5 ≤ 1.40.

According to the battery of the aforementioned aspect, when the discharge volumetric capacity of the fifth cycle of the battery is V5, and a discharge volumetric capacity of a fiftieth cycle of the battery is V50, the following condition can be satisfied: 0.80 ≤ V50/V5 ≤ 1.40.

According to the battery of the aforementioned aspect, when the discharge volumetric capacity of the fifth cycle of the battery is V5, and a discharge volumetric capacity of a two hundredth cycle of the battery is V200, the following condition can be satisfied: 0.65 ≤ V200/V5 ≤ 1.40.

According to the battery of the aforementioned aspect, when a total number of Coulombic efficiency greater than 90% and smaller than 110% in first twenty cycles of the battery is n90E20, the following condition can be satisfied:

$$15 \leq n90E20 \leq 20.$$

According to another aspect of the present disclosure, a polymer, which is a composition of a battery, includes a polyester. The polyester includes an end-capped polycarbonate ester, and the end-capped polycarbonate ester includes an inert group on an end thereof. The polyester is polymerized by at least two monomers, and each of the at least two monomers is selected from a group consisting of a carbonate ester and a polyol.

According to the polymer of the aforementioned aspect, when a carbon number of the polyol is Ncp, the following condition can be satisfied: 1 ≤ Ncp ≤ 10.

According to the polymer of the aforementioned aspect, when a carbon number of the polyol is Ncp, the following condition can be satisfied: 11 ≤ Ncp ≤ 20.

According to the polymer of the aforementioned aspect, when a number-average molecular weight of the end-capped polycarbonate ester is cMn, the following condition can be satisfied: 100 Dalton ≤ cMn ≤ 1500 Dalton.

According to the polymer of the aforementioned aspect, when a viscosity of the end-capped polycarbonate ester is cVC, the following condition can be satisfied: $5\ cP \leq cVC \leq 500\ cP$.

According to the polymer of the aforementioned aspect, the polyester can be without a glass transition in a range of -80°C to -20°C.

According to the polymer of the aforementioned aspect, the polyester can be without a crystallization in a range of -80°C to 20°C, and the polyester can be without a melting point in a range of -60°C to 20°C.

According to the polymer of the aforementioned aspect, when a pyrolysis temperature of the polyester is Td, the following condition can be satisfied:

$$150°C \leq Td \leq 400°C.$$

According to the polymer of the aforementioned aspect, when a density of the polyester is Ds, the following condition can be satisfied: $0.50\ g/cm \leq Ds \leq 2.00\ g/cm$.

According to another aspect of the present disclosure, an electrolyte includes the polymer of the aforementioned aspect and a metal salt. The polymer is uniformly mixed with the metal salt.

According to the electrolyte of the aforementioned aspect, when an electrical conductivity of the electrolyte is Ci, the following condition can be satisfied: $1\times10^{-8}\ S\cdot cm^{-1} \leq Ci$.

According to another aspect of the present disclosure, a battery includes the electrolyte of the aforementioned aspect.

According to the battery of the aforementioned aspect, when a discharge volumetric capacity of a fifth cycle of the battery with a current of 1.0 C for charging and discharging at a constant temperature of 25°C is V5T25, and a discharge volumetric capacity of the fifth cycle of the battery with the current of 1.0 C for charging and discharging at a constant temperature of 60°C is V5T60, the following condition can be satisfied: $0.80 \leq V5T60/V5T25 \leq 1.50$.

According to the battery of the aforementioned aspect, when a discharge volumetric capacity of a fifteenth cycle of the battery with the current of 1.0 C for charging and discharging at the constant temperature of 25°C is V15T25, and a discharge volumetric capacity of the fifteenth cycle of the battery with the current of 1.0 C for charging and discharging at the constant temperature of 60°C is V15T60, the following condition can be satisfied: $0.80 \leq V15T60/V15T25 \leq 1.50$.

According to the battery of the aforementioned aspect, when a discharge volumetric capacity of a hundredth cycle of the battery with the current of 1.0 C for charging and discharging at the constant temperature of 25°C is V100T25, and a discharge volumetric capacity of the hundredth cycle of the battery with the current of 1.0 C for charging and discharging at the constant temperature of 60°C is V100T60, the following condition can be satisfied: $0.80 \leq V100T60/V100T25 \leq 2.00$.

## DETAILED DESCRIPTION

The present disclosure provides an electrolyte which is mainly made of high molecular polymers, and the electrolyte is colloidal at the room temperature. Thus, the electrolyte of the present disclosure can have good mechanical properties of the solid electrolyte and high ionic electrical conductivity of the liquid electrolyte. By the arrangements that the carbonate ester and the polyol are polymerized into a polymer by the transesterification reaction, and the electrolyte being colloidal and with high molecular weight is made of the polymer, it is favorable for solving the safety problems of volatilizing and leaking of the electrolyte, and a safe working environment for charging and discharging the battery can be ensured. Further, the electrolyte can fully contact the electrode interfaces so as to avoid the interface separation thereof, and then the electrical conductivity and the stability of ions can be effectively improved. Furthermore, in an environment with high temperature and high voltage, a higher pyrolysis temperature of the electrolyte can be obtained. Accordingly, not only it is favorable for preventing the internal pressure of the battery from increasing caused by the volatilization of the electrolyte with small molecule weight, but also the generation of the flammable gas caused by the exothermic reaction between the electrolyte with small molecule weight and the lithium metal can be avoided. Therefore, the electrolyte of the present disclosure has higher pyrolysis temperature, and thus the thermal stability and the using safety of the battery can be significantly enhanced. Moreover, an end of the polymer of the electrolyte of the present disclosure can be capped by alkyl groups, alkoxy groups, ester groups, aromatic groups, or other inert groups. Compared with traditional colloidal electrolytes, it is favorable for avoiding the chemical reactions with the lithium metal when the polymer contacts the electrode surfaces. Therefore, not only it is favorable for reducing the consumption of lithium metal caused by the generation of the by-products such as oxides or sulfides, but also the problems that the irreversible reduction in capacity and the increase in overall impedance of the battery due to the consumption of the lithium ions can be reduced. Further, the formation of metal dendrites can be inhibited, so that the chemical stability of the battery can be enhanced, and the safety and the cycle life of the battery can be increased.

According to one embodiment of one aspect of the present application, a polymer is provided. The polymer is

a composition of a battery, and the polymer includes a polyester. The polyester is polymerized by at least two monomers, and each of the monomers is selected from a group consisting of a carbonate ester and a polyol. When a number-average molecular weight of the polyester is Mn, the following condition is satisfied: Mn ≤ 7500 Dalton. Therefore, the electrolyte of the present disclosure is mainly made of high molecular polymers, and by the arrangements that the carbonate ester and the polyol are polymerized into the polymer by the transesterification reaction, the molecular weight of the polymer can be maintained in a proper range, and the electrolyte is colloidal at the room temperature. Thus, the electrolyte of the present disclosure can have good mechanical properties of the solid electrolyte and high ionic electrical conductivity of the liquid electrolyte. The electrolyte being colloidal and with high molecular weight is made of the polymer, so that it is favorable for solving the safety problems of volatilizing and leaking of the electrolyte, and a safe working environment for charging and discharging the battery can be ensured. Further, the electrolyte can fully contact the electrode interfaces so as to avoid the interface separation thereof, and then the electrical conductivity and the stability of ions can be effectively improved. Furthermore, in an environment with high temperature and high voltage, a higher pyrolysis temperature of the electrolyte can be obtained. Accordingly, not only it is favorable for preventing the internal pressure of the battery from increasing caused by the volatilization of the electrolyte with small molecule weight, but also the generation of the flammable gas caused by the exothermic reaction between the electrolyte with small molecule weight and the lithium metal can be avoided. Therefore, the electrolyte of the present disclosure has a higher pyrolysis temperature and a proper molecular weight, and thus the thermal stability and the using safety of the battery can be significantly enhanced.

According to another embodiment of one aspect of the present application, a polymer is provided. The polymer is a composition of a battery, and the polymer includes a polyester. The polyester includes an end-capped polycarbonate ester, and the end-capped polycarbonate ester includes an inert group on an end thereof. The polyester is polymerized by at least two monomers, and each of the monomers is selected from a group consisting of a carbonate ester and a polyol. Therefore, by the arrangement that the electrolyte with high molecular weight is polymerized by the carbonate ester and the polyol, it is favorable for solving the safety problems of volatilizing and leaking of the electrolyte, and a safe working environment for charging and discharging the battery can be ensured. Further, the electrolyte can fully contact the electrode interfaces so as to avoid the interface separation thereof, and then the electrical conductivity and the stability of ions can be effectively improved. Furthermore, the end of the structure of the polymer is capped with the inert group. Compared with traditional colloidal electrolytes, it is favorable for avoiding the chemical reactions with the lithium metal when the polymer contacts the electrode surfaces. Therefore, not only it is favorable for reducing the consumption of lithium metal caused by the generation of the by-products such as oxides or sulfides, but also the problems that the irreversible reduction in capacity and the increase in overall impedance of the battery due to the consumption of the lithium ions can be reduced. Further, the formation of metal dendrites can be inhibited, so that the chemical stability of the battery can be enhanced, and the safety and the cycle life of the battery can be increased.

According to the polymer of the present disclosure, when the number-average molecular weight of the polyester is Mn, the following condition can be satisfied: 100 Dalton ≤ Mn ≤ 3500 Dalton. Therefore, by controlling the molecular weight of the polymer, in the aspect of physical properties, the polymer of the present disclosure can have excellent mechanical properties and high fluidity, and in the aspect of chemical properties, it is favorable for effectively preventing the internal volume of the battery from expanding, and the leakage of the electrolyte caused by the volatilization of the electrolyte can be avoided. Furthermore, the following condition can be satisfied: 150 Dalton ≤ Mn ≤ 5000 Dalton. Furthermore, the following condition can be satisfied: 200 Dalton ≤ Mn ≤ 3000 Dalton. Furthermore, the following condition can be satisfied: 250 Dalton ≤ Mn ≤ 2500 Dalton. Furthermore, the following condition can be satisfied: 280 Dalton ≤ Mn ≤ 1800 Dalton. Furthermore, the following condition can be satisfied: 300 Dalton ≤ Mn ≤ 1200 Dalton.

According to the polymer of the present disclosure, the carbonate ester can be represented by Formula (I):

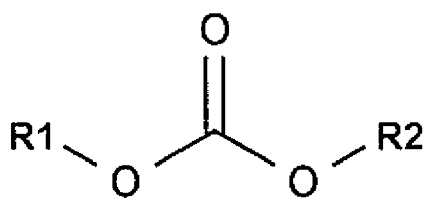

Formula (I),

wherein when a carbon number of R1 is Ncc1, and a carbon number of R2 is Ncc2, the following condition can be satisfied: 2 ≤ Ncc1+Ncc2 ≤ 10. Therefore, by selecting the carbonate ester having a proper carbon chain length as the polymerization precursor, it is favorable for increasing the reaction rate and the synthesis efficiency of the transesterification. Furthermore, the following condition can be satisfied: $2 \leq Ncc1+Ncc2 \leq 9$. Furthermore, the following condition can be satisfied: $2 \leq Ncc1+Ncc2 \leq 8$. Furthermore, the following condition can be satisfied: $2 \leq Ncc1+Ncc2 \leq 7$. Furthermore, the following condition can be satisfied: $3 \leq Ncc1+Ncc2 \leq 6$. Furthermore, the following condition can be satisfied: $3 \leq Ncc1+Ncc2 \leq 5$.

In Formula (I), the carbonate ester can be dimethyl carbonate, wherein a carbon number Ncc1 of R1 in the dimethyl carbonate is 1, a carbon number Ncc2 of R2 in the dimethyl carbonate is 1, and Ncc1 + Ncc2 = 2; the carbonate ester can be diethyl carbonate, wherein a carbon number Ncc1 of R1 in the diethyl carbonate is 2, a carbon number Ncc2 of R2 in the diethyl carbonate is 2, and Ncc1 + Ncc2 = 4; the carbonate ester can be dipropyl carbonate, wherein a carbon number Ncc1 of R1 in the dipropyl carbonate is 3, a carbon number Ncc2 of R2 in the dipropyl carbonate is 3, and Ncc1 + Ncc2 = 6; the carbonate ester can be ethyl methyl carbonate, wherein a carbon number Ncc1 of R1 in the ethyl methyl carbonate is 1, a carbon number Ncc2 of R2 in the ethyl methyl carbonate is 2, and Ncc1 + Ncc2 = 3; the carbonate ester can be methyl propyl carbonate, wherein a carbon number Ncc1 of R1 in the methyl propyl carbonate is 1, a carbon number Ncc2 of R2 in the methyl propyl carbonate is 3, and Ncc1 + Ncc2 = 4; the carbonate ester can be ethyl propyl carbonate, wherein a carbon number Ncc1 of R1 in the ethyl propyl carbonate is 2, a carbon number Ncc2 of R2 in the ethyl propyl carbonate is 3, and Ncc1 + Ncc2 = 5; or the carbonate ester can be methyl 2,2,2-trifluoroethyl carbonate, wherein a carbon number Ncc1 of R1 in the methyl 2,2,2-trifluoroethyl carbonate is 2, a carbon number Ncc2 of R2 in the methyl 2,2,2-trifluoroethyl carbonate is 2, and Ncc1 + Ncc2 = 4.

According to the polymer of the present disclosure, when a carbon number of the polyol is Ncp, the following condition can be satisfied: $1 \leq Ncp \leq 10$. Therefore, by selecting the polyol having a shorter carbon chain length as the polymerization precursor, it is favorable for controlling the molecular weight of the polymer, and the high mechanical properties and the high fluidity can be achieved. Furthermore, the following condition can be satisfied: $3 \leq Ncp \leq 9$. Furthermore, the following condition can be satisfied: $3 \leq Ncp \leq 8$. Furthermore, the following condition can be satisfied: $3 \leq Ncp \leq 7$. Furthermore, the following condition can be satisfied: $11 \leq Ncp \leq 20$. Therefore, by selecting the polyol having a longer carbon chain length as the polymerization precursor, it is favorable for increasing the melting point and the pyrolysis temperature of the polymer. Furthermore, the following condition can be satisfied: 2 ≤ Ncp :5 18. Furthermore, the following condition can be satisfied: $3 \leq Ncp \leq 16$. Furthermore, the following condition can be satisfied: $3 \leq Ncp \leq 14$. Furthermore, the following condition can be satisfied: $3 \leq Ncp \leq 12$. Furthermore, the following condition can be satisfied: $3 \leq Ncp \leq 10$.

According to the polymer of the present disclosure, the polyester can include a polycarbonate ester. When a number-average molecular weight of the polycarbonate ester is eMn, the following condition can be satisfied: 300 Dalton ≤ eMn ≤ 2000 Dalton. Therefore, by controlling the molecular weight of the polycarbonate ester, in the aspect of physical properties, the polymer of the present disclosure can have excellent mechanical properties and high fluidity, and in the aspect of chemical properties, it is favorable for effectively preventing the internal volume of the battery from expanding, and the leakage of the electrolyte can be avoided. Furthermore, the following condition can be satisfied: 150 Dalton ≤ eMn ≤ 3000 Dalton. Furthermore, the following condition can be satisfied: 200 Dalton ≤ eMn ≤ 2500 Dalton. Furthermore, the following condition can be satisfied: 250 Dalton ≤ eMn ≤ 2000 Dalton. Furthermore, the following condition can be satisfied: 300 Dalton ≤ eMn ≤ 1800 Dalton. Furthermore, the following condition can be satisfied: 350 Dalton ≤ eMn ≤ 1500 Dalton.

According to the polymer of the present disclosure, when a viscosity of the polycarbonate ester is eVC, the following condition can be satisfied: 10 cP ≤ eVC ≤ 3000 cP. Therefore, by the low viscosity of the polymer, it is favorable for increasing the transmission rate of the ions, so that the mechanical property of the polymer with high molecular weight can be maintained, and the safety of the battery can be enhanced. Furthermore, the following condition can be satisfied: 30 cP ≤ eVC ≤ 2500 cP. Furthermore, the following condition can be satisfied: 50 cP ≤ eVC ≤ 2000 cP. Furthermore, the following condition can be satisfied: 80 cP ≤ eVC ≤ 1500 cP. Furthermore, the following condition can be satisfied: 100 cP ≤ eVC ≤ 1200 cP. Furthermore, the following condition can be satisfied: 150 cP ≤ eVC ≤ 1000 cP.

According to the polymer of the present disclosure, when a viscosity of the polyester is VC, the following condition can be satisfied: 5 cP ≤ VC ≤ 8000 cP. Therefore, by the low viscosity of the polymer, it is favorable for increasing the transmission rate of the ions, so that the mechanical property of the polymer with high molecular weight can be maintained, and the safety of the battery can be enhanced. Furthermore, the following condition can be satisfied: 10 cP ≤ VC ≤ 5000 cP. Furthermore, the following condition can be satisfied: 20 cP ≤ VC ≤ 3000 cP. Furthermore, the following condition can be satisfied: 50 cP ≤ VC ≤ 1500 cP. Furthermore, the following condition can be satisfied: 100 cP ≤ VC ≤ 1200 cP. Furthermore, the following condition can be satisfied: 150 cP ≤ VC ≤ 1000 cP.

According to the polymer of the present disclosure, when a glass transition temperature of the polyester is Tg, the following condition can be satisfied: -80°C ≤ Tg ≤ -22°C. Therefore, by the lower glass transition temperature of the polymer, it is favorable for maintaining the fluidity of the polymer in the environment with low temperature, and the transmission efficiency of the ions can be enhanced.

According to the polymer of the present disclosure, the polyester can be without a glass transition in a range of -80°C to -20°C. Therefore, by the arrangement that the polymer does not transform into a glassy state in the environment

with low temperature, it is favorable for maintaining a higher degree of freedom in the molecular structure thereof in the environment with low temperature, so that the transmission efficiency of the ions can be enhanced. Furthermore, the polyester can be without the glass transition in a range of -80°C to -25°C. Furthermore, the polyester can be without the glass transition in a range of -80°C to -30°C. Furthermore, the polyester can be without the glass transition in a range of -80°C to -35°C. Furthermore, the polyester can be without the glass transition in a range of -75°C to -40°C. Furthermore, the polyester can be without the glass transition in a range of -70°C to -42°C.

According to the polymer of the present disclosure, the polyester can be without a crystallization in a range of -80°C to 20°C. Therefore, by the arrangement that the polymer does not crystallize in the aforementioned range of temperature, it is favorable for reducing the crystallization of the plolymer at the room temperature, and the transmission efficiency of the polymer being the amorphous state can be enhanced, so that the electrical conductivity of the electrolyte can be increased. Furthermore, the polyester can be without the crystallization in a range of -70°C to 15°C. Furthermore, the polyester can be without the crystallization in a range of -60°C to 10°C. Furthermore, the polyester can be without the crystallization in a range of -50°C to 0°C. Furthermore, the polyester can be without the crystallization in a range of -45°C to -10°C. Furthermore, the polyester can be without the crystallization in a range of -40°C to -20°C.

According to the polymer of the present disclosure, when a melting point of the polyester is Tm, the following condition can be satisfied: -80°C ≤ Tm ≤ 50°C. Therefore, by the arrangement that the polymer has a lower melting point, it is favorable for maintaining a higher fluidity at the room temperature, and the transmission efficiency of the ions can be enhanced. Furthermore, the following condition can be satisfied: -75°C ≤ Tm ≤ 40°C. Furthermore, the following condition can be satisfied: -72°C ≤ Tm ≤ 20°C. Furthermore, the following condition can be satisfied: -70°C ≤ Tm ≤ 10°C. Furthermore, the following condition can be satisfied: -65°C ≤ Tm ≤ 0°C. Furthermore, the following condition can be satisfied: -60°C ≤ Tm ≤ -20°C.

According to the polymer of the present disclosure, the polyester can be without a melting point in a range of -80°C to 50°C. Therefore, by the arrangement that the polymer is without a melting point in the aforementioned range of temperature, the polymer presents a non-solid state from a low-temperature environment to a high-temperature environment, so that the high fluidity of the polymer can be maintained, the transmission efficiency of ions can be enhanced, and the battery can have more diverse application designs. Furthermore, the polyester can be without the melting point in a range of -75°C to 40°C. Furthermore, the polyester can be without the melting point in a range of -70°C to 20°C. Furthermore, the polyester can be without the melting point in a range of -60°C to 10°C. Furthermore, the polyester can be without the melting point in a range of -55°C to 0°C. Furthermore, the polyester can be without the melting point in a range of -50°C to -20°C.

According to the polymer of the present disclosure, when a pyrolysis temperature of the polyester is Td, the following condition can be satisfied: 100°C ≤ Td ≤ 600°C. Therefore, by improving the heat resistance of the polymer, the structure of the polymer is not easily damaged in the environment with high temperature, so that the formation of by-products can be prevented, and it is favorable for significantly enhancing the using safety of the battery. Furthermore, the following condition can be satisfied: 110°C ≤ Td ≤ 550°C. Furthermore, the following condition can be satisfied: 120°C ≤ Td ≤ 500°C. Furthermore, the following condition can be satisfied: 130°C ≤ Td ≤ 450°C. Furthermore, the following condition can be satisfied: 140°C ≤ Td ≤ 400°C. Furthermore, the following condition can be satisfied: 150°C ≤ Td ≤ 350°C. Furthermore, the following condition can be satisfied: 150°C ≤ Td ≤ 400°C.

According to the polymer of the present disclosure, when a number-average molecular weight of the end-capped polycarbonate ester is cMn, the following condition can be satisfied: 100 Dalton ≤ cMn ≤ 1500 Dalton. Therefore, by controlling the molecular weight of the end-capped polycarbonate ester, the high mechanical properties and the high fluidity can be achieved, and good support abilities and sufficient wetting characteristics of the electrolyte can be provided. Furthermore, the following condition can be satisfied: 150 Dalton ≤ cMn ≤ 1200 Dalton. Furthermore, the following condition can be satisfied: 200 Dalton ≤ cMn ≤ 1000 Dalton. Furthermore, the following condition can be satisfied: 250 Dalton ≤ cMn ≤ 950 Dalton. Furthermore, the following condition can be satisfied: 280 Dalton ≤ cMn ≤ 900 Dalton. Furthermore, the following condition can be satisfied: 300 Dalton ≤ cMn ≤ 850 Dalton.

According to the polymer of the present disclosure, when a viscosity of the end-capped polycarbonate ester is cVC, the following condition can be satisfied: 5 cP ≤ cVC ≤ 500 cP. Therefore, by the arrangement that the end-capped polycarbonate ester has a proper viscosity, not only it is favorable for maintaining a high fluidity to enhance the transmission efficiency of ions, but also the end-capped polycarbonate ester has tiny or non-volatile properties, so that the concerns about the battery safety caused by the electrolyte volatilization and the leakage can be avoided. Furthermore, the following condition can be satisfied: 10 cP ≤ cVC ≤ 400 cP. Furthermore, the following condition can be satisfied: 15 cP ≤ cVC ≤ 300 cP. Furthermore, the following condition can be satisfied: 20 cP ≤ cVC ≤ 200 cP. Furthermore, the following condition can be satisfied: 25 cP ≤ cVC ≤ 150 cP. Furthermore, the following condition can be satisfied: 30 cP ≤ cVC ≤ 100 cP.

According to the polymer of the present disclosure, the polyester is without a crystallization in a range of -80°C to 20°C, and the polyester is without a melting point in a range of -60°C to 20°C. Therefore, by the arrangement that the polymer does not crystallize and is without a melting point from a low-temperature environment to a high-temperature

environment, it is favorable for reducing the crystallization of polymer at the room temperature, and the polymer can remain amorphous and non-solid over a wide range of temperature, so that the transmission efficiency of ions can be enhanced, and the battery can have more diverse application designs.

According to the polymer of the present disclosure, when a density of the polyester is Ds, the following condition can be satisfied: 0.50 g/cm ≤ Ds ≤ 2.00 g/cm. Therefore, by the arrangement that the polymer has a proper density, it is favorable for increasing the energy density of the battery. Furthermore, the following condition can be satisfied: 0.60 g/cm ≤ Ds ≤ 1.80 g/cm. Furthermore, the following condition can be satisfied: 0.70 g/cm ≤ Ds ≤ 1.60 g/cm. Furthermore, the following condition can be satisfied: 0.80 g/cm ≤ Ds ≤ 1.40 g/cm. Furthermore, the following condition can be satisfied: 0.90 g/cm ≤ Ds ≤ 1.30 g/cm. Furthermore, the following condition can be satisfied: 1.00 g/cm ≤ Ds ≤ 1.20 g/cm.

Each of the aforementioned features of the polymer of the present disclosure can be utilized in numerous combinations, so as to achieve the corresponding functionality.

According to one embodiment of another aspect of the present application, an electrolyte is provided. The electrolyte includes the polymer according to the aforementioned aspect and a metal salt. The polymer is uniformly mixed with the metal salt. Therefore, by the arrangements that the electrolyte is mainly made of high molecular polymers, and the electrolyte is colloidal at the room temperature and uniformly mixed with the metal salt, the electrolyte of the present disclosure can have good mechanical properties of the solid electrolyte and high ionic electrical conductivity of the liquid electrolyte.

According to another embodiment of another aspect of the present application, an electrolyte is provided. The electrolyte includes the polymer according to the aforementioned aspect, a metal salt and an organic solvent. The polymer, the metal salt and the organic solvent are uniformly mixed.

According to the electrolyte of the present disclosure, when an electrical conductivity of the electrolyte is Ci, the following condition can be satisfied: $1\times10^{-8}$ S·cm$^{-1}$ ≤ Ci. Therefore, in the cycles of charging and discharging of the battery, it is favorable for providing a fast transmission of ions on the electrolyte and between the interfaces of the electrolyte under a condition of a higher ionic electrical conductivity, and the capacity and the performance of the battery can be effectively increased. Furthermore, the following condition can be satisfied: $2\times10^{-8}$ S·cm$^{-1}$ ≤ Ci. Furthermore, the following condition can be satisfied: $5\times10^{-8}$ S·cm$^{-1}$ ≤ Ci. Furthermore, the following condition can be satisfied: $1\times10^{-7}$ S·cm$^{-1}$ ≤ Ci. Furthermore, the following condition can be satisfied: $1\times10^{-6}$ S·cm$^{-1}$ ≤ Ci. Furthermore, the following condition can be satisfied:

$$5\times10^{-6}\ \mathrm{S\cdot cm^{-1}} \leq \mathrm{Ci}.$$

According to one embodiment of further another aspect of the present application, a battery includes the electrolyte according to the aforementioned aspect.

According to the battery of the present disclosure, when a maximum of discharge volumetric capacities from a first cycle of the battery to a twentieth cycle of the battery is VMax, the following condition can be satisfied: 40 mAh/cm$^3$ ≤ VMax ≤ 200 mAh/cm$^3$. Therefore, by measuring the maximum capacity of the first twentieth cycles, it is favorable for ensuring the capacity of the battery after the battery reaches the stable state. Furthermore, the following condition can be satisfied: 45 mAh/cm$^3$ ≤ VMax ≤ 190 mAh/cm$^3$. Furthermore, the following condition can be satisfied: 48 mAh/cm$^3$ ≤ VMax ≤ 180 mAh/cm$^3$. Furthermore, the following condition can be satisfied: 50 mAh/cm$^3$ ≤ VMax ≤ 170 mAh/cm$^3$. Furthermore, the following condition can be satisfied: 52 mAh/cm$^3$ ≤ VMax ≤ 160 mAh/cm$^3$. Furthermore, the following condition can be satisfied: 55 mAh/cm$^3$ ≤ VMax ≤ 150 mAh/cm$^3$.

According to the battery of the present disclosure, when a discharge volumetric capacity of a fifth cycle of the battery is V5, and a discharge volumetric capacity of a tenth cycle of the battery is V10, the following condition can be satisfied: 0.80 ≤ V10/V5 ≤ 1.40. Therefore, by comparing the difference between the capacities of the fifth cycle and the numbers of short-term cycles of the battery, it is favorable for estimating the durability of the battery. Furthermore, the following condition can be satisfied: 0.85 ≤ V10/V5 ≤ 1.30. Furthermore, the following condition can be satisfied: 0.88 ≤ V10/V5 ≤ 1.25. Furthermore, the following condition can be satisfied: 0.90 ≤ V10/V5 ≤ 1.20. Furthermore, the following condition can be satisfied: 0.92 ≤ V10/V5 ≤ 1.15. Furthermore, the following condition can be satisfied: 0.95 ≤ V10/V5 ≤ 1.10.

According to the battery of the present disclosure, when the discharge volumetric capacity of the fifth cycle of the battery is V5, and a discharge volumetric capacity of a fiftieth cycle of the battery is V50, the following condition can be satisfied: 0.80 ≤ V50/V5 ≤ 1.40. Therefore, by comparing the difference between the capacities of the fifth cycle and the numbers of medium-term cycles of the battery, it is favorable for estimating the durability of the battery. Furthermore, the following condition can be satisfied: 0.85 ≤ V50/V5 ≤ 1.35. Furthermore, the following condition can be satisfied: 0.88 ≤ V50/V5 ≤ 1.30. Furthermore, the following condition can be satisfied: 0.90 ≤ V50/V5 ≤ 1.25. Furthermore, the following condition can be satisfied: 0.92 ≤ V50/V5 ≤ 1.23. Furthermore, the following condition can be satisfied: 0.95 ≤ V50/V5 ≤ 1.20.

According to the battery of the present disclosure, when the discharge volumetric capacity of the fifth cycle of the battery is V5, and a discharge volumetric capacity of a two hundredth cycle of the battery is V200, the following condition can be satisfied: 0.65 ≤ V200/V5 ≤ 1.40. Therefore, by comparing the difference between the capacities of the fifth cycle and the numbers of long-term cycles of the battery, it is favorable for estimating the life of the battery. Furthermore, the following condition can be satisfied: 0.70 ≤ V200/V5 ≤ 1.35. Furthermore, the following condition can be satisfied: 0.72 ≤ V200/V5 ≤ 1.30. Furthermore, the following condition can be satisfied: 0.80 ≤ V200/V5 ≤ 1.25. Furthermore, the following condition can be satisfied: 0.84 ≤ V200/V5 ≤ 1.23. Furthermore, the following condition can be satisfied: 0.87 ≤ V200/V5 ≤ 1.20.

According to the battery of the present disclosure, when the discharge volumetric capacity of the fifth cycle of the battery is V5, and a discharge volumetric capacity of a two hundred and thirtieth cycle of the battery is V230, the following condition can be satisfied: 0.70 ≤ V230/V5 ≤ 1.35. Therefore, by comparing the difference between the capacities of the fifth cycle and the numbers of long-term cycles of the battery, it is favorable for estimating the life of the battery. Furthermore, the following condition can be satisfied: 0.75 ≤ V230/V5 ≤ 1.30. Furthermore, the following condition can be satisfied: 0.80 ≤ V230/V5 ≤ 1.25. Furthermore, the following condition can be satisfied: 0.85 ≤ V230/V5 :5 1.23. Furthermore, the following condition can be satisfied: 0.90 ≤ V230/V5 ≤ 1.20.

According to the battery of the present disclosure, when the discharge volumetric capacity of the fifth cycle of the battery is V5, and a discharge volumetric capacity of a two hundred and fiftieth cycle of the battery is V250, the following condition can be satisfied: 0.70 ≤ V250/V5 ≤ 1.35. Therefore, by comparing the difference between the capacities of the fifth cycle and the numbers of long-term cycles of the battery, it is favorable for estimating the life of the battery. Furthermore, the following condition can be satisfied: 0.75 ≤ V250/V5 ≤ 1.30. Furthermore, the following condition can be satisfied: 0.80 ≤ V250/V5 ≤ 1.25. Furthermore, the following condition can be satisfied: 0.85 ≤ V250/V5 ≤ 1.23. Furthermore, the following condition can be satisfied: 0.90 ≤ V250/V5 ≤ 1.20.

According to the battery of the present disclosure, the discharge volumetric capacity of the fifth cycle of the battery is V5, and a discharge volumetric capacity of a two hundred and eightieth cycle of the battery is V280, the following condition can be satisfied: 0.65 ≤ V280/V5 ≤ 1.30. Therefore, by comparing the difference between the capacities of the fifth cycle and the numbers of long-term cycles of the battery, it is favorable for estimating the life of the battery. Furthermore, the following condition can be satisfied: 0.70 ≤ V280/V5 ≤ 1.25. Furthermore, the following condition can be satisfied: 0.75 ≤ V280/V5 ≤ 1.20. Furthermore, the following condition can be satisfied: 0.80 ≤ V280/V5 ≤ 1.15. Furthermore, the following condition can be satisfied: 0.85 ≤ V280/V5 ≤ 1.10.

According to the battery of the present disclosure, when the discharge volumetric capacity of the fifth cycle of the battery is V5, and a discharge volumetric capacity of a three hundredth cycle of the battery is V300, the following condition can be satisfied: 0.65 ≤ V300/V5 ≤ 1.30. Therefore, by comparing the difference between the capacities of the fifth cycle and the numbers of long-term cycles of the battery, it is favorable for estimating the life of the battery. Furthermore, the following condition can be satisfied: 0.70 ≤ V300/V5 ≤ 1.25. Furthermore, the following condition can be satisfied: 0.75 ≤ V300/V5 ≤ 1.20. Furthermore, the following condition can be satisfied: 0.80 ≤ V300/V5 ≤ 1.15. Furthermore, the following condition can be satisfied: 0.85 ≤ V300/V5 ≤ 1.10.

According to the battery of the present disclosure, when the discharge volumetric capacity of the fifth cycle of the battery is V5, and a discharge volumetric capacity of a three hundred and fiftieth cycle of the battery is V350, the following condition can be satisfied: 0.65 ≤ V350N5 ≤ 1.30. Therefore, by comparing the difference between the capacities of the fifth cycle and the numbers of long-term cycles of the battery, it is favorable for estimating the life of the battery. Furthermore, the following condition can be satisfied: 0.70 ≤ V350/V5 ≤ 1.25. Furthermore, the following condition can be satisfied: 0.75 ≤ V350/V5 ≤ 1.20. Furthermore, the following condition can be satisfied: 0.80 ≤ V350/V5 ≤ 1.15. Furthermore, the following condition can be satisfied: 0.85 ≤ V350/V5 ≤ 1.10.

According to the battery of the present disclosure, when the discharge volumetric capacity of the fifth cycle of the battery is V5, and a discharge volumetric capacity of a four hundredth cycle of the battery is V400, the following condition can be satisfied: 0.60 ≤ V400/V5 ≤ 1.20. Therefore, by comparing the difference between the capacities of the fifth cycle and the numbers of long-term cycles of the battery, it is favorable for estimating the life of the battery. Furthermore, the following condition can be satisfied: 0.65 ≤ V400/V5 ≤ 1.15. Furthermore, the following condition can be satisfied: 0.70 ≤ V400/V5 ≤ 1.10. Furthermore, the following condition can be satisfied: 0.75 ≤ V400/V5 ≤ 1.05.

According to the battery of the present disclosure, when the discharge volumetric capacity of the fifth cycle of the battery is V5, and a discharge volumetric capacity of a four hundred and fiftieth cycle of the battery is V450, the following condition can be satisfied: 0.55 ≤ V450/V5 ≤ 1.20. Therefore, by comparing the difference between the capacities of the fifth cycle and the numbers of long-term cycles of the battery, it is favorable for estimating the life of the battery. Furthermore, the following condition can be satisfied: 0.60 ≤ V450/V5 ≤ 1.15. Furthermore, the following condition can be satisfied: 0.65 ≤ V450/V5 ≤ 1.10. Furthermore, the following condition can be satisfied: 0.70 ≤ V450/V5 ≤ 1.05.

According to the battery of the present disclosure, when the discharge volumetric capacity of the fifth cycle of the battery is V5, and a discharge volumetric capacity of a five hundredth cycle of the battery is V500, the following condition can be satisfied: 0.50 ≤ V500/V5 ≤ 1.10. Therefore, by comparing the difference between the capacities of the

fifth cycle and the numbers of long-term cycles of the battery, it is favorable for estimating the life of the battery. Furthermore, the following condition can be satisfied: 0.55 ≤ V500/V5 ≤ 1.05. Furthermore, the following condition can be satisfied: 0.60 ≤ V500/V5 ≤ 1.00. Furthermore, the following condition can be satisfied: 0.65 ≤ V500/V5 ≤ 0.95.

According to the battery of the present disclosure, when a total number of Coulombic efficiency greater than 90% and smaller than 110% in first twenty cycles of the battery is n90E20, the following condition can be satisfied: 15 ≤ n90E20 ≤ 20. Therefore, by the arrangement that the Coulombic efficiencies in the numbers of early cycles all meet a high standard, it is favorable for reducing the influence of the loss of lithium on the capacity maintenance ratio. Furthermore, the following condition can be satisfied: 16 ≤ n90E20 ≤ 20. Furthermore, the following condition can be satisfied: 17 ≤ n90E20 ≤ 20. Furthermore, the following condition can be satisfied: 18 ≤ n90E20 ≤ 20. Furthermore, the following condition can be satisfied: 19 ≤ n90E20 ≤ 20.

According to the battery of the present disclosure, when a discharge volumetric capacity of a fifth cycle of the battery with a current of 1.0 C for charging and discharging at a constant temperature of 25°C is V5T25, and a discharge volumetric capacity of the fifth cycle of the battery with the current of 1.0 C for charging and discharging at a constant temperature of 60°C is V5T60, the following condition can be satisfied: 0.80 ≤ V5T60/V5T25 ≤ 1.50. Therefore, by comparing the difference of the capacities in the numbers of short-term cycles between the high-temperature environment and the room temperature, it is favorable for estimating the feasibility of the polymer served as an electrolyte in the high-temperature environment. Furthermore, the following condition can be satisfied: 0.85 ≤ V5T60/V5T25 ≤ 1.45. Furthermore, the following condition can be satisfied: 0.90 ≤ V5T60/V5T25 ≤ 1.40. Furthermore, the following condition can be satisfied: 1.00 ≤ V5T60/V5T25 ≤ 1.35. Furthermore, the following condition can be satisfied: 1.05 ≤ V5T60/V5T25 ≤ 1.32. Furthermore, the following condition can be satisfied: 1.10 ≤ V5T60/V5T25 ≤ 1.30.

According to the battery of the present disclosure, when a discharge volumetric capacity of a fifteenth cycle of the battery with the current of 1.0 C for charging and discharging at the constant temperature of 25°C is V15T25, and a discharge volumetric capacity of the fifteenth cycle of the battery with the current of 1.0 C for charging and discharging at the constant temperature of 60°C is V15T60, the following condition can be satisfied: 0.80 ≤ V15T60/V15T25 ≤ 1.50. Therefore, by comparing the difference of the capacities in the numbers of medium-term cycles between the high-temperature environment and the room temperature, it is favorable for estimating the durability of the battery in the high-temperature environment. Furthermore, the following condition can be satisfied: 0.85 ≤ V15T60/V15T25 ≤ 1.48. Furthermore, the following condition can be satisfied: 0.90 ≤ V15T60/V15T25 ≤ 1.45. Furthermore, the following condition can be satisfied: 0.95 ≤ V15T60/V15T25 ≤ 1.40. Furthermore, the following condition can be satisfied: 1.00 ≤ V15T60/V15T25 ≤ 1.38. Furthermore, the following condition can be satisfied: 1.05 ≤ V15T60/V15T25 ≤ 1.35.

According to the battery of the present disclosure, when a discharge volumetric capacity of a hundredth cycle of the battery with the current of 1.0 C for charging and discharging at the constant temperature of 25°C is V100T25, and a discharge volumetric capacity of the hundredth cycle of the battery with the current of 1.0 C for charging and discharging at the constant temperature of 60°C is V100T60, the following condition can be satisfied: 0.80 ≤ V100T60/V100T25 ≤ 2.00. Therefore, by comparing the difference of the capacities in the numbers of long-term cycles between the high-temperature environment and the room temperature, it is favorable for measuring important indicators of the stability of the battery in the high-temperature environment. Furthermore, the following condition can be satisfied: 1.00 ≤ V100T60/V100T25 ≤ 1.95. Furthermore, the following condition can be satisfied: 1.20 ≤ V100T60/V100T25 ≤ 1.90. Furthermore, the following condition can be satisfied: 1.40 ≤ V100T60/V100T25 ≤ 1.85. Furthermore, the following condition can be satisfied: 1.50 ≤ V100T60/V100T25 ≤ 1.80. Furthermore, the following condition can be satisfied: 1.65 ≤ V100T60/V1 00T25 ≤ 1.75.

According to the battery of the present disclosure, a discharge volumetric energy density of a fifth cycle of the battery is vE5, and a discharge gravimetric energy density of the fifth cycle of the battery is gE5, the following conditions can be satisfied: 500 WhIL ≤ vE5 ≤ 900 Wh/L; and 180 Wh/kg ≤ gE5 ≤ 450 Wh/kg. Therefore, by assessing the volumetric energy density and the gravimetric energy density of the battery, it is favorable for estimating the feasibility of polymer served as electrolyte and enhancing the competitiveness thereof. Furthermore, the following condition can be satisfied: 550 WhIL ≤ vE5 ≤ 850 Wh/L; and 200 Wh/kg ≤ gE5 ≤ 400 Wh/kg. Furthermore, the following condition can be satisfied: 600 Wh/L ≤ vE5 ≤ 800 Wh/L; and 250 Wh/kg ≤ gE5 ≤ 350 Wh/kg.

Each of the aforementioned features of the battery of the present disclosure can be utilized in numerous combinations, so as to achieve the corresponding functionality.

The polymer of the present disclosure can include polyester, and the polyester can include a polycarbonate ester and an end-capped polycarbonate ester. The polycarbonate ester and the end-capped polycarbonate ester are polymerized by at least two monomers, and the at least two monomers can include at least one carbonate ester and at least one polyol. Based on the reversibility of the esterification reaction, the transesterification reaction between the carbonate ester and the polyol can be conducted with a catalyst. The end-capped polycarbonate ester can be obtained by modifying the polycarbonate ester, and the hydroxyl group located at the end or at the side group of the structure of the polycarbonate ester is replaced by the inert group. Thus, it is favorable for inhibiting the chemical reaction between the electrolyte and the lithium metal, and the formation of the metal lithium dendrites can be prevented. Further, the

added molar ratio of the carbonate ester and the polyolcan can be adjusted based on the design, and the molecular weight of the polyester can be affected by adjusting the concentration of the carbonate ester. For example, when a total added molar ratio of the carbonate ester is a, and a total added molar ratio of the polyol is b, a and b can be any integer from 0 to 20, namely 0, 1, 2, 3, 4, 5, 6, 7, 8, 9, 10, 11, 12, 13, 14, 15, 16, 17, 18, 19 and 20.

The polyol of the present disclosure is an alcohol including a plurality of hydroxyl groups, wherein the carbon number of the polyol is at least larger than or equal to 1, wherein the plurality of hydroxyl groups can be the substituents at any position. According to the IUPAC nomenclature, the longest carbon chain including the main functional group is the main chain, and the carbon atom closest to the functional group is labelled as Carbon 1, and a number is used to represent the position of one substituent on which of the carbon. The position number of each of the substituents can be 1, 2, 3, 4, 5, 6, 7, 8, 9, 10, 11, 12, 13, 14, 15, 16, 17, 18, 19, 20, or other numbers based on the length of the carbon chain, and the polyol can have any stereochemical structure, such as atropisomers, *cis-trans* isomers, conformational isomers, diastereomers or enantiomers. The polyol can include methanediol, ethane-1,2-diol, propane-1,3-diol, butane-1,4-diol, pentane-1,5-diol, hexane-1,6-diol, heptane-1,7-diol, octane-1,8-diol, nonane-1,9-diol, decane-1,10-diol, undecane-1,11-diol, dodecane-1,12-diol, tridecane-1,13-diol, tetradecane-1,14-diol, pentadecane-1,15-diol, hexadecane-1, 16-diol, heptadecane-1,17-diol, octadecane-1,18-diol, nonadecane-1,19-diol, elcosane-1,20-diol, 3-methylpentane-1,5-diol, 2,2-Dimethylpropane-1,3-diol, propane-1,2,3-triol (glycerol), 2-(hydroxymethyl)-2-methylpropane-1,3-diol, 2-ethyl-2-(hydroxymethyl)propane-1,3-diol, 2,2-bis(hydroxymethyl)propane-1,3-diol, [4-(hydroxymethyl)cyclohexyl]methanol, 2,2-bis(4-hydroxycyclohexyl)propane, D-ribitol, meso-xylitol, (2S,3R,4R,5R)-hexane-1,2,3,4,5,6-hexol, (1R,2S,3r,4R,5S,6s)-cyclohexane-1,2,3,4,5,6-hexol, 2-[3-(1-hydroxy-2-methylpropan-2-yl)-2,4,8,10-tetraoxaspiro[5.5]undecan-9-yl]-2 -methylpropan-1-ol, or a combination thereof.

The carbonate ester of the present disclosure can be a compound in which some or all of the hydrogens of the hydroxyl group in the carbonic acid are substituted by an alkyl group, and the carbonate ester can be divided to cyclic carbonate esters and linear carbonate esters. The linear carbonate ester can include dimethyl carbonate (DMC), diethyl carbonate (DE), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoroethylenecarbonate (difluoroethylene carbonate; DFEC), 1,3-Dithiole-2-thione (vinylene trithiocarbonate), or a combination thereof.

The inert group of the present disclosure can be a low reactive group including an alkyl group ($CH_3$-), an ether group (-O-), a thioether group (-S-O-), a ketone group (-CO-), an ester group (-COO-), an alkanoyl group (-CO), a hydroperoxy group (-OO-), a phenyl group (-Ph), etc. Further, the phenyl group can be the unit such as the phenylalkyl group, the phenylether group, the phenylketo group, the phenylacyl group, the phenylester group, the phenylperoxy group, or the low reactive group including a polycyclic aromatic group. Furthermore, the non-inert groups of the present disclosure are functional groups with higher activity, such as a hydroxy group (-OH), an amine group (-$NH_2$), a carboxyl group (-COOH), etc.

The electrolyte of the present disclosure can include a polymer, an organic solvent, an additive and a metal salt. The composition ratio of organic solvent is greater than the composition ratio of the additive, and the state of the electrolyte can be liquid, colloidal or solid. The organic solvent and the additive of the electrolyte can be mixed physically or can be polymerized by at least one of the organic solvent and the additive.

The organic solvent of the present disclosure can belong to the carbonate ester organic solvent, the carboxylate organic solvent, the ether organic solvent, the organic solvent including sulfide, or a combination thereof, wherein the organic solvent also can be used as the additive.

The carbonate ester organic solvent of the present disclosure can be a compound in which some or all of the hydrogens of the hydroxyl group in the carbonic acid are substituted by an alkyl group, and the carbonate ester organic solvent can be divided to linear carbonate esters and cyclic carbonate esters. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), methyl 2,2,2-trifluoroethyl carbonate (FEMC). The cyclic carbonate ester can include 1,3-dioxolan-2-one (Ethylene carbonate; EC), 4-methyl-1,3-dioxolan-2-one (propylene carbonate; PC), 1,3-Dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

The carboxylate organic solvent of the present disclosure can be manufactured by the esterification reaction of alcohols and carboxyl acids, and the carboxylate organic solvent can be methyl acetate, ethyl acetate, propyl acetate,

methyl propionate, ethyl propionate, propyl propionate, methyl butyrate, ethyl butyrate, lactone, or a combination thereof. The lactone can further include the structure of 1-oxacycloalkan-2-one, wherein the lactone is obtained from a compound including a hydroxyl group and a carboxylic acid, and the compound is condensed within the molecule so as to form a cyclic carboxylate monomer. According to the position of the hydroxyl group forming the ring and the number of carbon atoms in the ring, there can be many combinations, such as oxiran-2-one (α-acetolactone), oxetan-2-one (β-propiolactone), oxolan-2-one (γ-butyrolactone), 5-methyloxolan-2-one (γ-valerolactone), oxan-2-on (a-valerolactone), 5-ethyloxolan-2-one (γ-caprolactone), oxepan-2-one (ε-caprolactone), D-glucono-1,5-lactone (δ-gluconolactone), or a combination thereof.

The ether organic solvent of the present disclosure can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG), or a combination thereof.

The sulfide organic solvent of the present disclosure can be divided into compounds with sulfone group (-(O=)S(=O)-) or compounds with sulfonate group ($-SO_2O^-$). The compounds with sulfone group can include 2,5-dihydrothiophene-1,1-dioxide and 1-ethenylsulfonylethene. The compounds with sulfonate group can be further divided into mesylate ($CH_3SO_2O^-$), trifluoromethanesulfonate ($CF_3SO_2O^-$), p-toluenesulfonyl group (Tosyl), 1-methylsulfonyloxyethane, methyl 4-methylbenzenesulfonate, oxathiolane 2,2-dione, prop-1-ene-1,3-sultone, 1,3,2-dioxathiane 2,2-dioxide, or a combination thereof.

The additive of the present disclosure can be carbonate ester compounds, lactone cyclic esters, cyclic compounds including ether groups, aromatic compounds, compounds including phosphorus, compounds including boron, inorganic oxides, or a combination thereof. With a proper adding amount of the additive, it is favorable for enhancing the efficacy of the battery. For example, enhancing the composition of the SEI membrane, increasing the efficacy under high temperature and high voltage, enhancing the transmission ability of the ions, reducing the impedance of the electrolyte, increasing the stability of cycles, the integrity of the materials of the anode and the cathode, enhancing the electrochemical stability, etc.

The carbonate ester compound of the present disclosure can be a compound in which some or all of the hydrogens of the hydroxyl group in the carbonic acid are substituted by an alkyl group, and the carbonate ester compound can be divided to cyclic carbonate esters and linear carbonate esters. The linear carbonate esters can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), methyl 2,2,2-trifluoroethyl carbonate (FEMC). The cyclic carbonate esters can include 1,3-dioxolan-2-one (Ethylene carbonate; EC), 4-methyl-1,3-dioxolan-2-one (propylene carbonate; PC), 1,3-Dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

The lactone cyclic ester of the present disclosure can be a polycyclic diester monomer obtained by the esterification condensation of two identical or two different compounds including the hydroxy acid, and the lactone cyclic ester can include 1,4-dioxane-2,5-dione (glycolide), 3,6-dimethyl-1,4-dioxane-2,5-dione (lactide), or a combination thereof. Further, according to the stereoisomers formed based on differences in the spatial arrangement of atoms, the lactide can be further divided to (R,R)-3,6-dimethyl-1,4-dioxane-2,5-dione (LL-lactide), (S,S)-3,6-dimethyl-1,4-dioxane-2,5-dione (DD-lactide), and (meso)-3,6-dimethyl-1,4-dioxane-2,5-dione (DL-lactide). Further, the lactide also can be formed by the carboxylic acid compounds including hydroxyl groups, wherein the carboxylic acid compounds can be directly copolymerized to form polymers without ring-opening reaction, and the lactide can include 2-hydroxyacetic acid (glycolic acid), 3-hydroxypropanoic acid (lactic acid), 4-hydroxybutanoic acid, 5-hydroxyvaleric acid, or a combination thereof.

The cyclic compound including ether groups of the present disclosure can be the crown ether, wherein the crown ether is a molecule using the ethyleneoxy group ($-CH_2CH_2O-$) as the main repeating unit and can include 1,4,7-trioxonane (9-Crown-3), 1,4,7,10-tetraoxacyclododecane (12-Crown-4), 1,4,7,10,13-pentaoxacyclopentadecane (15-Crown-5), 1,4,7,10,13,16-hexaoxacyclooctadecane (18-Crown-6), 1,4,7,10,13,16,19-heptaoxacycloheneicosane (21-Crown-7), 6,7,9,10, 17,18,20,21-octahydrodibenzo[b,k][1 ,4,7,1 0,13, 16]hexaoxacyclooctade cine (Dibenzo-18-crown-6), 1,4,10,13-tetraoxa-7,16-diazacyclooctadecane (Diaza-18-crown-6), or a combination thereof.

The aromatic compound of the present disclosure can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline, or a combination thereof.

The compound including phosphorus of the present disclosure can be tris(trimethylsilyl) phosphite (TMSPi), tris(2,2,2-trifluoroethyl) phosphite, triphenyl phosphite, 1,3,5,2,4,6-triazatriphosphorine, 2-ethoxy-2,4,4,6,6-pentafluoro-2,2,4,4,6,6-hexahydro-, or a combination thereof.

The compound including boron of the present disclosure can be trimethyl borate, tris(trimethylsilyl) borate,

2,4,6-trimethyl-1,3,5,2,4,6-trioxatriborinane, or a combination thereof.

The inorganic oxides of the present disclosure can be lithium lanthanum zirconium oxides (LiLaZrO), lithium lanthanum zirconium tantalum oxides (LiLaZrTaO), lithium lanthanum titanium oxides (LiLaTiO), LiPO, LiPOF, LiTiPO, LiAIGeP, lithium aluminum phosphate titanium oxides (LiAlTiPO), lithium germanium phosphorus sulfide oxides (LiGePSO), lithium tin phosphorus sulfide oxides (LiSnPSO), lead zirconium titanium oxides (PbZrTiO), lead lanthanum zirconium titanium oxides (PbLaZrTiO), barium titanium oxides (BaTiO), or other composite materials. The aforementioned additive of the inorganic oxides can be presented by many different oxidation states, or can be $Al_2O_3$, $TiO_2$, $SiO_2$, $SnO_2$, NiO, ZnO, CaO, MgO, $ZrO_2$, $CeO_2$, $Y_2O_3$, etc., so that it is favorable for reducing the degree of crystallinity of the electrolyte with high molecular weight so as to increase the electrical conductivity of ions and the physical and mechanical properties of the electrolyte. Thus, the cycle life of the battery can be enhanced.

The metal salt of the present disclosure can include the inorganic lithium salts, such as $LiPF_6$, $LiBF_4$, $LiSbF_6$, $LiAsF_6$, $UClO_4$, $LiC_4BO_8$, LiTFSI, LiFSI, $LiNO_3$, $LiGaCl_4$; the lithium sulfonate salt including fluorine, such as $LiCF_3SO_3$, $LiN(C_2F_5SO_2)_2$, $LiN(CF_3SO_2)_2$, $LiC(CF_3SO_2)_3$, $LiBF_2(C_2O_4)$ (LiDFOB), $LiB(C_2O_4)_2$ (LiBOB), or a combination thereof Further, the aforementioned metal salts can be presented by many different oxidation states.

The materials of the battery of the present disclosure battery can include an electrolyte, an anode piece, a cathode piece and a separator, wherein the anode piece can include an anode material, an adhesive, a conductive agent and a current collector, and the cathode piece can include cathode material, an adhesive, a conductive agent and a current collector. The anode piece or the cathode piece can be manufactured by the methods of coating on single layer or double layers, vacuum coating or composite structures.

The anode material of the present disclosure can include lithium or a lithium composite metal oxide with at least one metal, such as $LiFePO_4$, lithium manganese oxides ($LiMnO_2$, $LiMn_2O_4$), lithium cobalt oxides ($LiCoO_2$), lithium nickel oxides ($LiNiO_2$), lithium nickel cobalt oxides ($LiNiCoO_2$), lithium nickel manganese oxides ($LiNiMnO_4$), lithium manganese cobalt oxides ($LiCoMnO_2$, $LiCoMnO_4$), lithium nickel manganese cobalt oxides ($LiNiCoMnO_2$, $LiNiCoMnO_4$), or a combination thereof. Further, the aforementioned lithium composite metal oxide can be presented by many different oxidation states.

The cathode material of the present disclosure can be a niobium-titanium oxide, a silicon active material, a carbon active material, compounds including lithium metal, oxides including lithium metal ($Li_4Ti_5O_{12}$), lithium metal, or a combination thereof.

The niobium-titanium oxide of the present disclosure can include a non-doped niobium-titanium oxide and a doped niobium-titanium oxide. The non-doped niobium-titanium oxide includes a plurality of compounds, such as $TiNb_2O_7$, $Ti_2Nb_{10}O_{29}$, $TiNb_{14}O_{37}$ and $TiNb_{24}O_{62}$. The doped niobium-titanium oxide can be at least one compound selected from the aforementioned non-doped niobium-titanium oxides which is doped with at least one type of element, and the element can be selected from at least one of Li, B, F, Na, Mg, Al, Si, P, S, Cl, Ca, V, Cr, Mn, Fe, Co, Ni, Cu, Zn, Ga, As, Br, Zr, Mo, Sb, I, Ta, W or Bi. Further, at least one of inactive compositions can be selected to cover the surface or fill the pores of the niobium-titanium oxide.

The silicon active material of the present disclosure can be silicon, silicon oxide, silicon carbon composite, silicon alloy or any one of the aforementioned silicon active materials with the addition of at least one of inactive compositions. The inactive composition and the silicon active material can be prepared into a mixture. Alternatively, the inactive composition and the silicon active material can form chemical bonds. Alternatively, the inactive composition and the silicon active material can form a shell-core structure. Alternatively, the inactive composition can form a layered structure.

The inactive composition of the present disclosure can include a polymer, a carbon material, a metal, an alloy, a non-metal oxide, a metal oxide, a fluoride, an organic compound, an adhesive, a conductive agent and an additive.

The adhesive of the present disclosure can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly (1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethlene rubber (CSM), or alginic acid made of mono alduronic acid by linear polymerization.

The conductive agent of the present disclosure can be graphite, conductive graphite ($KS_6$, $SFG_6$), graphene, acetylene black, ketjenblack, carbon black (Super P), carbon nanotube (CNT), carbon microbeads, carbon fibers, hard carbon, soft carbon, aluminium, nickel, titanium dioxide, potassium hexatitanate (PHT), or a combination thereof.

The current collector of the present disclosure can be a metal foil including copper, aluminum, nickel, stainless steel, or alloys composed of the aforementioned metals.

The separator of the present disclosure can be a thin film with porous structure, and the separator can include a single layer or multiple layers of fibers of polyolefins, polyamides, polyesters, such as polyethylene (PE), polypropylene (PP), polyethylene terephthalate (PET), acrylonitrile butadiene styrene copolymer (ABS), epoxy resin, etc. The surface thereof can include an inorganic ceramic composite film of at least one of $Mg(OH)_2$, MgO, $BaSO_4$, $SnO_2$, NiO, CaO, $Al_2O_3$, ZnO, $SiO_2$, $TiO_2$, or a combination thereof. Further, the aforementioned inorganic ceramic composite film can be

presented by many different oxidation states.

The battery assembly of the present disclosure can include a battery case, a spring, a spacer, a lid, a tab, or a cap.

The application of battery of the present disclosure can be a primary cell or a secondary cell. The electrochemical carrier of the primary cell or the secondary cell can be at least one of a button carrier, a roll-up carrier or a laminated carrier. It can be applied to the portable electronic products, such as digital cameras, mobile phones, notebook computers, game console handles and other devices which need to be light and thin, or applied to the power storage industries with large-scale, such as light electric vehicles and electric vehicles.

The straight chain in the present disclosure refers that the monomer are mainly polymerized along one direction to form a long linear polymer.

All the arrangements of the polymer of the present disclosure can be made into electrode pieces according to the related ratios and underwent a charging and discharging test of the battery. The present disclosure only shows some of the manufacturing ratios of the relevant arrangements and the corresponding results of the charging and discharging test of the battery, and that which is without the data or cannot be calculated are marked with "-" in the tables.

In the battery of the present disclosure, the cycles of the battery are defined as that the battery is in a condition of a commercial product, and the first test under the aforementioned condition is taken as the first cycle of the present disclosure. One complete discharging and charging test is taken as one cycle, and the number of the cycles is accordingly accumulated.

The electrical capacity of the battery of the present disclosure can be obtained by measuring the charging capacity of the battery and the discharging capacity of the battery. The calculating method for the electrical capacity can be defined as the volumetric capacity ($mAh/cm^3$) and the gravimetric capacity (mAh/g). The volumetric capacity means the electrical capacity provided by the electrode piece per cubic centimeter in a battery, and the volume of the current collector should be deducted as calculating the volumetric capacity. The gravimetric capacity means the electrical capacity provided by the electrode piece per gram in a battery, and the weight of the current collector should be deducted as calculating the gravimetric capacity. The electrode piece can be the cathode piece or the anode piece, and the current collector is a substrate made of a metal foil (such as aluminum foil or copper foil).

The C-rate (C) of the present disclosure can refer to the current of the battery being fully discharged for one hour, and C can be the unit of the charging and discharging current of the battery.

The voltage range to measure the battery of the present disclosure battery can be selected based on the redox potential of the anode material and the cathode material to obtain a relatively proper voltage range, and the voltage range can be selected to be 0 V - 5.0 V.

The volumetric energy density of the present disclosure can be calculated according to the following equation: Volumetric energy density (Wh/L) = Discharge capacity (Ah) × Nominal voltage (V) / Total volume of battery (L).

The gravimetric energy density of the present disclosure can be calculated according to the following equation: Gravimetric energy density (Wh/kg) = Discharge capacity (Ah) ×Nominal voltage (V) / Total weight of battery (kg).

The glass transition temperature (Tg), the crystallization temperature (Tc) and the melting point (Tm) of the present disclosure can be measured by the differential scanning calorimetry (DSC), which analyzes the amount of heat released or absorbed by a sample when it is heated or cooled within a temperature range, and the temperature range is -90°C to 90°C. Then, the curve of the sample releasing or absorbing the heat as the change of the temperature (DSC curve) can be obtained, and the temperature including Tg, Tc and Tm at which the sample underwent a specific phase transition can be measured. The exothermic situation is defined as a positive value, and the endothermic situation is defined as a negative value. In a temperature range where Tg occurs, the temperature can be differentiated once based on the DSC curve so as to obtain the absorbed heat change rate curve, and the temperature corresponding to the minimum of the measured values of the peak is regarded as Tg. An endothermic peak of the DSC curve can be measured, and the temperature corresponding to the minimum of the endothermic peak is regarded as Tm. An exothermic peak of the DSC curve can be measured, and the temperature corresponding to the maximum of the exothermic peak is regarded as Tc. While assessing whether the sample has Tc or Tm, the temperature range can be set from -60°C to 60°C, and a linear trend line of the DSC curve in the temperature range can be obtained. When the values of the coefficient of determination (R-squared) of the linear trend line and the DSC curve are larger than 0.90, the sample is assessed to be without Tc or Tm. If the example shows that the glass transition, the crystallization or the melting point exist within the temperature range, it is marked as "Y", and if the example shows that the glass transition, the crystallization or the melting point does not exist within the temperature range, it is marked as "N".

The pyrolysis temperature of the present disclosure can be measured by the thermogravimetry analysis (TGA). In the thermogravimetry analysis, the sample is under temperature control, and the changing process in the weight of the sample along with the temperature or the time is measured. Thus, the relevant information such as weight loss ratio, weight loss temperature, and decomposition residue amount can be obtained, and the temperature corresponding to the weight loss rate of the sample reaching 10% is used as the pyrolysis temperature.

In the diameter of particles of the present disclosure, the diameter of particles and the diameter distribution thereof can be obtained by measuring the amplitude corresponding to the time of the scattering light from the particles

undergoing Brownian motion by dynamic light scattering. The diameter of particles can be calculated by the Stokes-Einstein equation, which is shown as follows: $D = kT/(3\pi\eta Df)$, wherein D is the diameter of the particles (the unit is m), k is Boltzmann constant (the unit is JIK), T is the absolute temperature (the unit is K), $\eta$ is the viscosity of the solvent (the unit is $kg\times m^{-1}\times s^{-1}$), and Df is the diffusion coefficient (the unit is $m^2\times s^{-1}$).

The viscosity of the present disclosure is a ratio of a shear stress to a fluid velocity gradient along a direction perpendicular to an action surface when the testing sample is subjected to the shear stress at the room temperature of 25°C, and the unit thereof is cP ($10^{-2}\times g\times cm^{-1}\times s^{-1}$). If the viscosity of the testing sample is larger than 12000 cP, it is regarded as a solid.

The diameter distribution of the present disclosure is the distribution of diameter of the particles with different sizes in the samples. According to a ratio of the distribution of each of the diameters and the accumulated percentage based on the volume, the function of cumulative particle size distribution can be obtained. For example, when the cumulative particle size distribution percentage reaches 50%, the particle size is defined as D50, and it can represent that there is 50% of the particles in the sample to be tested with a diameter less than the diameter of D50. D10 and D90 have the similar definitions. D50 is a standard for estimating the particle diameter if there is no special indication.

The molecular weight of the present disclosure is measured by the gel permeation chromatography (GPC), which can be used to measure the molecular weight of the polymer with high molecular weight and the distribution thereof. The GPC is analyzed based on that the macromolecules will be separated due to different sizes through the stationary phase, wherein the molecules with larger molecular weights have shorter residence times, and conversely, the molecules with smaller molecular weights have longer residence times. The polymer will be compared with the molecular weight and the calibration curve of the residence time (or the effluent volume) of the standard so as to obtain the relative molecular weight of the polymer. Thus, the weight-average molecular weight and the number-average molecular weight of the polymer can be obtained, and the molecular weight dispersion of the polymer can be understood. The number-average molecular weight is an average molecular weight based on the number of molecules and can be calculated by that the total weight of all molecules of polymer with high molecular weight is divided by the total mole number of the molecules. The weight-average molecular weight is an average molecular weight based on the weight and can be calculated by that the molecular weight of each polymer of the polymer with high molecular weight is multiplied by the proportion thereof of the total weight. The ratio of the weight-average molecular weight and the number-average molecular weight can represent the degree of dispersion of the molecular weight of the polymer with high molecular weight, wherein when the ratio is closer to 1, the molecular weight distribution is more uniform, and when the ratio value is larger, the molecular weight distribution is more dispersed.

The weight-average molecular weight of the present disclosure is described from a statistical point of view and can be divided to the overall molecular weight and the individual molecular weight. The overall molecular weight is calculated based on the relationship data between the residence time (or the effluent volume) and the relative concentration, wherein the range to be measured is considered as an overall peak, and the value of the overall peak is calculated by the weighted average. Then, the value of the overall peak will be compared with the calibration curve of the standard so as to obtain the overall molecular weight of the polymer. The individual molecular weight is calculated based on the relationship data between the residence time (or the effluent volume) and the relative concentration, wherein each of the individual peaks in the range to be measured can be clearly distinguished. The distinguishing standard thereof is to obtain the maximum relative concentration within the range to be measured first, and then the peaks with the relative concentrations thereof at least greater than or equal to 5% of the maximum relative concentration are named as, according to the residence times thereof from short to long, Peak 1, Peak 2, Peak 3, Peak 4, Peak 5, Peak 6, Peak 7, Peak 8, Peak 9, Peak 10, and so on. Next, the peaks will be respectively compared with the calibration curve of the standard so as to obtain the individual molecular weight of the polymer. Further, the cut-off standard of the range to be measured is selected based on 2% of the maximum relative concentration, and if the overlapping ratio of the individual peaks is too large to be distinguished, only the overall molecular weight is calculated.

The manufacturing process of the polymer can be the reprocessing process of water removal purification, extraction, high-temperature heating in the atmosphere, high-temperature distillation, high-temperature vacuum drying, low-temperature vacuum drying, etc., so that the polymerization efficiency of monomers can be enhanced, the solubility of the lithium salt can be increased, or the electrical conductivity thereof can be increased.

The flash point of the present disclosure can represent the lowest temperature at which a gas volatilized by a substance at one atmospheric pressure is ignited while contacting with an ignition source. The measurement of the flash point can be divided to the open cup method and the closed cup method. The open cup method can be Cleveland open-cup method, and the instrument used can be exemplified by ASTM D92. The closed cup method can be Pensky Martens closed cup method, Tag closed cup method and Small scale closed cup method, and the instruments used can be exemplified by ASTM D56, ASTM D93 and ASTM D7094. When a flash point of the polymer is polyester is Fpp (°C), the following condition can be satisfied: 100°C < Fpp< 800°C. Furthermore, the following condition can be satisfied: 120°C < Fpp < 700°C. Furthermore, the following condition can be satisfied: 150°C < Fpp < 600°C. Furthermore, the following condition can be satisfied: 170°C < Fpp < 500°C. Furthermore, the following condition can be satisfied: 200°C

< Fpp < 450°C. Furthermore, the following condition can be satisfied: 220°C < Fpp < 400°C. Furthermore, the following condition can be satisfied: 250°C < Fpp < 350°C. When a flash point of the electrolyte is Fpe (°C), the following condition can be satisfied: 100°C < Fpe< 800°C. Furthermore, the following condition can be satisfied: 120°C < Fpe < 700°C. Furthermore, the following condition can be satisfied: 150°C < Fpe < 600°C. Furthermore, the following condition can be satisfied: 170°C < Fpe < 500°C. Furthermore, the following condition can be satisfied: 200°C < Fpe < 450°C. Furthermore, the following condition can be satisfied: 220°C < Fpe < 400°C. Furthermore, the following condition can be satisfied: 250°C < Fpe < 350°C. A higher flash point means that it is with the ability to withstand high temperatures, so that it is favorable for enhancing the safety and the cycle life of the battery, and the internal short circuit of the battery caused by overheating or other safety concerns can be avoided. In the material of the commercially available liquid electrolyte, such as the propylene carbonate has a flash point of 138°C measured using the instrument ASTM D93 and 132°C measured using the instrument ASTM D7094.

The electrical conductivity of the present disclosure is measured by the electrochemical impedance spectroscopy (EIS), wherein the alternating current with 1 Hz to 1000 kHz and the amplitude of 50 mV is applied to the polymer or the electrolyte so as to measure the resistor value. Then, the electrical conductivity is calculated by the following equation: Ci = (1/R)×(L/A), wherein Ci ($S \cdot cm^{-1}$) is the electrical conductivity, R (Ω) is the resistor value, L (cm) is the distance between two electrodes, A ($cm^2$) is the cross-sectional area of the object to be measured and the electrode, and L/A can represent the electrical conductivity coefficient ($cm^{-1}$).

The electrochemical stability of the present disclosure is measured by the linear sweep voltammetry (LSV), wherein the measurement is cyclically performed at a scan rate of 0.1 Vls under the condition of $Li/Li^+$ relative voltage between -5 V and 5 V, and the results of the corresponding changes in the relationship between current and potential can be obtained.

According to the above descriptions, the specific embodiments are given below so as to describe the present disclosure in detail.

<Comparative example 1>

Table 1 shows the type of monomer, the pyrolysis temperature and the flash point of Comparative example 1, wherein the flash point is measured by the instruments ASTM D93 and ASTM D7094.

Table 1

| Type of monomer | Propylene carbonate | |
|---|---|---|
| Pyrolysis temperature (°C) | 130 | |
| Flash point (°C) | ASTM D93 | 138 |
| | ASTM D7094 | 132 |

The instrument for measuring the flash points of the following comparative examples and examples is ASTM D93 and ASTM D7094, so that the details thereof will not be described again.

<Comparative example 2>

The polymer of Comparative example 2 is polyethylene glycol dimethyl ether 500 (PEGDME 500). Table 2A shows the property of the polymer of Comparative example 2.

Table 2A

| Number-average molecular weight (Dalton) | | 469 |
|---|---|---|
| Viscosity (cP) | | 23.6 |
| Within the temperature range from -80°C to 80°C | Whether glass transition occurs | - |
| | Is there a melting point | Y |
| | Is there any crystallization | N |
| Melting point (°C) | | 8 |
| Pyrolysis temperature (°C) | | 239 |

(continued)

| Table 2A | | |
|---|---|---|
| Density (g/cm) | | - |
| Flash point (°C) | ASTM D93 | - |
| | ASTM D7094 | - |

Table 2B shows the properties of an electrolyte including the polymer of Comparative example 2 and the properties of a battery including the electrolyte, wherein Vi is a discharge volumetric capacity of the battery of the ith cycle.

| Table 2B | | | |
|---|---|---|---|
| Electrolyte | | | |
| Lithium salt | - | | |
| Concentration of lithium salt (M) | - | | |
| Electrical conductivity ($S\cdot cm^{-1}$) | - | | |
| Flash point (°C) | | | |
| Battery | | | |
| Temperature (°C) | 60 | | |
| C-rate (C) | 1.0 | | |
| Discharge volumetric capacity ($mAh/cm^3$) | V1 | Discharging | 67.9 |
| | | Charging | 68.1 |

(continued)

| Battery | | | |
|---|---|---|---|
| | V2 | Discharging | 68.0 |
| | | Charging | 68.2 |
| | V3 | Discharging | 68.0 |
| | | Charging | 68.1 |
| | V4 | Discharging | 68.3 |
| | | Charging | 68.5 |
| | V5 | Discharging | 68.5 |
| | | Charging | 68.6 |
| | V6 | Discharging | 68.6 |
| | | Charging | 68.7 |
| | V7 | Discharging | 68.7 |
| | | Charging | 68.8 |
| | V8 | Discharging | 68.8 |
| | | Charging | 68.9 |
| | V9 | Discharging | 68.9 |
| | | Charging | 69.0 |
| | V10 | Discharging | 69.0 |
| | | Charging | 69.1 |
| | V11 | Discharging | 69.1 |
| | | Charging | 69.2 |
| | V12 | Discharging | 69.1 |
| | | Charging | 69.3 |
| | V13 | Discharging | 69.2 |
| | | Charging | 69.3 |
| | V14 | Discharging | 69.3 |
| | | Charging | 69.4 |
| | V15 | Discharging | 69.4 |
| | | Charging | 69.5 |
| | V16 | Discharging | 69.4 |
| | | Charging | 69.5 |
| | V17 | Discharging | 69.5 |
| | | Charging | 69.6 |
| | V18 | Discharging | 69.5 |
| | | Charging | 69.6 |
| | V19 | Discharging | 69.6 |
| | | Charging | 69.7 |
| | V20 | Discharging | 69.6 |
| | | Charging | 69.7 |
| | V50 | Discharging | 70.8 |
| | | Charging | 70.9 |
| | V100 | Discharging | 71.3 |
| | | Charging | 71.5 |
| | V200 | Discharging | 65.8 |
| | | Charging | 71.3 |
| | V230 | Discharging | 50.5 |
| | | Charging | 82.8 |
| | V250 | Discharging | 31.4 |

(continued)

| Battery | | | |
|---|---|---|---|
| | | Charging | 82.8 |
| | V280 | Discharging | × |
| | | Charging | × |
| | V300 | Discharging | × |
| | | Charging | × |
| | V350 | Discharging | × |
| | | Charging | × |
| | V400 | Discharging | × |
| | | Charging | × |
| | V450 | Discharging | × |
| | | Charging | × |
| | V500 | Discharging | × |
| | | Charging | × |

Table 2C shows the calculation results of the values in Table 2B, wherein Vmax is a maximum of discharge volumetric capacities from a first cycle of the battery to a twentieth cycle of the battery, n90E20 is a total number of Coulombic efficiency greater than 90% and smaller than 110% in first twenty cycles of the battery, V5T60 is a discharge volumetric capacity of a fifth cycle of the battery with a current of 1.0 C for charging and discharging at a constant temperature of 60°C, V5T25 is a discharge volumetric capacity of the fifth cycle of the battery with the current of 1.0 C for charging and discharging at a constant temperature of 25°C, V15T25 is a discharge volumetric capacity of a fifteenth cycle of the battery with the current of 1.0 C for charging and discharging at the constant temperature of 25°C, V15T60 is a discharge volumetric capacity of the fifteenth cycle of the battery with the current of 1.0 C for charging and discharging at the constant temperature of 60°C, V100T25 is a discharge volumetric capacity of a hundredth cycle of the battery with the current of 1.0 C for charging and discharging at the constant temperature of 25°C, V100T60 is a discharge volumetric capacity of the hundredth cycle of the battery with the current of 1.0 C for charging and discharging at the constant temperature of 60°C, vE5 is a discharge volumetric energy density of the fifth cycle of the battery, and gE5 is a discharge gravimetric energy density of the fifth cycle of the battery.

| Table 2C | | | |
|---|---|---|---|
| VMax | | 69.6 | |
| V10/V5 | 1.01 | V250/V5 | 0.46 |
| V50/V5 | 1.03 | V280/V5 | × |
| V200/V5 | 0.96 | V300/V5 | × |
| V230/V5 | 0.74 | V350/V5 | × |

(continued)

| Table 2C | | |
|---|---|---|
| Coulombic efficiency (%) | 1st | 99.6 |
| | 2nd | 99.8 |
| | 3rd | 99.9 |
| | 4th | 99.8 |
| | 5th | 99.8 |
| | 6th | 99.8 |
| | 7th | 99.8 |
| | 8th | 99.8 |
| | 9th | 99.8 |
| | 10th | 99.8 |
| | 11th | 99.9 |
| | 12th | 99.8 |
| | 13th | 99.8 |
| | 14th | 99.9 |
| | 15th | 99.9 |
| | 16th | 99.9 |
| | 17th | 99.9 |
| | 18th | 99.9 |
| | 19th | 99.9 |
| | 20th | 99.9 |
| n90E20 | | 20 |
| V5T60/V5T25 | | - |
| V15T60/V15T25 | | - |
| V1 00T60/V100T25 | | - |
| vE5 | | - |
| gE5 | | - |

If the definitions of parameters shown in the tables of the following examples are the same as those shown in Table 2A to Table 2C, those will not be described again.

<Example 1>

The polymer of Example 1 includes a polyester, the polyester includes an end-capped polycarbonate ester, and an end of the end-capped polycarbonate ester includes an inert group. The polyester of Example 1 is polymerized by at least two monomers, each of the monomers is selected from a group consisting of a carbonate ester and a polyol, and the carbonate ester can have a structure as shown in Formula (I).

Table 3A shows the properties of the polymer of Example 1, wherein Ncp is a carbon number of the polyol, Ncc1 is a carbon number of a substituent R1 of the carbonate ester, Ncc2 is a carbon number of a substituent R2 of the carbonate ester, Mn is a number-average molecular weight of the polyester, VC is a viscosity of the polyester, Tm is a melting point of the polyester, Td is a pyrolysis temperature of the polyester, Ds is a density of the polyester, Fpp is a flash point of the polymer is polyester, cMn is a number-average molecular weight of the end-capped polycarbonate ester, and cVC is a viscosity of the end-capped polycarbonate ester.

Table 3A

| | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 374 |
| | VC (cP) | | 11.3 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 138 |
| | Ds (g/cm) | | 1.12 |
| | Fpp (°C) | ASTM D93 | - |
| | | ASTM D7094 | - |
| End-capped polycarbonate ester | cMn (Dalton) | | 374 |
| | cVC (cP) | | 11.3 |

Table 3B shows the properties of an electrolyte including the polymer of Example 1, the properties of a battery including the electrolyte, and the analyzing values of the performance of the battery.

Table 3B

| | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 0.5 |

(continued)

| Battery | | | |
|---|---|---|---|
| Discharge volumetric capacity (mAh/cm$^3$) | V1 | Discharging | 65.5 |
| | | Charging | 71.9 |
| | V2 | Discharging | 66.4 |
| | | Charging | 65.2 |
| | V3 | Discharging | 65.6 |
| | | Charging | 66.5 |
| | V4 | Discharging | 66.6 |
| | | Charging | 65.7 |
| | V5 | Discharging | 66.7 |
| | | Charging | 66.7 |
| | V6 | Discharging | 66.8 |
| | | Charging | 66.7 |
| | V7 | Discharging | 65.0 |
| | | Charging | 66.2 |
| | V8 | Discharging | 65.2 |
| | | Charging | 64.5 |
| | V9 | Discharging | 64.5 |
| | | Charging | 65.7 |
| | V10 | Discharging | 65.1 |
| | | Charging | 63.9 |
| | V11 | Discharging | 65.6 |
| | | Charging | 65.8 |
| | V12 | Discharging | 66.1 |
| | | Charging | 65.7 |

(continued)

| Battery | | | |
|---|---|---|---|
| | V13 | Discharging | 66.2 |
| | | Charging | 66.1 |
| | V14 | Discharging | 66.1 |
| | | Charging | 66.1 |
| | V15 | Discharging | 64.3 |
| | | Charging | 66.1 |
| | V16 | Discharging | 63.7 |
| | | Charging | 64.1 |
| | V17 | Discharging | 62.2 |
| | | Charging | 62.6 |
| | V18 | Discharging | 65.5 |
| | | Charging | 63.2 |
| | V19 | Discharging | 65.4 |
| | | Charging | 65.6 |
| | V20 | Discharging | 65.5 |
| | | Charging | 65.3 |
| | V50 | Discharging | 64.7 |
| | | Charging | 64.7 |
| | V100 | Discharging | 61.9 |
| | | Charging | 62.6 |
| | V200 | Discharging | 58.7 |
| | | Charging | 59.2 |
| | V230 | Discharging | 59.4 |
| | | Charging | 59.4 |
| | V250 | Discharging | 58.7 |
| | | Charging | 58.6 |
| | V280 | Discharging | 57.5 |
| | | Charging | 58.4 |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |

(continued)

| Battery | | | | |
|---|---|---|---|---|
| VMax | | | 66.8 | |
| V10/V5 | | 0.98 | V250/V5 | 0.88 |
| V50/V5 | | 0.97 | V280/V5 | 0.86 |
| V200/V5 | | 0.88 | V300/V5 | - |
| V230/V5 | | 0.89 | V350/V5 | - |
| Coulombic efficiency (%) | 1st | | 91.1 | |
| | 2nd | | 101.8 | |
| | 3rd | | 98.7 | |
| | 4th | | 101.4 | |
| | 5th | 100.0 | | |
| | 6th | 100.1 | | |
| | 7th | 98.2 | | |
| | 8th | 101.0 | | |
| | 9th | 98.2 | | |
| | 10th | 101.9 | | |
| | 11th | 99.7 | | |
| | 12th | 100.6 | | |
| | 13th | 100.0 | | |
| | 14th | 100.1 | | |
| | 15th | 97.3 | | |
| | 16th | 99.4 | | |
| | 17th | 99.3 | | |
| | 18th | 103.6 | | |
| | 19th | 99.7 | | |
| | 20th | 100.2 | | |
| n90E20 | | 20 | | |
| V5T60/V5T25 | | - | | |
| V15T60/V15T25 | | - | | |
| V100T60/V100T25 | | - | | |
| vE5 | | - | | |
| qE5 | | - | | |

If the definitions of parameters shown in the tables of the following examples are the same as those shown in Table 3A and Table 3B, those will not be described again.

<Example 2>

The polymer of Example 2 includes a polyester, the polyester includes an end-capped polycarbonate ester, and an end of the end-capped polycarbonate ester includes an inert group. The polyester of Example 2 is polymerized by at least two monomers, each of the monomers is selected from a group consisting of a carbonate ester and a polyol, and the carbonate ester can have a structure as shown in Formula (I).

Table 4A shows the properties of the polymer of Example 2.

| Table 4A | | | |
|---|---|---|---|
| Polymeric | End-capping method | | Esterification capping |
| precursor | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | N cc2 | 2 |
| | | Ncc1 + Ncc2 | 4 |
| Polyester | Mn (Dalton) | | 374 |
| | VC (cP) | | 11.3 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 138 |
| | Ds (g/cm) | | 1.12 |
| | Fpp (°C) | ASTM D93 | - |
| | | ASTM D7094 | - |
| End-capped polycarbonate ester | cMn (Dalton) | | 374 |
| | cVC (cP) | | 11.3 |

Table 4B shows the properties of an electrolyte including the polymer of Example 2, the properties of a battery including the electrolyte, and the analyzing values of the performance of the battery.

| Table 4B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 0.5 |

(continued)

| Battery | | | |
|---|---|---|---|
| Discharge volumetric capacity (mAh/cm$^3$) | V1 | Discharging | 65.5 |
| | | Charging | 71.7 |
| | V2 | Discharging | 66.3 |
| | | Charging | 65.3 |
| | V3 | Discharging | 65.6 |
| | | Charging | 66.4 |
| | V4 | Discharging | 66.4 |
| | | Charging | 65.6 |

(continued)

| Battery | | | |
|---|---|---|---|
| | V5 | Discharging | 66.5 |
| | | Charging | 66.5 |
| | V6 | Discharging | 66.6 |
| | | Charging | 66.5 |
| | V7 | Discharging | 65.1 |
| | | Charging | 66.1 |
| | V8 | Discharging | 65.2 |
| | | Charging | 64.6 |
| | V9 | Discharging | 64.5 |
| | | Charging | 65.7 |
| | V10 | Discharging | 65.1 |
| | | Charging | 64.0 |
| | V11 | Discharging | 65.6 |
| | | Charging | 65.7 |
| | V12 | Discharging | 66.0 |
| | | Charging | 65.6 |
| | V13 | Discharging | 66.0 |
| | | Charging | 66.0 |
| | V14 | Discharging | 66.0 |
| | | Charging | 66.0 |
| | V15 | Discharging | 64.3 |
| | | Charging | 66.1 |
| | V16 | Discharging | 63.6 |
| | | Charging | 64.0 |
| | V17 | Discharging | 62.2 |
| | | Charging | 62.6 |
| | V18 | Discharging | 65.2 |
| | | Charging | 63.0 |
| | V19 | Discharging | 65.4 |
| | | Charging | 65.5 |
| | V20 | Discharging | 65.5 |
| | | Charging | 65.3 |
| | V50 | Discharging | 64.8 |
| | | Charging | 64.8 |
| | V100 | Discharging | 61.9 |
| | | Charging | 62.2 |
| | V200 | Discharging | 59.5 |
| | | Charging | 59.6 |
| | V230 | Discharging | 59.8 |
| | | Charging | 60.2 |
| | V250 | Discharging | 60.0 |
| | | Charging | 60.0 |
| | V280 | Discharging | 58.6 |
| | | Charging | 58.4 |
| | V300 | Discharging | - |
| | | Charging | - |
| | V350 | Discharging | - |

(continued)

| Battery | | | | |
|---|---|---|---|---|
| | | | Charging | - |
| | | V400 | Discharging | - |
| | | V400 | Charging | - |
| | | V450 | Discharging | - |
| | | V450 | Charging | - |
| | | V500 | Discharging | - |
| | | V500 | Charging | - |
| VMax | | | 66.6 | |
| V10/V5 | 0.98 | | V250/V5 | 0.90 |
| V50/V5 | 0.98 | | V280/V5 | 0.88 |
| V200/V5 | 0.90 | | V300/V5 | - |
| V230/V5 | 0.90 | | V350/V5 | - |
| Coulombic efficiency (%) | 1st | | 91.3 | |
| | 2nd | | 101.6 | |
| | 3rd | | 98.7 | |
| | 4th | | 101.2 | |
| | 5th | | 100.0 | |
| | 6th | | 100.1 | |
| | 7th | | 98.5 | |
| | 8th | | 100.9 | |
| | 9th | | 98.2 | |
| | 10th | | 101.8 | |
| | 11th | | 99.8 | |
| | 12th | | 100.5 | |
| | 13th | | 100.0 | |
| | 14th | | 100.1 | |
| | 15th | | 97.4 | |
| | 16th | | 99.3 | |
| | 17th | | 99.3 | |
| | 18th | | 103.5 | |
| | 19th | | 99.9 | |
| | 20th | | 100.2 | |
| n90E20 | | | 20 | |
| V5T60/V5T25 | | | - | |
| V15T60/V15T25 | | | - | |
| V100T60/V100T25 | | | - | |
| vE5 | | | - | |
| gE5 | | | - | |

<Example 3>

The polymer of Example 3 includes a polyester, the polyester includes an end-capped polycarbonate ester, and an end of the end-capped polycarbonate ester includes an inert group. The polyester of Example 3 is polymerized by at least two monomers, each of the monomers is selected from a group consisting of a carbonate ester and a polyol, and the carbonate ester can have a structure as shown in Formula (I).

Table 5A shows the properties of the polymer of Example 3.

| Table 5A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 605 |
| | VC (cP) | | 64.9 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 206 |
| | Ds (g/cm) | | 1.08 |
| | Fpp (°C) | ASTM D93 | - |
| | | ASTM D7094 | - |
| End-capped polycarbonate ester | cMn (Dalton) | | 605 |
| | cVC (cP) | | 64.9 |

Table 5B shows the properties of an electrolyte including the polymer of Example 3, the properties of a battery including the electrolyte, and the analyzing values of the performance of the battery.

| Table 5B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 0.5 |

(continued)

| Battery | | | |
|---|---|---|---|
| Discharge volumetric capacity (mAh/cm$^3$) | V1 | Discharging | 60.8 |
| | | Charging | 66.4 |
| | V2 | Discharging | 58.9 |
| | | Charging | 60.1 |
| | V3 | Discharging | 59.3 |
| | | Charging | 59.4 |
| | V4 | Discharging | 61.6 |
| | | Charging | 59.5 |
| | V5 | Discharging | 61.8 |
| | | Charging | 61.7 |
| | V6 | Discharging | 61.8 |
| | | Charging | 61.8 |
| | V7 | Discharging | 61.8 |
| | | Charging | 61.8 |
| | V8 | Discharging | 61.0 |
| | | Charging | 61.5 |
| | V9 | Discharging | 61.4 |
| | | Charging | 61.1 |
| | V10 | Discharging | 60.1 |
| | | Charging | 60.8 |
| | V11 | Discharging | 61.3 |
| | | Charging | 60.7 |
| | V12 | Discharging | 60.8 |
| | | Charging | 61.2 |
| | V13 | Discharging | 61.5 |
| | | Charging | 61.0 |
| | V14 | Discharging | 61.6 |
| | | Charging | 61.5 |
| | V15 | Discharging | 61.7 |
| | | Charging | 61.6 |
| | V16 | Discharging | 60.3 |
| | | Charging | 61.3 |
| | V17 | Discharging | 60.8 |
| | | Charging | 60.1 |
| | V18 | Discharging | 60.5 |
| | | Charging | 60.7 |
| | V19 | Discharging | 59.6 |
| | | Charging | 59.7 |
| | V20 | Discharging | 60.7 |
| | | Charging | 60.4 |
| | V50 | Discharging | 60.5 |
| | | Charging | 60.4 |
| | V100 | Discharging | 59.6 |
| | | Charging | 59.8 |
| | V200 | Discharging | 57.0 |
| | | Charging | 57.0 |

(continued)

| Battery | | | |
|---|---|---|---|
| | V230 | Discharging | 56.6 |
| | | Charging | 57.1 |
| | V250 | Discharging | 56.4 |
| | | Charging | 56.1 |
| | V280 | Discharging | 54.7 |
| | | Charging | 54.8 |
| | V300 | Discharging | 55.4 |
| | | Charging | 55.4 |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |
| VMax | | 61.8 | |
| V10/V5 | 0.97 | V250/V5 | 0.91 |
| V50/V5 | 0.98 | V280/V5 | 0.89 |
| V200/V5 | 0.92 | V300/V5 | 0.90 |
| V230/V5 | 0.91 | V350/V5 | - |
| Coulombic efficiency (%) | 1st | 91.5 | |
| | 2nd | 98.0 | |
| | 3rd | 99.8 | |
| | 4th | 103.4 | |
| | 5th | 100.2 | |
| | 6th | 100.0 | |
| | 7th | 100.0 | |
| | 8th | 99.2 | |
| | 9th | 100.5 | |
| | 10th | 98.9 | |
| | 11th | 101.1 | |
| | 12th | 99.3 | |
| | 13th | 100.9 | |
| | 14th | 100.1 | |
| | 1 5th | 100.1 | |
| | 16th | 98.3 | |
| | 17th | 101.1 | |
| | 18th | 99.6 | |
| | 19th | 99.8 | |
| | 20th | 100.6 | |
| n90E20 | | 20 | |
| V5T60/V5T25 | | - | |
| V15T60/V15T25 | | - | |
| V100T60/V100T25 | | - | |
| vE5 | | - | |

(continued)

| Battery | |
|---|---|
| gE5 | - |

<Example 4>

The polymer of Example 4 includes a polyester, the polyester includes an end-capped polycarbonate ester, and an end of the end-capped polycarbonate ester includes an inert group. The polyester of Example 4 is polymerized by at least two monomers, each of the monomers is selected from a group consisting of a carbonate ester and a polyol, and the carbonate ester can have a structure as shown in Formula (I).

Table 6A shows the properties of the polymer of Example 4.

Table 6A

| | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 605 |
| | VC (cP) | | 64.9 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 206 |
| | Ds (g/cm) | | 1.08 |
| | Fpp (°C) | ASTM D93 | - |
| | | ASTM D7094 | - |
| End-capped polycarbonate ester | cMn (Dalton) | | 605 |
| | cVC (cP) | | 64.9 |

Table 6B shows the properties of an electrolyte including the polymer of Example 4, the properties of a battery including the electrolyte, and the analyzing values of the performance of the battery.

Table 6B

| Electrolyte | |
|---|---|
| Lithium salt | LiTFSI |

(continued)

| Table 6B | |
|---|---|
| Electrolyte | |
| Concentration of lithium salt (M) | 1.8 |
| Ci ($S\cdot cm^{-1}$) | - |
| Fpe (°C) | - |
| battery | |
| Temperature (°C) | 60 |
| C-rate (C) | 1.0 |

(continued)

| battery | | | |
|---|---|---|---|
| Discharge volumetric capacity (mAh/cm$^3$) | V1 | Discharging | 75.8 |
| | | Charging | 75.6 |
| | V2 | Discharging | 76.0 |
| | | Charging | 76.3 |
| | V3 | Discharging | 75.9 |
| | | Charging | 76.0 |
| | V4 | Discharging | 75.8 |
| | | Charging | 76.0 |
| | V5 | Discharging | 75.8 |
| | | Charging | 76.0 |
| | V6 | Discharging | 75.8 |
| | | Charging | 75.9 |
| | V7 | Discharging | 75.8 |
| | | Charging | 75.9 |
| | V8 | Discharging | 75.8 |
| | | Charging | 75.9 |
| | V9 | Discharging | 75.8 |
| | | Charging | 75.9 |
| | V10 | Discharging | 75.7 |
| | | Charging | 75.8 |
| | V11 | Discharging | 75.7 |
| | | Charging | 75.8 |
| | V12 | Discharging | 75.6 |
| | | Charging | 75.7 |
| | V13 | Discharging | 75.6 |
| | | Charging | 75.7 |
| | V14 | Discharging | 75.5 |
| | | Charging | 75.6 |
| | V15 | Discharging | 75.5 |
| | | Charging | 75.6 |
| | V16 | Discharging | 75.4 |
| | | Charging | 75.6 |
| | V17 | Discharging | 75.4 |
| | | Charging | 75.5 |
| | V18 | Discharging | 75.4 |
| | | Charging | 75.5 |
| | V19 | - Discharging | 75.3 |
| | | Charging | 75.5 |

(continued)

| battery | | | |
|---|---|---|---|
| | V20 | Discharging | 75.3 |
| | | Charging | 75.5 |
| | V50 | Discharging | 75.0 |
| | | Charging | 75.1 |
| | V100 | Discharging | 74.0 |
| | | Charging | 74.4 |
| | V200 | Discharging | 56.6 |
| | | Charging | 57.3 |
| | V230 | Discharging | 52.6 |
| | | Charging | 53.1 |
| | V250 | Discharging | × |
| | | Charging | × |
| | V280 | Discharging | × |
| | | Charging | × |
| | V300 | Discharging | × |
| | | Charging | × |
| | V350 | Discharging | × |
| | | Charging | × |
| | V400 | Discharging | × |
| | | Charging | × |
| | V450 | Discharging | × |
| | | Charging | × |
| | V500 | Discharging | × |
| | | Charging | × |
| VMax | | 76.0 | |
| V10/V5 | 1.00 | V250/V5 | × |
| V50/V5 | 0.99 | V280/V5 | × |
| V200/V5 | 0.75 | V300/V5 | × |
| V230/V5 | 0.69 | V350/V5 | × |

(continued)

| battery | | |
|---|---|---|
| Coulombic efficiency (%) | 1st | 100.3 |
| | 2nd | 99.7 |
| | 3rd | 99.8 |
| | 4th | 99.8 |
| | 5th | 99.8 |
| | 6th | 99.9 |
| | 7th | 99.9 |
| | 8th | 99.9 |
| | 9th | 99.9 |
| | 10th | 99.8 |
| | 11th | 99.8 |
| | 12th | 99.8 |
| | 13th | 99.8 |
| | 14th | 99.8 |
| | 15th | 99.8 |
| | 16th | 99.8 |
| | 17th | 99.8 |
| | 18th | 99.8 |
| | 19th | 99.8 |
| | 20th | 99.8 |
| n90E20 | | 20 |
| V5T60/V5T25 | | - |
| V15T60/V15T25 | | - |
| V100T60/V100T25 | | - |
| vE5 | | - |
| gE5 | | - |

<Example 5>

The polymer of Example 5 includes a polyester, the polyester includes an end-capped polycarbonate ester, and an end of the end-capped polycarbonate ester includes an inert group. The polyester of Example 5 is polymerized by at least two monomers, each of the monomers is selected from a group consisting of a carbonate ester and a polyol, and the carbonate ester can have a structure as shown in Formula (I).

Table 7A shows the properties of the polymer of Example 5.

<table>
<tr><th colspan="4">Table 7A</th></tr>
<tr><td rowspan="9">Polymeric precursor</td><td colspan="2">End-capping method</td><td>Esterification capping</td></tr>
<tr><td rowspan="4">Polyol</td><td>Monomer 1</td><td>Butane-1,4-diol</td></tr>
<tr><td>Ncp</td><td>4</td></tr>
<tr><td>Monomer 2</td><td>-</td></tr>
<tr><td>Ncp</td><td>-</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="9">Polyester</td><td colspan="2">Mn (Dalton)</td><td>605</td></tr>
<tr><td colspan="2">VC (cP)</td><td>64.9</td></tr>
<tr><td rowspan="3">Within the temperature range from -80°C to 80°C</td><td>Whether glass transition occurs</td><td>N</td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>206</td></tr>
<tr><td colspan="2">Ds (g/cm)</td><td>1.08</td></tr>
<tr><td colspan="2">Fpp (°C) ASTM D93</td><td>-</td></tr>
<tr><td></td><td></td><td>ASTM D7094</td><td>-</td></tr>
<tr><td rowspan="2">End-capped polycarbonate ester</td><td colspan="2">cMn (Dalton)</td><td>605</td></tr>
<tr><td colspan="2">cVC (cP)</td><td>64.9</td></tr>
</table>

Table 7B shows the properties of an electrolyte including the polymer of Example 5, the properties of a battery including the electrolyte, and the analyzing values of the performance of the battery.

| Table 7B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 60 |
| C-rate (C) | 1.0 |

(continued)

| Battery | | | |
|---|---|---|---|
| Discharge volumetric capacity (mAh/cm$^3$) | V1 | Discharging | 59.5 |
| | | Charging | 58.9 |
| | V2 | Discharging | 59.8 |
| | | Charging | 59.9 |
| | V3 | Discharging | 63.0 |
| | | Charging | 82.8 |
| | V4 | Discharging | 62.0 |
| | | Charging | 61.7 |
| | V5 | Discharging | 62.0 |
| | | Charging | 61.8 |
| | V6 | Discharging | 62.1 |
| | | Charging | 62.0 |
| | V7 | Discharging | 62.3 |
| | | Charging | 62.1 |
| | V8 | Discharging | 62.4 |
| | | Charging | 62.3 |
| | V9 | Discharging | 62.5 |
| | | Charging | 62.4 |
| | V10 | Discharging | 62.5 |
| | | Charging | 62.5 |
| | V11 | Discharging | 62.6 |
| | | Charging | 62.6 |
| | V12 | Discharging | 62.7 |
| | | Charging | 62.7 |
| | V13 | Discharging | 62.9 |
| | | Charging | 62.9 |
| | V14 | Discharging | 63.0 |
| | | Charging | 63.0 |

(continued)

| Battery | | | |
|---|---|---|---|
| | V15 | Discharging | 63.1 |
| | | Charging | 63.1 |
| | V16 | Discharging | 63.2 |
| | | Charging | 63.2 |
| | V17 | Discharging | 63.3 |
| | | Charging | 63.3 |
| | V18 | Discharging | 63.5 |
| | | Charging | 63.5 |
| | V19 | Discharging | 63.5 |
| | | Charging | 63.5 |
| | V20 | Discharging | 63.7 |
| | | Charging | 63.7 |
| | V50 | Discharging | 68.3 |
| | | Charging | 68.3 |
| | V100 | Discharging | 76.4 |
| | | Charging | 76.5 |
| | V200 | Discharging | 71.0 |
| | | Charging | 71.6 |
| | V230 | Discharging | 70.0 |
| | | Charging | 70.4 |
| | V250 | Discharging | 66.1 |
| | | Charging | 66.7 |
| | V280 | Discharging | 62.4 |
| | | Charging | 62.8 |
| | V300 | Discharging | 55.0 |
| | | Charging | 55.5 |
| | V350 | Discharging | × |
| | | Charging | × |
| | V400 | Discharging | × |
| | | Charging | × |
| | V450 | Discharging | × |
| | | Charging | × |
| | V500 | Discharging | × |
| | | Charging | × |
| VMax | | 63.7 | |
| V10/V5 | 1.01 | V250/V5 | 1.07 |
| V50/V5 | 1.10 | V280/V5 | 1.01 |
| V200/V5 | 1.14 | V300/V5 | 0.89 |

(continued)

| Battery | | | |
|---|---|---|---|
| V230/V5 | 1.13 | V350/V5 | × |
| Coulombic efficiency (%) | 1st | 101.0 | |
| | 2nd | 99.9 | |
| | 3rd | 76.0 | |
| | 4th | 100.5 | |
| | 5th | 100.3 | |
| | 6th | 100.2 | |
| | 7th | 100.2 | |
| | 8th | 100.1 | |
| | 9th | 100.1 | |
| | 10th | 100.1 | |
| | 11th | 100.1 | |
| | 12th | 100.0 | |
| | 13th | 100.0 | |
| | 14th | 100.0 | |
| | 15th | 100.0 | |
| | 16th | 100.0 | |
| | 17th | 100.0 | |
| | 18th | 100.0 | |
| | 19th | 100.0 | |
| | 20th | 100.0 | |
| n90E20 | | 19 | |
| V5T60/V5T25 | | - | |
| V15T60/V15T25 | | - | |
| V100T60/V100T25 | | - | |
| vE5 | | - | |
| gE5 | | | |

<Example 6>

The polymer of Example 6 includes a polyester, the polyester includes an end-capped polycarbonate ester, and an end of the end-capped polycarbonate ester includes an inert group. The polyester of Example 6 is polymerized by at least two monomers, each of the monomers is selected from a group consisting of a carbonate ester and a polyol, and the carbonate ester can have a structure as shown in Formula (I).

Table 8A shows the properties of the polymer of Example 6.

| Table 8A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 605 |
| | VC (cP) | | 64.9 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 206 |
| | Ds (g/cm) | | 1.08 |
| | Fpp (°C) | ASTM D93 | - |
| | | ASTM D7094 | - |
| End-capped polycarbonate ester | cMn (Dalton) | | 605 |
| | cVC (cP) | | 64.9 |

Table 8B shows the properties of an electrolyte including the polymer of Example 6, the properties of a battery including the electrolyte, and the analyzing values of the performance of the battery.

| Table 8B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 60 |
| C-rate (C) | 1.0 |

(continued)

| Battery | | | |
|---|---|---|---|
| Discharge volumetric capacity (mAh/$cm^3$) | V1 | Discharging | 73.2 |
| | | Charging | 75.9 |
| | V2 | Discharging | 71.8 |
| | | Charging | 72.2 |
| | V3 | Discharging | 71.5 |
| | | Charging | 71.8 |
| | V4 | Discharging | 71.5 |
| | | Charging | 71.9 |
| | V5 | Discharging | 71.1 |
| | | Charging | 71.4 |
| | V6 | Discharging | 71.0 |
| | | Charging | 71.3 |
| | V7 | Discharging | 70.9 |
| | | Charging | 71.3 |
| | V8 | Discharging | 70.8 |
| | | Charging | 71.1 |
| | V9 | Discharging | 70.7 |
| | | Charging | 71.0 |

(continued)

| Battery | | | |
|---|---|---|---|
| | V10 | Discharging | 70.6 |
| | | Charging | 70.9 |
| | V11 | Discharging | 70.5 |
| | | Charging | 70.7 |
| | V12 | Discharging | 70.5 |
| | | Charging | 70.8 |
| | V13 | Discharging | 70.5 |
| | | Charging | 70.8 |
| | V14 | Discharging | 70.5 |
| | | Charging | 70.7 |
| | V15 | Discharging | 70.5 |
| | | Charging | 70.7 |
| | V16 | Discharging | 70.5 |
| | | Charging | 70.8 |
| | V17 | Discharging | 70.6 |
| | | Charging | 70.8 |
| | V18 | Discharging | 70.6 |
| | | Charging | 70.8 |
| | V19 | Discharging | 70.6 |
| | | Charging | 70.9 |
| | V20 | Discharging | 70.6 |
| | | Charging | 70.9 |
| | V50 | Discharging | 67.2 |
| | | Charging | 68.4 |
| | V100 | Discharging | 57.1 |
| | | Charging | 57.5 |
| | V200 | Discharging | × |
| | | Charging | × |
| | V230 | Discharging | × |
| | | Charging | × |
| | V250 | Discharging | × |
| | | Charging | × |
| | V280 | Discharging | × |
| | | Charging | × |
| | V300 | Discharging | × |
| | | Charging | × |
| | V350 | Discharging | × |
| | | Charging | × |
| | V400 | Discharging | × |
| | | Charging | × |
| | V450 | Discharging | × |
| | | Charging | × |
| | V500 | Discharging | × |
| | | Charging | × |

(continued)

| Battery | | | |
|---|---|---|---|
| VMax | | 73.2 | |
| V10/V5 | 0.99 | V250/V5 | × |
| V50/V5 | 0.94 | V280/V5 | × |
| V200/V5 | × | V300/V5 | × |
| V230/V5 | × | V350/V5 | × |
| Coulombic efficiency (%) | 1st | 96.5 | |
| | 2nd | 99.4 | |
| | 3rd | 99.6 | |
| | 4th | 99.4 | |
| | 5th | 99.5 | |
| | 6th | 99.5 | |
| | 7th | 99.5 | |
| | 8th | 99.5 | |
| | 9th | 99.6 | |
| | 10th | 99.6 | |
| | 11th | 99.6 | |
| | 12th | 99.6 | |
| | 13th | 99.6 | |
| | 14th | 99.7 | |
| | 15th | 99.7 | |
| | 16th | 99.6 | |
| | 17th | 99.7 | |
| | 18th | 99.7 | |
| | 19th | 99.6 | |
| | 20th | 99.7 | |
| n90E20 | | 20 | |
| V5T60/V5T25 | | - | |
| V15T60/V15T25 | | - | |
| V100T60/V100T25 | | - | |
| vE5 | | - | |
| gE5 | | | |

<Example 7>

The polymer of Example 7 includes a polyester, the polyester includes an end-capped polycarbonate ester, and an end of the end-capped polycarbonate ester includes an inert group. The polyester of Example 7 is polymerized by at least two monomers, each of the monomers is selected from a group consisting of a carbonate ester and a polyol, and the carbonate ester can have a structure as shown in Formula (I).

Table 9A shows the properties of the polymer of Example 7.

| Table 9A | | |
|---|---|---|
| Polymeric | End-capping method | Esterification capping |

(continued)

| Table 9A | | | |
|---|---|---|---|
| precursor | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 422 |
| | VC (cP) | | 34.4 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 178 |
| | Ds (g/cm) | | 1.11 |
| | Fpp (°C) | ASTM D93 | - |
| | | ASTM D7094 | - |
| End-capped polycarbonate ester | cMn (Dalton) | | 422 |
| | cVC (cP) | | 34.4 |

Table 9B shows the properties of an electrolyte including the polymer of Example 7, the properties of a battery including the electrolyte, and the analyzing values of the performance of the battery.

| Table 9B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 0.5 |

(continued)

| Battery | | | |
|---|---|---|---|
| Discharge volumetric capacity (mAh/$cm^3$) | V1 | Discharging | 60.8 |
| | | Charging | 66.4 |
| | V2 | Discharging | 58.9 |
| | | Charging | 60.1 |
| | V3 | Discharging | 59.3 |
| | | Charging | 59.4 |
| | V4 | Discharging | 61.6 |
| | | Charging | 59.5 |

(continued)

| Battery | | | |
|---|---|---|---|
| | V5 | Discharging | 61.8 |
| | | Charging | 61.7 |
| | V6 | Discharging | 61.8 |
| | | Charging | 61.8 |
| | V7 | Discharging | 61.8 |
| | | Charging | 61.8 |
| | V8 | Discharging | 61.0 |
| | | Charging | 61.5 |
| | V9 | Discharging | 61.4 |
| | | Charging | 61.1 |
| | V10 | Discharging | 60.1 |
| | | Charging | 60.8 |
| | V11 | Discharging | 61.3 |
| | | Charging | 60.7 |
| | V12 | Discharging | 60.8 |
| | | Charging | 61.2 |
| | V13 | Discharging | 61.5 |
| | | Charging | 61.0 |
| | V14 | Discharging | 61.6 |
| | | Charging | 61.5 |
| | V15 | Discharging | 61.7 |
| | | Charging | 61.6 |
| | V16 | Discharging | 60.3 |
| | | Charging | 61.3 |
| | V17 | Discharging | 60.8 |
| | | Charging | 60.1 |
| | V18 | Discharging | 60.5 |
| | | Charging | 60.7 |
| | V19 | Discharging | 59.6 |
| | | Charging | 59.7 |
| | V20 | Discharging | 60.7 |
| | | Charging | 60.4 |
| | V50 | Discharging | 60.5 |
| | | Charging | 60.4 |
| | V100 | Discharging | 60.0 |
| | | Charging | 59.8 |
| | V200 | Discharging | 57.0 |
| | | Charging | 57.0 |
| | V230 | Discharging | 56.6 |
| | | Charging | 57.1 |
| | V250 | Discharging | 56.4 |
| | | Charging | 56.1 |
| | V280 | Discharging | 54.7 |
| | | Charging | 54.8 |
| | V300 | Discharging | 55.4 |
| | | Charging | 55.4 |
| | V350 | Discharging | - |

(continued)

| Battery | | | |
|---|---|---|---|
| | | Charging | - |
| | V400 | Discharging | - |
| | | Charging | - |
| | V450 | Discharging | - |
| | | Charging | - |
| | V500 | Discharging | - |
| | | Charging | - |
| VMax | | 61.8 | |
| V10/V5 | 0.97 | V250/V5 | 0.91 |
| V50/V5 | 0.98 | V280/V5 | 0.89 |
| V200/V5 | 0.92 | V300/V5 | 0.90 |
| V230/V5 | 0.91 | V350/V5 | - |
| Coulombic efficiency (%) | 1st | 91.5 | |
| | 2nd | 98.0 | |
| | 3rd | 99.8 | |
| | 4th | 103.4 | |
| | 5th | 100.2 | |
| | 6th | 100.0 | |
| | 7th | 100.0 | |
| | 8th | 99.2 | |
| | 9th | 100.5 | |
| | 10th | 98.9 | |
| | 11th | 101.1 | |
| | 12th | 99.3 | |
| | 13th | 100.9 | |
| | 14th | 100.1 | |
| | 15th | 100.1 | |
| | 16th | 98.3 | |
| | 17th | 101.1 | |
| | 18th | 99.6 | |
| | 19th | 99.8 | |
| | 20th | 100.6 | |
| n90E20 | | 20 | |
| V5T60/V5T25 | | - | |
| V15T60/V15T25 | | - | |
| V100T60/V100T25 | | - | |
| vE5 | | - | |
| gE5 | | | |

<Example 8>

The polymer of Example 8 includes a polyester, the polyester includes an end-capped polycarbonate ester, and an end of the end-capped polycarbonate ester includes an inert group. The polyester of Example 8 is polymerized by at least two monomers, each of the monomers is selected from a group consisting of a carbonate ester and a polyol, and the carbonate ester can have a structure as shown in Formula (I).

Table 10A shows the properties of the polymer of Example 8.

<table>
<tr><td colspan="4">Table 10A</td></tr>
<tr><td rowspan="8">Polymeric precursor</td><td colspan="2">End-capping method</td><td>Esterification capping</td></tr>
<tr><td rowspan="4">Polyol</td><td>Monomer 1</td><td>Butane-1,4-diol</td></tr>
<tr><td>Ncp</td><td>4</td></tr>
<tr><td>Monomer 2</td><td>-</td></tr>
<tr><td>Ncp</td><td></td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td></td><td>Ncc1 + Ncc2</td><td>4</td></tr>
<tr><td rowspan="10">Polyester</td><td colspan="2">Mn (Dalton)</td><td>422</td></tr>
<tr><td colspan="2">VC (cP)</td><td>34.4</td></tr>
<tr><td rowspan="3">Within the temperature range from -80°C to 80°C</td><td>Whether glass transition occurs</td><td>N</td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>178</td></tr>
<tr><td colspan="2">Ds (g/cm)</td><td>1.11</td></tr>
<tr><td rowspan="2">Fpp (°C)</td><td>ASTM D93</td><td>-</td></tr>
<tr><td>ASTM D7094</td><td>-</td></tr>
<tr><td rowspan="2">End-capped polycarbonate ester</td><td colspan="2">cMn (Dalton)</td><td>422</td></tr>
<tr><td colspan="2">cVC (cP)</td><td>34.4</td></tr>
</table>

Table 10B shows the properties of an electrolyte including the polymer of Example 8, the properties of a battery including the electrolyte, and the analyzing values of the performance of the battery.

<table>
<tr><td colspan="2">Table 10B</td></tr>
<tr><td colspan="2">Electrolyte</td></tr>
<tr><td>Lithium salt</td><td>LiTFSI</td></tr>
<tr><td>Concentration of lithium salt (M)</td><td>1.8</td></tr>
<tr><td>Ci (S·cm$^{-1}$)</td><td>-</td></tr>
<tr><td>Fpe (°C)</td><td>-</td></tr>
<tr><td colspan="2">Battery</td></tr>
<tr><td>Temperature (°C)</td><td>25</td></tr>
<tr><td>C-rate (C)</td><td>0.5</td></tr>
</table>

(continued)

| Battery | | | |
|---|---|---|---|
| Discharge volumetric capacity (mAh/cm$^3$) | V1 | Discharging | 60.5 |
| | | Charging | 67.4 |
| | V2 | Discharging | 62.1 |
| | | Charging | 61.3 |
| | V3 | Discharging | 61.3 |
| | | Charging | 62.5 |
| | V4 | Discharging | 62.1 |
| | | Charging | 61.4 |
| | V5 | Discharging | 62.3 |
| | | Charging | 62.4 |
| | V6 | Discharging | 62.3 |
| | | Charging | 62.4 |
| | V7 | Discharging | 60.9 |
| | | Charging | 62.5 |
| | V8 | Discharging | 60.2 |
| | | Charging | 60.4 |
| | V9 | Discharging | 61.0 |
| | | Charging | 60.5 |
| | V10 | Discharging | 58.4 |
| | | Charging | 60.1 |
| | V11 | Discharging | 61.2 |
| | | Charging | 59.3 |
| | V12 | Discharging | 61.2 |
| | | Charging | 61.1 |
| | V13 | Discharging | 61.6 |
| | | Charging | 61.5 |
| | V14 | Discharging | 61.6 |
| | | Charging | 61.7 |
| | V15 | Discharging | 61.7 |
| | | Charging | 61.7 |
| | V16 | Discharging | 59.2 |
| | | Charging | 61.2 |
| | V17 | Discharging | 59.2 |
| | | Charging | 59.5 |
| | V18 | Discharging | 57.2 |
| | | Charging | 57.7 |
| | V19 | Discharging | 60.5 |
| | | Charging | 58.4 |
| | V20 | Discharging | 61.0 |
| | | Charging | 61.1 |
| | V50 | Discharging | 59.8 |
| | | Charging | 60.2 |
| | V100 | Discharging | 58.9 |
| | | Charging | 58.9 |
| | V200 | Discharging | 55.9 |
| | | Charging | 55.9 |

(continued)

| Battery | | | | |
|---|---|---|---|---|
| | | V230 | Discharging | 56.2 |
| | | | Charging | 56.2 |
| | | V250 | Discharging | 55.4 |
| | | | Charging | 55.7 |
| | | V280 | Discharging | 53.5 |
| | | | Charging | 54.5 |
| | | V300 | Discharging | 55.2 |
| | | | Charging | 55.0 |
| | | V350 | Discharging | - |
| | | | Charging | - |
| | | V400 | Discharging | - |
| | | | Charging | - |
| | | V450 | Discharging | - |
| | | | Charging | - |
| | | V500 | Discharging | - |
| | | | Charging | - |
| VMax | | | 62.3 | |
| V10/V5 | | 0.94 | V250/V5 | 0.89 |
| V50/V5 | | 0.96 | V280/V5 | 0.86 |
| V200/V5 | | 0.90 | V300/V5 | 0.89 |
| V230/V5 | | 0.90 | V350/V5 | - |
| Coulombic efficiency (%) | 1st | | 89.9 | |
| | 2nd | | 101.5 | |
| | 3rd | | 98.0 | |
| | 4th | | 101.1 | |
| | 5th | | 99.8 | |
| | 6th | | 99.9 | |
| | 7th | | 97.5 | |
| | 8th | | 99.6 | |
| | 9th | | 100.9 | |
| | 10th | | 97.1 | |
| | 11th | | 103.1 | |
| | 12th | | 100.1 | |
| | 13th | | 100.3 | |
| | 14th | | 99.9 | |
| | 15th | | 100.0 | |
| | 16th | | 96.9 | |
| | 17th | | 99.4 | |
| | 18th | | 99.1 | |
| | 19th | | 103.6 | |
| | 20th | | 99.9 | |
| n90E20 | | | 19 | |
| V5T60/V5T25 | | | - | |
| V15T60/V15T25 | | | - | |
| V100T60/V100T25 | | | - | |
| vE5 | | | - | |

(continued)

| Battery | |
|---|---|
| gE5 | - |

<Example 9>

The polymer of Example 9 includes a polyester, the polyester includes an end-capped polycarbonate ester, and an end of the end-capped polycarbonate ester includes an inert group. The polyester of Example 9 is polymerized by at least two monomers, each of the monomers is selected from a group consisting of a carbonate ester and a polyol, and the carbonate ester can have a structure as shown in Formula (I).

Table 11A shows the properties of the polymer of Example 9.

| Table 11A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 422 |
| | VC (cP) | | 34.4 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 178 |
| | Ds (g/cm) | | 1.11 |
| | Fpp (°C) | ASTM D93 | - |
| | | ASTM D7094 | - |
| End-capped polycarbonate ester | cMn (Dalton) | | 422 |
| | cVC (cP) | | 34.4 |

Table 11B shows the properties of an electrolyte including the polymer of Example 9, the properties of a battery including the electrolyte, and the analyzing values of the performance of the battery.

| Table 11B | |
|---|---|
| Electrolyte | |
| Lithium salt | LiTFSI |

(continued)

| Table 11B | |
| --- | --- |
| Electrolyte | |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 0.5 |

(continued)

| Battery | | | |
|---|---|---|---|
| Discharge volumetric capacity (mAh/cm$^3$) | V1 | Discharging | 61.4 |
| | | Charging | 68.3 |
| | V2 | Discharging | 63.9 |
| | | Charging | 62.8 |
| | V3 | Discharging | 63.3 |
| | | Charging | 64.4 |
| | V4 | Discharging | 64.0 |
| | | Charging | 63.5 |
| | V5 | Discharging | 64.0 |
| | | Charging | 64.2 |
| | V6 | Discharging | 64.1 |
| | | Charging | 64.2 |
| | V7 | Discharging | 62.8 |
| | | Charging | 64.3 |
| | V8 | Discharging | 63.0 |
| | | Charging | 62.3 |
| | V9 | Discharging | 62.3 |
| | | Charging | 62.6 |
| | V10 | Discharging | 61.4 |
| | | Charging | 61.6 |
| | V11 | Discharging | 63.0 |
| | | Charging | 62.7 |
| | V12 | Discharging | 63.5 |
| | | Charging | 63.3 |
| | V13 | Discharging | 63.7 |
| | | Charging | 63.8 |
| | V14 | Discharging | 63.7 |
| | | Charging | 63.8 |
| | V15 | Discharging | 63.6 |
| | | Charging | 63.9 |
| | V16 | Discharging | 61.7 |
| | | Charging | 62.0 |
| | V17 | Discharging | 59.5 |
| | | Charging | 61.4 |
| | V18 | Discharging | 60.8 |
| | | Charging | 59.2 |
| | V19 | Discharging | 63.3 |
| | | Charging | 62.7 |

(continued)

| Battery | | | | |
|---|---|---|---|---|
| | | V20 | Discharging | 63.1 |
| | | | Charging | 63.2 |
| | | V50 | Discharging | 62.4 |
| | | | Charging | 61.7 |
| | | V100 | Discharging | 62.3 |
| | | | Charging | 62.3 |
| | | V200 | Discharging | 59.0 |
| | | | Charging | 58.9 |
| | | V230 | Discharging | 59.8 |
| | | | Charging | 59.7 |
| | | V250 | Discharging | 59.0 |
| | | | Charging | 59.0 |
| | | V280 | Discharging | 59.4 |
| | | | Charging | 59.3 |
| | | V300 | Discharging | 58.5 |
| | | | Charging | 59.0 |
| | | V350 | Discharging | - |
| | | | Charging | - |
| | | V400 | Discharging | - |
| | | | Charging | - |
| | | V450 | Discharging | - |
| | | | Charging | - |
| | | V500 | Discharging | - |
| | | | Charging | - |
| VMax | | 64.1 | | |
| V10/V5 | 0.96 | | V250/V5 | 0.92 |
| V50/V5 | 0.97 | | V280/V5 | 0.93 |
| V200/V5 | 0.92 | | V300/V5 | 0.91 |
| V230/V5 | 0.93 | | V350/V5 | - |

(continued)

| Battery | | |
|---|---|---|
| Coulombic efficiency (%) | 1st | 89.8 |
| | 2nd | 101.7 |
| | 3rd | 98.3 |
| | 4th | 100.7 |
| | 5th | 99.7 |
| | 6th | 99.8 |
| | 7th | 97.6 |
| | 8th | 101.1 |
| | 9th | 99.5 |
| | 10th | 99.7 |
| | 11th | 100.4 |
| | 12th | 100.3 |
| | 13th | 99.9 |
| | 14th | 99.9 |
| | 15th | 99.5 |
| | 16th | 99.5 |
| | 17th | 96.8 |
| | 18th | 102.7 |
| | 19th | 100.9 |
| | 20th | 99.8 |
| n90E20 | | 19 |
| V5T60/V5T25 | | - |
| V15T60/V15T25 | | - |
| V100T60/V100T25 | | - |
| vE5 | | - |
| gE5 | | - |

<Example 10>

The polymer of Example 10 includes a polyester, the polyester includes an end-capped polycarbonate ester, and an end of the end-capped polycarbonate ester includes an inert group. The polyester of Example 10 is polymerized by at least two monomers, each of the monomers is selected from a group consisting of a carbonate ester and a polyol, and the carbonate ester can have a structure as shown in Formula (I).

Table 12A shows the properties of the polymer of Example 10.

| Table 12A | | | |
|---|---|---|---|
| Polymeric precursor | End-capping method | | Esterification capping |
| | Polyol | Monomer 1 | Propane-1,3-diol |
| | | Ncp | 3 |
| | | Monomer 2 | Butane-1,4-diol |
| | | Ncp | 4 |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 612 |
| | VC (cP) | | 78 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 188 |
| | Ds (g/cm) | | 1.17 |
| | Fpp (°C) ASTM D93 | | - |
| | | ASTM D7094 | - |
| End-capped polycarbonate ester | cMn (Dalton) | | 612 |
| | cVC (cP) | | 78 |

Table 12B shows the properties of an electrolyte including the polymer of Example 10, the properties of a battery including the electrolyte, and the analyzing values of the performance of the battery.

| Table 12B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/$cm^3$) | V1 | Discharging | - |
| | | Charging | - |
| | V2 | Discharging | - |
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | |
| | | Charging | |
| | V8 | Discharging | - |
| | | Charging | - |
| | V9 | Discharging | - |
| | | Charging | - |
| | V10 | Discharging | - |
| | | Charging | - |
| | V11 | Discharging | - |
| | | Charging | - |
| | V12 | Discharging | - |
| | | Charging | - |
| | V13 | Discharging | - |
| | | Charging | - |
| | V14 | Discharging | - |
| | | Charging | - |

(continued)

| Battery | | | |
|---|---|---|---|
| | V15 | Discharging | - |
| | | Charging | - |
| | V16 | Discharging | - |
| | | Charging | |
| | V17 | Discharging | - |
| | | Charging | |
| | V18 | Discharging | - |
| | | Charging | - |
| | V19 | Discharging | |
| | | Charging | |
| | V20 | Discharging | - |
| | | Charging | - |
| | V50 | Discharging | - |
| | | Charging | |
| | V100 | Discharging | |
| | | Charging | - |
| | V200 | Discharging | - |
| | | Charging | |
| | V230 | Discharging | - |
| | | Charging | - |
| | V250 | Discharging | - |
| | | Charging | - |
| | V280 | Discharging | - |
| | | Charging | - |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |
| VMax | | - | |
| V10/V5 | - | V250/V5 | - |
| V50/V5 | - | V280/V5 | - |
| V200/V5 | - | V300/V5 | - |

(continued)

| Battery | | | |
|---|---|---|---|
| V230/V5 | | - | V350/V5 | -
| Coulombic efficiency (%) | 1st | | |
| | 2nd | | - |
| | 3rd | | - |
| | 4th | | |
| | 5th | | |
| | 6th | | - |
| | 7th | | - |
| | 8th | | - |
| | 9th | - | |
| | 10th | - | |
| | 11th | - | |
| | 12th | - | |
| | 13th | - | |
| | 14th | - | |
| | 15th | - | |
| | 16th | - | |
| | 17th | - | |
| | 18th | - | |
| | 19th | - | |
| | 20th | - | |
| n90E20 | | - | |
| V5T60A/5T25 | | - | |
| V15T60/V15T25 | | - | |
| V100T60/V100T25 | | - | |
| vE5 | | - | |
| gE5 | | - | |

<Example 11>

The polymer of Example 11 includes a polyester, the polyester includes an end-capped polycarbonate ester, and an end of the end-capped polycarbonate ester includes an inert group. The polyester of Example 11 is polymerized by at least two monomers, each of the monomers is selected from a group consisting of a carbonate ester and a polyol, and the carbonate ester can have a structure as shown in Formula (I).

Table 13A shows the properties of the polymer of Example 11.

| Table 13A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 543 |
| | VC (cP) | | 57 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 191 |
| | Ds (g/cm) | | 1.14 |
| | Fpp (°C) | ASTM D93 | - |
| | | ASTM D7094 | - |
| End-capped polycarbonate ester | cMn (Dalton) | | 543 |
| | cVC (cP) | | 57 |

Table 13B shows the properties of an electrolyte including the polymer of Example 11, the properties of a battery including the electrolyte, and the analyzing values of the performance of the battery.

| Table 13B | |
|---|---|
| Electrolyte | |
| Lithium salt | LiTFSI |
| Concentration of lithium salt (M) | 1.8 |
| Ci ($S\cdot cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/$cm^3$) | V1 | Discharging | - |
| | | Charging | - |
| | V2 | Discharging | - |
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | |
| | | Charging | - |
| | V8 | Discharging | - |
| | | Charging | |
| | V9 | Discharging | - |
| | | Charging | - |

(continued)

| Battery | | | |
|---|---|---|---|
| | V10 | Discharging | - |
| | | Charging | - |
| | V11 | Discharging | - |
| | | Charging | - |
| | V12 | Discharging | - |
| | | Charging | - |
| | V13 | Discharging | - |
| | | Charging | - |
| | V14 | Discharging | - |
| | | Charging | - |
| | V15 | Discharging | - |
| | | Charging | |
| | V16 | Discharging | - |
| | | Charging | - |
| | V17 | Discharging | - |
| | | Charging | - |
| | V18 | Discharging | - |
| | | Charging | - |
| | V19 | Discharging | - |
| | | Charging | - |
| | V20 | Discharging | - |
| | | Charging | - |
| | V50 | Discharging | - |
| | | Charging | - |
| | V100 | Discharging | - |
| | | Charging | - |
| | V200 | Discharging | - |
| | | Charging | |
| | V230 | Discharging | |
| | | Charging | - |
| | V250 | Discharging | - |
| | | Charging | - |
| | V280 | Discharging | - |
| | | Charging | - |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | |
| | | Charging | - |

(continued)

| Battery | | | | |
|---|---|---|---|---|
| VMax | | | - | |
| V10/V5 | | | V250/V5 | |
| V50/V5 | - | | V280/V5 | - |
| V200/V5 | | - | V300/V5 | - |
| V230/V5 | | - | V350/V5 | - |
| Coulombic efficiency (%) | 1st | | - | |
| | 2nd | | - | |
| | 3rd | | | |
| | 4th | | - | |
| | 5th | | | |
| | 6th | | | |
| | 7th | | - | |
| | 8th | | - | |
| | 9th | | - - | |
| | 10th | | | |
| | 11th | | - | |
| | 12th | | - | |
| | 13th | | - | |
| | 14th | | - | |
| | 15th | | | |
| | 16th | | - | |
| | 17th | | - | |
| | 18th | | - | |
| | 19th | | - | |
| | 20th | | - | |
| n90E20 | | | - | |
| V5T60/V5T25 | | | - | |
| V15T60/V15T25 | | | - | |
| V100T60/V100T25 | | | - | |
| vE5 | | | - | |
| gE5 | | | - | |

<Example 12>

The polymer of Example 12 includes a polyester, the polyester includes an end-capped polycarbonate ester, and an end of the end-capped polycarbonate ester includes an inert group. The polyester of Example 12 is polymerized by at least two monomers, each of the monomers is selected from a group consisting of a carbonate ester and a polyol, and the carbonate ester can have a structure as shown in Formula (I).

Table 14A shows the properties of the polymer of Example 12.

| Table 14A | | | |
|---|---|---|---|
| Polymeric | End-capping method | | Esterification capping |
| precursor | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 723 |
| | VC (cP) | | 59.2 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 210 |
| | Ds (g/cm) | | 1.13 |
| | Fpp (°C) | ASTM D93 | - |
| | | ASTM D7094 | - |
| End-capped polycarbonate ester | cMn (Dalton) | | 723 |
| | cVC (cP) | | 59.2 |

Table 14B shows the properties of an electrolyte including the polymer of Example 12, the properties of a battery including the electrolyte, and the analyzing values of the performance of the battery.

| Table 14B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | 25 |
| C-rate (C) | 1.0 |

(continued)

| Battery | | | |
|---|---|---|---|
| Discharge volumetric capacity ($mAh/cm^3$) | V1 | Discharging | 63.1 |
| | | Charging | 67.0 |
| | V2 | Discharging | 62.6 |
| | | Charging | 62.8 |
| | V3 | Discharging | 62.2 |
| | | Charging | 62.2 |
| | V4 | Discharging | 62.0 |
| | | Charging | 62.0 |

(continued)

| Battery | | | |
|---|---|---|---|
| | V5 | Discharging | 61.8 |
| | | Charging | 61.9 |
| | V6 | Discharging | 61.6 |
| | | Charging | 61.6 |
| | V7 | Discharging | 61.5 |
| | | Charging | 61.5 |
| | V8 | Discharging | 61.3 |
| | | Charging | 61.4 |
| | V9 | Discharging | 60.2 |
| | | Charging | 60.8 |
| | V10 | Discharging | 60.2 |
| | | Charging | 60.2 |
| | V11 | Discharging | 60.6 |
| | | Charging | 60.2 |
| | V12 | Discharging | 59.4 |
| | | Charging | 59.9 |
| | V13 | Discharging | 60.1 |
| | | Charging | 60.0 |
| | V14 | Discharging | 60.2 |
| | | Charging | 60.2 |
| | V15 | Discharging | 60.3 |
| | | Charging | 60.5 |
| | V16 | Discharging | 59.4 |
| | | Charging | 59.4 |
| | V17 | Discharging | 59.7 |
| | | Charging | 59.8 |
| | V18 | Discharging | 60.4 |
| | | Charging | 59.9 |
| | V19 | Discharging | 60.7 |
| | | Charging | 60.6 |
| | V20 | Discharging | 60.6 |
| | | Charging | 60.7 |
| | V50 | Discharging | 56.7 |
| | | Charging | 56.2 |
| | V100 | Discharging | 45.1 |
| | | Charging | 45.3 |
| | V200 | Discharging | × |
| | | Charging | × |
| | V230 | Discharging | × |
| | | Charging | × |
| | V250 | Discharging | × |
| | | Charging | × |
| | V280 | Discharging | × |
| | | Charging | × |
| | V300 | Discharging | × |
| | | Charging | × |
| | V350 | Discharging | × |

(continued)

| Battery | | | | |
|---|---|---|---|---|
| | | | Charging | × |
| | | V400 | Discharging | × |
| | | | Charging | × |
| | | V450 | Discharging | × |
| | | | Charging | × |
| | | V500 | Discharging | × |
| | | | Charging | × |
| VMax | | | 63.1 | |
| V10/V5 | | 0.97 | V250/V5 | × |
| V50/V5 | | 0.92 | V280/V5 | × |
| V200/V5 | | × | V300/V5 | × |
| V230/V5 | | × | V350/V5 | × |
| Coulombic efficiency (%) | 1st | | 94.2 | |
| | 2nd | | 99.7 | |
| | 3rd | | 99.9 | |
| | 4th | | 99.9 | |
| | 5th | | 99.9 | |
| | 6th | | 99.9 | |
| | 7th | | 99.9 | |
| | 8th | | 99.9 | |
| | 9th | | 99.1 | |
| | 10th | | 99.9 | |
| | 11th | | 100.7 | |
| | 12th | | 99.0 | |
| | 13th | | 100.3 | |
| | 14th | | 100.0 | |
| | 15th | | 99.6 | |
| | 16th | | 100.1 | |
| | 17th | | 99.8 | |
| | 18th | | 100.8 | |
| | 19th | | 100.2 | |
| | 20th | | 99.9 | |
| n90E20 | | | 20 | |
| V5T60/V5T25 | | | - | |
| V15T60/V15T25 | | | - | |
| V100T60/V100T25 | | | - | |
| vE5 | | | - | |
| gE5 | | | - | |

<Example 13>

The polymer of Example 13 includes a polyester, the polyester includes an end-capped polycarbonate ester, and an end of the end-capped polycarbonate ester includes an inert group. The polyester of Example 13 is polymerized by at least two monomers, each of the monomers is selected from a group consisting of a carbonate ester and a polyol, and the carbonate ester can have a structure as shown in Formula (I).

Table 15A shows the properties of the polymer of Example 13.

| Table 15A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 723 |
| | VC (cP) | | 59.2 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 210 |
| | Ds (g/cm) | | 1.13 |
| | Fpp (°C) | ASTM D93 | - |
| | | ASTM D7094 | - |
| End-capped polycarbonate ester | cMn (Dalton) | | 723 |
| | cVC (cP) | | 59.2 |

Table 15B shows the properties of an electrolyte including the polymer of Example 13, the properties of a battery including the electrolyte, and the analyzing values of the performance of the battery.

| Table 15B | |
|---|---|
| Electrolyte | |
| Lithium salt | LiTFSI |
| Concentration of lithium salt (M) | 1.8 |
| Ci ($S\cdot cm^{-1}$) | - |
| Fpe (°C) | - |
| Battery | |
| Temperature (°C) | 60 |
| C-rate (C) | 1.0 |

(continued)

| Battery | | | |
|---|---|---|---|
| Discharge volumetric capacity (mAh/cm$^3$) | V1 | Discharging | 70.9 |
| | | Charging | 71.1 |
| | V2 | Discharging | 70.8 |
| | | Charging | 71.7 |
| | V3 | Discharging | 70.6 |
| | | Charging | 71.3 |
| | V4 | Discharging | 70.3 |
| | | Charging | 70.9 |
| | V5 | Discharging | 70.1 |
| | | Charging | 70.5 |
| | V6 | Discharging | 69.9 |
| | | Charging | 70.3 |
| | V7 | Discharging | 69.7 |
| | | Charging | 70.1 |
| | V8 | Discharging | 69.5 |
| | | Charging | 69.8 |
| | V9 | Discharging | 69.1 |
| | | Charging | 69.5 |
| | V10 | Discharging | 68.8 |
| | | Charging | 69.2 |
| | V11 | Discharging | 68.4 |
| | | Charging | 68.8 |
| | V12 | Discharging | 68.0 |
| | | Charging | 68.4 |
| | V13 | Discharging | 67.7 |
| | | Charging | 68.0 |
| | V14 | Discharging | 67.3 |
| | | Charging | 67.7 |
| | V15 | Discharging | 66.9 |
| | | Charging | 67.4 |
| | V16 | Discharging | 66.6 |
| | | Charging | 67.0 |
| | V17 | Discharging | 66.2 |
| | | Charging | 66.7 |
| | V18 | Discharging | 65.8 |
| | | Charging | 66.3 |
| | V19 | Discharging | 65.4 |
| | | Charging | 65.8 |
| | V20 | Discharging | 65.0 |
| | | Charging | 65.4 |
| | V50 | Discharging | 59.5 |
| | | Charging | 59.5 |
| | V100 | Discharging | 41.1 |
| | | Charging | 41.6 |
| | V200 | Discharging | × |
| | | Charging | × |

(continued)

| Battery | | | | |
|---|---|---|---|---|
| | | V230 | Discharging | × |
| | | | Charging | × |
| | | V250 | Discharging | × |
| | | | Charging | × |
| | | V280 | Discharging | × |
| | | | Charging | × |
| | | V300 | Discharging | × |
| | | | Charging | × |
| | | V350 | Discharging | × |
| | | | Charging | × |
| | | V400 | Discharging | × |
| | | | Charging | × |
| | | V450 | Discharging | × |
| | | | Charging | × |
| | | V500 | Discharging | × |
| | | | Charging | × |
| VMax | | | 70.9 | |
| V10/V5 | | 0.98 | V250/V5 | × |
| V50/V5 | | 0.85 | V280/V5 | × |
| V200/V5 | | × | V300/V5 | × |
| V230/V5 | | × | V350/V5 | × |
| Coulombic efficiency (%) | 1st | | 99.7 | |
| | 2nd | | 98.7 | |
| | 3rd | | 99.0 | |
| | 4th | | 99.2 | |
| | 5th | | 99.4 | |
| | 6th | | 99.5 | |
| | 7th | | 99.4 | |
| | 8th | | 99.5 | |
| | 9th | | 99.4 | |
| | 10th | | 99.4 | |
| | 11th | | 99.5 | |
| | 12th | | 99.5 | |
| | 13th | | 99.5 | |
| | 14th | | 99.4 | |
| | 15th | | 99.4 | |
| | 16th | | 99.3 | |
| | 17th | | 99.3 | |
| | 18th | | 99.3 | |
| | 19th | | 99.3 | |
| | 20th | | 99.3 | |
| n90E20 | | | 20 | |
| V5T60/V5T25 | | | 1.13 | |
| V15T60/V15T25 | | | 1.11 | |
| V100T60/V100T25 | | | 0.91 | |
| vE5 | | | - | |

(continued)

| Battery | |
|---|---|
| gE5 | - |

Wherein, V5T25 is taken from a discharge volumetric capacity of a fifth cycle in Example 12, V15T25 is taken from a discharge volumetric capacity of a fifteenth cycle in Example 12, V100T25 is taken from a discharge volumetric capacity of a hundredth cycle in Example 12, V5T60 is taken from a discharge volumetric capacity of a fifth cycle in Example 13, V15T60 is taken from a discharge volumetric capacity of a fifteenth cycle in Example 13, and V100T60 is taken from a discharge volumetric capacity of a hundredth cycle in Example 13.

<Example 14>

The polymer of Example 14 includes a polyester, the polyester includes an end-capped polycarbonate ester, and an end of the end-capped polycarbonate ester includes an inert group. The polyester of Example 14 is polymerized by at least two monomers, each of the monomers is selected from a group consisting of a carbonate ester and a polyol, and the carbonate ester can have a structure as shown in Formula (I).

Table 16A shows the properties of the polymer of Example 14.

Table 16A

| | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 723 |
| | VC (cP) | | 59.2 |
| | Within the temperature range from -80°C to 80°C | Whether glass transition occurs | N |
| | | Is there a melting point | N |
| | | Is there any | N |
| | | crystallization | |
| | Tm (°C) | | - |
| | Td (°C) | | 210 |
| | Ds (g/cm) | | 1.13 |
| | Fpp (°C) | ASTM D93 | - |
| | | ASTM D7094 | - |
| End-capped polycarbonate ester | cMn (Dalton) | | 723 |
| | cVC (cP) | | 59.2 |

Table 16B shows the properties of an electrolyte including the polymer of Example 14, the properties of a battery including the electrolyte, and the analyzing values of the performance of the battery.

| Table 16B | | | |
|---|---|---|---|
| Electrolyte | | | |
| Lithium salt | | LiTFSI | |
| Concentration of lithium salt (M) | | 1.8 | |
| Ci ($S \cdot cm^{-1}$) | | - | |
| Fpe (°C) | | - | |
| Battery | | | |
| Temperature (°C) | | 60 | |
| C-rate (C) | | 1.0 | |
| Discharge volumetric capacity ($mAh/cm^3$) | V1 | Discharging | 78.4 |
| | | Charging | 81.6 |
| | V2 | Discharging | 77.6 |
| | | Charging | 77.7 |
| | V3 | Discharging | 77.6 |
| | | Charging | 77.7 |
| | V4 | Discharging | 77.6 |
| | | Charging | 77.7 |
| | V5 | Discharging | 77.6 |
| | | Charging | 77.7 |
| | V6 | Discharging | 77.6 |
| | | Charging | 77.6 |
| | V7 | Discharging | 77.6 |
| | | Charging | 77.7 |
| | V8 | Discharging | 77.6 |
| | | Charging | 77.7 |
| | V9 | Discharging | 77.6 |
| | | Charging | 77.7 |
| | V10 | Discharging | 77.6 |
| | | Charging | 77.7 |
| | V11 | Discharging | 77.6 |
| | | Charging | 77.7 |
| | V12 | Discharging | 77.7 |

(continued)

| Battery | | | |
|---|---|---|---|
| | | Charging | 77.8 |
| | V13 | Discharging | 77.7 |
| | | Charging | 77.8 |
| | V14 | Discharging | 77.7 |
| | | Charging | 77.8 |
| | V15 | Discharging | 77.7 |
| | | Charging | 77.8 |
| | V16 | Discharging | 77.8 |
| | | Charging | 77.8 |
| | V17 | Discharging | 77.8 |
| | | Charging | 77.9 |
| | V18 | Discharging | 77.8 |
| | | Charging | 77.9 |
| | V19 | Discharging | 77.8 |
| | | Charging | 77.9 |
| | V20 | Discharging | 77.8 |
| | | Charging | 77.9 |
| | V50 | Discharging | 77.8 |
| | | Charging | 77.8 |
| | V100 | Discharging | 76.9 |
| | | Charging | 77.0 |
| | V200 | Discharging | 74.3 |
| | | Charging | 74.3 |
| | V230 | Discharging | 73.2 |
| | | Charging | 73.3 |
| | V250 | Discharging | 72.0 |
| | | Charging | 72.2 |
| | V280 | Discharging | 70.2 |
| | | Charging | 70.4 |
| | V300 | Discharging | 66.9 |
| | | Charging | 67.1 |
| | V350 | Discharging | 56.9 |
| | | Charging | 57.2 |
| | V400 | Discharging | × |
| | | Charging | × |
| | V450 | Discharging | × |
| | | Charging | × |
| | V500 | Discharging | × |
| | | Charging | × |

(continued)

| Battery | | | |
|---|---|---|---|
| VMax | | 78.4 | |
| V10/V5 | 1.00 | V250/V5 | 0.93 |
| V50/V5 | 1.00 | V280/V5 | 0.90 |
| V200/V5 | 0.96 | V300/V5 | 0.86 |
| V230/V5 | 0.94 | V350/V5 | 0.73 |
| Coulombic efficiency (%) | 1st | 96.1 | |
| | 2nd | 99.9 | |
| | 3rd | 99.9 | |
| | 4th | 99.9 | |
| | 5th | 99.9 | |
| | 6th | 99.9 | |
| | 7th | 99.9 | |
| | 8th | 99.9 | |
| | 9th | 99.9 | |
| | 10th | 99.9 | |
| | 11th | 99.9 | |
| | 12th | 99.9 | |
| | 13th | 99.9 | |
| | 14th | 99.9 | |
| | 15th | 99.9 | |
| | 16th | 99.9 | |
| | 17th | 99.9 | |
| | 18th | 99.9 | |
| | 19th | 99.9 | |
| | 20th | 99.9 | |
| n90E20 | 20 | | |
| V5T60/V5T25 | 1.26 | | |
| V15T60/V15T25 | 1.29 | | |
| V100T60/V100T25 | 1.71 | | |
| vE5 | - | | |
| gE5 | - | | |

Wherein, V5T25 is taken from the discharge volumetric capacity of the fifth cycle in Example 12, V15T25 is taken from the discharge volumetric capacity of the fifteenth cycle in Example 12, V100T25 is taken from the discharge volumetric capacity of the hundredth cycle in Example 12, V5T60 is taken from a discharge volumetric capacity of a fifth cycle in Example 14, V15T60 is taken from a discharge volumetric capacity of a fifteenth cycle in Example 14, and V100T60 is taken from a discharge volumetric capacity of a hundredth cycle in Example 14.

<Example 15>

The polymer of Example 15 includes a polyester, the polyester includes an end-capped polycarbonate ester, and an end of the end-capped polycarbonate ester includes an inert group. The polyester of Example 15 is polymerized

by at least two monomers, each of the monomers is selected from a group consisting of a carbonate ester and a polyol, and the carbonate ester can have a structure as shown in Formula (I).

Table 17A shows the properties of the polymer of Example 15.

Table 17A

| | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 586 |
| | VC (cP) | | 21.2 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 154 |
| | Ds (g/cm) | | 1.10 |
| | Fpp (°C) | ASTM D93 | - |
| | | ASTM D7094 | - |
| End-capped polycarbonate ester | cMn (Dalton) | | 586 |
| | cVC (cP) | | 21.2 |

Table 17B shows the properties of an electrolyte including the polymer of Example 15, the properties of a battery including the electrolyte, and the analyzing values of the performance of the battery.

Table 17B

| | |
|---|---|
| Electrolyte | |
| Lithium salt | LiTFSI |
| Concentration of lithium salt (M) | 1.8 |
| Ci ($S{\cdot}cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/cm$^3$) | V1 | Discharging | - |
| | | Charging | - |
| | V2 | Discharging | - |
| | | Charging | |
| | V3 | Discharging | - |
| | | Charging | - |
| | V4 | Discharging | - |
| | | Charging | - |
| | V5 | Discharging | - |
| | | Charging | |
| | V6 | Discharging | - |
| | | Charging | - |
| | V7 | Discharging | |
| | | Charging | - |
| | V8 | Discharging | - |
| | | Charging | - |
| | V9 | Discharging | - |
| | | Charging | |
| | V10 | Discharging | - |
| | | Charging | - |
| | V11 | Discharging | |
| | | Charging | - |
| | V12 | Discharging | - |
| | | Charging | - |
| | V13 | Discharging | - |
| | | Charging | - |
| | V14 | Discharging | - |
| | | Charging | - |
| | V15 | Discharging | - |
| | | Charging | - |
| | V16 | Discharging | |
| | | Charging | |
| | V17 | Discharging | - |
| | | Charging | - |
| | V18 | Discharging | - |
| | | Charging | - |
| | V19 | Discharging | - |
| | | Charging | |
| | V20 | Discharging | |
| | | Charging | |
| | V50 | Discharging | - |
| | | Charging | - |
| | V100 | Discharging | |
| | | Charging | - |

(continued)

| Battery | | | |
|---|---|---|---|
| | V200 | Discharging | - |
| | | Charging | - |
| | V230 | Discharging | - |
| | | Charging | - |
| | V250 | Discharging | - |
| | | Charging | - |
| | V280 | Discharging | - |
| | | Charging | - |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |
| VMax | | - | |
| V10/V5 | - | V250/V5 | - |
| V50/V5 | - | V280N5 | - |
| V200/V5 | - | V300/V5 | - |
| V230/V5 | - | V350/V5 | - |
| Coulombic efficiency (%) | 1st | - | |
| | 2nd | - | |
| | 3rd | - | |
| | 4th | - | |
| | 5th | - | |
| | 6th | - | |
| | 7th | - | |
| | 8th | - | |
| | 9th | | |
| | 10th | - | |
| | 11th | | |
| | 12th | | |
| | 13th | - | |
| | 14th | - | |
| | 15th | - | |
| | 16th | - | |
| | 17th | - | |
| | 18th | - | |
| | 19th | - | |
| | 20th | | |
| n90E20 | | - | |

(continued)

<table>
<tr><td colspan="3">Battery</td></tr>
<tr><td colspan="2">V5T60/V5T25</td><td>-</td></tr>
<tr><td colspan="2">V15T60/V15T25</td><td>-</td></tr>
<tr><td colspan="2">V100T60/V100T25</td><td>-</td></tr>
<tr><td>vE5</td><td colspan="2">-</td></tr>
<tr><td>gE5</td><td colspan="2">-</td></tr>
</table>

<Example 16>

The polymer of Example 16 includes a polyester, the polyester includes an end-capped polycarbonate ester, and an end of the end-capped polycarbonate ester includes an inert group. The polyester of Example 16 is polymerized by at least two monomers, each of the monomers is selected from a group consisting of a carbonate ester and a polyol, and the carbonate ester can have a structure as shown in Formula (I).

Table 18A shows the properties of the polymer of Example 16.

<table>
<tr><td colspan="4">Table 18A</td></tr>
<tr><td rowspan="9">Polymeric precursor</td><td colspan="2">End-capping method</td><td>Esterification capping</td></tr>
<tr><td rowspan="4">Polyol</td><td>Monomer 1</td><td>Butane-1,4-diol</td></tr>
<tr><td>Ncp</td><td>4</td></tr>
<tr><td>Monomer 2</td><td>-</td></tr>
<tr><td>Ncp</td><td>-</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="10">Polyester</td><td colspan="2">Mn (Dalton)</td><td>212</td></tr>
<tr><td colspan="2">VC (cP)</td><td>11.6</td></tr>
<tr><td rowspan="3">Within the temperature range from -80°C to 80°C</td><td>Whether glass transition occurs</td><td>N</td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>139</td></tr>
<tr><td colspan="2">Ds (g/cm)</td><td>1.12</td></tr>
<tr><td rowspan="2">Fpp (°C)</td><td>ASTM D93</td><td>-</td></tr>
<tr><td>ASTM D7094</td><td>-</td></tr>
<tr><td rowspan="2">End-capped polycarbonate ester</td><td colspan="2">cMn (Dalton)</td><td>212</td></tr>
<tr><td colspan="2">cVC (cP)</td><td>11.6</td></tr>
</table>

Table 18B shows the properties of an electrolyte including the polymer of Example 16, the properties of a battery including the electrolyte, and the analyzing values of the performance of the battery.

| Table 18B | |
|---|---|
| Electrolyte | |
| Lithium salt | LiTFSI |
| Concentration of lithium salt (M) | 1.8 |
| Ci ($S\cdot cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/cm$^3$) | V1 | Discharging | - |
| | | Charging | - |
| | V2 | Discharging | - |
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | - |
| | | Charging | |
| | V8 | Discharging | |
| | | Charging | - |
| | V9 | Discharging | - |
| | | Charging | - |
| | V10 | Discharging | - |
| | | Charging | - |
| | V11 | Discharging | - |
| | | Charging | - |
| | V12 | Discharging | - |
| | | Charging | |
| | V13 | Discharging | - |
| | | Charging | - |
| | V14 | Discharging | - |
| | | Charging | - |
| | V15 | Discharging | - |
| | | Charging | - |
| | V16 | Discharging | - |
| | | Charging | - |

(continued)

| Battery | | | |
|---|---|---|---|
| | V17 | Discharging | - |
| | | Charging | - |
| | V18 | Discharging | - |
| | | Charging | - |
| | V19 | Discharging | - |
| | | Charging | - |
| | V20 | Discharging | - |
| | | Charging | - |
| | V50 | Discharging | - |
| | | Charging | - |
| | V100 | Discharging | - |
| | | Charging | - |
| | V200 | Discharging | - |
| | | Charging | - |
| | V230 | Discharging | - |
| | | Charging | |
| | V250 | Discharging | - |
| | | Charging | |
| | V280 | Discharging | - |
| | | Charging | - |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |
| VMax | | - | |
| V10/V5 | - | V250/V5 | - |
| V50/V5 | - | V280/V5 | - |
| V200/V5 | - | V300/V5 | - |
| V230/V5 | - | V350/V5 | - |

(continued)

| Battery | | |
|---|---|---|
| Coulombic efficiency (%) | 1st | - |
| | 2nd | - |
| | 3rd | - |
| | 4th | - |
| | 5th | |
| | 6th | - |
| | 7th | |
| | 8th | - |
| | 9th | - |
| | 10th | - |
| | 11th | - |
| | 12th | - |
| | 13th | - |
| | 14th | - |
| | 15th | - |
| | 16th | - |
| | 17th | - |
| | 18th | - |
| | 19th | |
| | 20th | - |
| n90E20 | | - |
| V5T60/V5T25 | | |
| V15T60/V15T25 | | - |
| V100T60/V100T25 | | - |
| vE5 | | - |
| gE5 | | - |

<Example 17>

The polymer of Example 17 includes a polyester, the polyester includes an end-capped polycarbonate ester, and an end of the end-capped polycarbonate ester includes an inert group. The polyester of Example 17 is polymerized by at least two monomers, each of the monomers is selected from a group consisting of a carbonate ester and a polyol, and the carbonate ester can have a structure as shown in Formula (I).

Table 19A shows the properties of the polymer of Example 17.

| Table 19A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 334 |
| | VC (cP) | | 8.87 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 154 |
| | Ds (q/cm) | | 1.05 |
| | Fpp (°C) | ASTM D93 | - |
| | | ASTM D7094 | - |
| End-capped polycarbonate ester | cMn (Dalton) | | 334 |
| | cVC (cP) | | 8.87 |

Table 19B shows the properties of an electrolyte including the polymer of Example 17, the properties of a battery including the electrolyte, and the analyzing values of the performance of the battery.

| Table 19B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/$cm^3$) | V1 | Discharging | - |
| | | Charging | - |
| | V2 | Discharging | - |
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | - |
| | | Charging | - |
| | V8 | Discharging | - |
| | | Charging | - |
| | V9 | Discharging | - |
| | | Charging | - |
| | V10 | Discharging | - |
| | | Charging | - |
| | V11 | Discharging | - |
| | | Charging | - |

(continued)

| Battery | | | |
|---|---|---|---|
| | V12 | Discharging | - |
| | | Charging | - |
| | V13 | Discharging | - |
| | | Charging | - |
| | V14 | Discharging | - |
| | | Charging | - |
| | V15 | Discharging | - |
| | | Charging | - |
| | V16 | Discharging | - |
| | | Charging | - |
| | V17 | Discharging | - |
| | | Charging | |
| | V18 | Discharging | - |
| | | Charging | |
| | V19 | Discharging | - |
| | | Charging | - |
| | V20 | Discharging | |
| | | Charging | |
| | V50 | Discharging | |
| | | Charging | |
| | V100 | Discharging | - |
| | | Charging | - |
| | V200 | Discharging | |
| | | Charging | |
| | V230 | Discharging | - |
| | | Charging | |
| | V250 | Discharging | |
| | | Charging | |
| | V280 | Discharging | - |
| | | Charging | - |
| | V300 | Discharging | |
| | | Charging | |
| | V350 | Discharging | - |
| | | Charging | - |
| | V400 | Discharging | - |
| | | Charging | |
| | V450 | Discharging | - |
| | | Charging | - |
| | V500 | Discharging | - |
| | | Charging | - |

(continued)

| Battery | | | | |
|---|---|---|---|---|
| VMax | | | - | |
| V10/V5 | | - | V250/V5 | - |
| V50/V5 | | - | V280/V5 | - |
| V200/V5 | | - | V300/V5 | - |
| V230/V5 | | - | V350/V5 | - |
| Coulombic efficiency (%) | 1st | | | |
| | 2nd | - | | |
| | 3rd | - | | |
| | 4th | - | | |
| | 5th | - | | |
| | 6th | - | | |
| | 7th | - | | |
| | 8th | - | | |
| | 9th | - | | |
| | 10th | - | | |
| | 11th | - | | |
| | 12th | - | | |
| | 13th | - | | |
| | 14th | | | |
| | 15th | | | |
| | 16th | - | | |
| | 17th | - | | |
| | 18th | - | | |
| | 19th | - | | |
| | 20th | - | | |
| n90E20 | | - | | |
| V5T60/V5T25 | | - | | |
| V15T60/V15T25 | | - | | |
| V100T60A/100T25 | | | | |
| vE5 | | - | | |
| gE5 | | - | | |

<Example 18>

The polymer of Example 18 includes a polyester, the polyester includes an end-capped polycarbonate ester, and an end of the end-capped polycarbonate ester includes an inert group. The polyester of Example 18 is polymerized by at least two monomers, each of the monomers is selected from a group consisting of a carbonate ester and a polyol, and the carbonate ester can have a structure as shown in Formula (I).

Table 20A shows the properties of the polymer of Example 18.

| Table 20A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 352 |
| | VC (cP) | | 8.87 |
| | Within the temperature range from -80°C to 80°C | Whether glass transition occurs | N |
| | | Is there a melting point | N |
| | | Is there any crystallization | N |
| | Tm (°C) | | - |
| | Td (°C) | | 162 |
| | Ds (g/cm) | | 1.03 |
| | Fpp (°C) | ASTM D93 | - |
| | | ASTM D7094 | - |
| End-capped polycarbonate ester | cMn (Dalton) | | 352 |
| | cVC (cP) | | 8.87 |

Table 20B shows the properties of an electrolyte including the polymer of Example 18, the properties of a battery including the electrolyte, and the analyzing values of the performance of the battery.

| Table 20B | |
|---|---|
| Electrolyte | |
| Lithium salt | LiTFSI |
| Concentration of lithium salt (M) | 1.8 |
| Ci ($S \cdot cm^{-1}$) | - |
| Fpe (°C) | - |
| Battery | |
| Temperature (°C) | - |
| C-rate (C) | - |

(continued)

| Battery | | | |
|---|---|---|---|
| Discharge volumetric capacity (mAh/$cm^3$) | V1 | Discharging | - |
| | | Charging | - |
| | V2 | Discharging | - |
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |

(continued)

| Battery | | | |
|---|---|---|---|
| | V7 | Discharging | - |
| | | Charging | - |
| | V8 | Discharging | - |
| | | Charging | - |
| | V9 | Discharging | - |
| | | Charging | - |
| | V10 | Discharging | - |
| | | Charging | - |
| | V11 | Discharging | - |
| | | Charging | - |
| | V12 | Discharging | - |
| | | Charging | - |
| | V13 | Discharging | - |
| | | Charging | - |
| | V14 | Discharging | - |
| | | Charging | - |
| | V15 | Discharging | - |
| | | Charging | |
| | V16 | Discharging | - |
| | | Charging | - |
| | V17 | Discharging | - |
| | | Charging | - |
| | V18 | Discharging | |
| | | Charging | |
| | V19 | Discharging | - |
| | | Charging | - |
| | V20 | Discharging | - |
| | | Charging | - |
| | V50 | Discharging | - |
| | | Charging | - |
| | V100 | Discharging | - |
| | | Charging | - |
| | V200 | Discharging | - |
| | | Charging | - |
| | V230 | Discharging | - |
| | | Charging | - |
| | V250 | Discharging | - |
| | | Charging | - |
| | V280 | Discharging | - |
| | | Charging | - |
| | V300 | Discharging | - |
| | | Charging | - |
| | V350 | Discharging | - |
| | | Charging | |
| | V400 | Discharging | - |
| | | Charging | - |
| | V450 | Discharging | - |

(continued)

| Battery | | | |
|---|---|---|---|
| | | Charging | - |
| | V500 | Discharging | - |
| | | Charging | - |
| VMax | | | - |
| V10/V5 | - | V250/V5 | - |
| V50/V5 | - | V280/V5 | - |
| V200/V5 | - | V300/V5 | - |
| V230/V5 | - | V350/V5 | - |
| Coulombic efficiency (%) | 1st | | - |
| | 2nd | | - |
| | 3rd | | - |
| | 4th | | - |
| | 5th | | - |
| | 6th | | - |
| | 7th | | - |
| | 8th | | |
| | 9th | | |
| | 10th | | - |
| | 11th | | - |
| | 12th | | - |
| | 13th | | - |
| | 14th | | - |
| | 15th | | - |
| | 16th | | - |
| | 17th | | - |
| | 18th | | |
| | 19th | | - |
| | 20th | | - |
| n90E20 | | | - |
| V5T60/V5T25 | | | - |
| V15T60N15T25 | | | - |
| V100T60/V100T25 | | | - |
| vE5 | | | - |
| gE5 | | | - |

<Example 19>

The polymer of Example 19 includes a polyester, the polyester includes an end-capped polycarbonate ester, and an end of the end-capped polycarbonate ester includes an inert group. The polyester of Example 19 is polymerized by at least two monomers, each of the monomers is selected from a group consisting of a carbonate ester and a polyol, and the carbonate ester can have a structure as shown in Formula (I).

Table 21A shows the properties of the polymer of Example 19.

| Table 21A | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 40 |
| | Within the temperature range from -80°C to 80°C | Whether glass transition occurs | |
| | | Is there a melting point | |
| | | Is there any crystallization | |
| | Tm (°C) | | - |
| | Td (°C) | | 112 |
| | Ds (g/cm) | | 1.03 |
| | Fpp (°C) | ASTM D93 | - |
| | | ASTM D7094 | - |
| End-capped polycarbonate ester | cMn (Dalton) | | - |
| | cVC (cP) | | 40 |

Table 21B shows the properties of an electrolyte including the polymer of Example 19, the properties of a battery including the electrolyte, and the analyzing values of the performance of the battery.

| Table 21B | | | |
|---|---|---|---|
| Electrolyte | | | |
| Lithium salt | | LiTFSI | |
| Concentration of lithium salt (M) | | 1.8 | |
| Ci ($S \cdot cm^{-1}$) | | 5.79×10-8 | |
| Fpe (°C) | | - | |
| Battery | | | |
| Temperature (°C) | | - | |
| C-rate (C) | | - | |
| Discharge volumetric capacity ($mAh/cm^3$) | V1 | Discharging | - |
| | | Charging | - |
| | V2 | Discharging | - |

(continued)

| Battery | | | |
|---|---|---|---|
| | | Charging | - |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | - |
| | | Charging | - |
| | V8 | Discharging | - |
| | | Charging | - |
| | V9 | Discharging | - |
| | | Charging | - |
| | V10 | Discharging | - |
| | | Charging | |
| | V11 | Discharging | - |
| | | Charging | - |
| | V12 | Discharging | |
| | | Charging | - |
| | V13 | Discharging | - |
| | | Charging | - |
| | V14 | Discharging | - |
| | | Charging | - |
| | V15 | Discharging | - |
| | | Charging | - |
| | V16 | Discharging | - |
| | | Charging | - |
| | V17 | Discharging | - |
| | | Charging | - |
| | V18 | Discharging | - |
| | | Charging | - |
| | V19 | Discharging | - |
| | | Charging | - |
| | V20 | Discharging | - |
| | | Charging | - |
| | V50 | Discharging | - |
| | | Charging | - |
| | V100 | Discharging | - |
| | | Charging | - |
| | V200 | Discharging | - |
| | | Charging | - |
| | V230 | Discharging | |
| | | Charging | - |
| | V250 | Discharging | - |
| | | Charging | - |

(continued)

| Battery | | | |
|---|---|---|---|
| | V280 | Discharging | - |
| | | Charging | - |
| | V300 | Discharging | - |
| | | Charging | - |
| | V350 | Discharging | - |
| | | Charging | - |
| | V400 | Discharging | - |
| | | Charging | - |
| | V450 | Discharging | - |
| | | Charging | - |
| | V500 | Discharging | - |
| | | Charging | - |
| VMax | | | - |
| V10/V5 | - | V250/V5 | |
| V50/V5 | - | V280/V5 | - |
| V200/V5 | - | V300/V5 | - |
| V230/V5 | - | V350/V5 | - |
| Coulombic efficiency (%) | 1st | | - |
| | 2nd | | |
| | 3rd | | - |
| | 4th | | - |
| | 5th | | - |
| | 6th | | - |
| | 7th | | - |
| | 8th | | - |
| | 9th | | |
| | 10th | | |
| | 11th | | |
| | 12th | | - |
| | 13th | | |
| | 14th | | |
| | 15th | | |
| | 16th | | - |
| | 17th | | - |
| | 18th | | - |
| | 19th | | |
| | 20th | | - |
| n90E20 | | | - |
| V5T60/V5T25 | | | - |
| V15T60/V15T25 | | | - |
| V100T60/V100T25 | | | - |
| vE5 | | | - |
| gE5 | | | - |

<Example 20>

The polymer of Example 20 includes a polyester, the polyester includes an end-capped polycarbonate ester,

and an end of the end-capped polycarbonate ester includes an inert group. The polyester of Example 20 is polymerized by at least two monomers, each of the monomers is selected from a group consisting of a carbonate ester and a polyol, and the carbonate ester can have a structure as shown in Formula (I).

Table 22A shows the properties of the polymer of Example 20.

Table 22A

| | | | |
|---|---|---|---|
| Polymeric precursor | End-capping method | | Esterification capping |
| | Polyol | Monomer 1 | Butane-1,4-diol |
| | | Ncp | 4 |
| | | Monomer 2 | - |
| | | Ncp | |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 95 |
| | Within the temperature range from -80°C to 80°C | Whether glass transition occurs | |
| | | Is there a melting point | |
| | | Is there any crystallization | |
| | Tm (°C) | | - |
| | Td (°C) | | 179 |
| | Ds (g/cm) | | 1.13 |
| | Fpp (°C) | ASTM D93 | - |
| | | ASTM D7094 | - |
| End-capped polycarbonate ester | cMn (Dalton) | | - |
| | cVC (cP) | | 95 |

Table 22B shows the properties of an electrolyte including the polymer of Example 20, the properties of a battery including the electrolyte, and the analyzing values of the performance of the battery.

Table 22B

| | |
|---|---|
| Electrolyte | |
| Lithium salt | LiTFSI |
| Concentration of lithium salt (M) | 1.8 |
| Ci ($S\cdot cm^{-1}$) | 7.25×10-6 |
| Fpe (°C) | - |
| Battery | |
| Temperature (°C) | - |
| C-rate (C) | - |

(continued)

| Battery | | | |
|---|---|---|---|
| Discharge volumetric capacity (mAh/$cm^3$) | V1 | Discharging | - |
| | | Charging | - |
| | V2 | Discharging | |
| | | Charging | |
| | V3 | Discharging | - |
| | | Charging | - |
| | V4 | Discharging | - |
| | | Charging | - |
| | V5 | Discharging | - |
| | | Charging | - |
| | V6 | Discharging | - |
| | | Charging | - |
| | V7 | Discharging | - |
| | | Charging | - |
| | V8 | Discharging | - |
| | | Charging | - |
| | V9 | Discharging | - |
| | | Charging | - |
| | V10 | Discharging | - |
| | | Charging | - |
| | V11 | Discharging | - |
| | | Charging | - |
| | V12 | Discharging | - |
| | | Charging | - |
| | V13 | Discharging | - |
| | | Charging | - |
| | V14 | Discharging | - |
| | | Charging | - |
| | V15 | Discharging | - |
| | | Charging | - |
| | V16 | Discharging | - |
| | | Charging | - |
| | V17 | Discharging | - |
| | | Charging | - |
| | V18 | Discharging | - |
| | | Charging | - |
| | V19 | Discharging | |
| | | Charging | - |
| | V20 | Discharging | - |

(continued)

| Battery | | | |
|---|---|---|---|
| | | Charging | - |
| | V50 | Discharging | - |
| | | Charging | - |
| | V100 | Discharging | - |
| | | Charging | - |
| | V200 | Discharging | - |
| | | Charging | |
| | V230 | Discharging | - |
| | | Charging | |
| | V250 | Discharging | - |
| | | Charging | - |
| | V280 | Discharging | |
| | | Charging | |
| | V300 | Discharging | - |
| | | Charging | - |
| | V350 | Discharging | - |
| | | Charging | - |
| | V400 | Discharging | - |
| | | Charging | |
| | V450 | Discharging | - |
| | | Charging | - |
| | V500 | Discharging | - |
| | | Charging | - |
| VMax | | | |
| V10/V5 | - | V250/V5 | - |
| V50/V5 | - | V280/V5 | - |
| V200/V5 | - | V300/V5 | - |
| V230/V5 | - | V350/V5 | - |

(continued)

| Battery | | |
|---|---|---|
| Coulombic efficiency (%) | 1st | - |
| | 2nd | - |
| | 3rd | - |
| | 4th | - |
| | 5th | - |
| | 6th | - |
| | 7th | - |
| | 8th | - |
| | 9th | - |
| | 10th | - |
| | 11th | - |
| | 12th | - |
| | 13th | - |
| | 14th | - |
| | 15th | - |
| | 16th | - |
| | 17th | - |
| | 18th | - |
| | 19th | - |
| | 20th | - |
| n90E20 | | - |
| V5T60/V5T25 | | |
| V15T60/V15T25 | | - |
| V100T60/V100T25 | | - |
| vE5 | | - |
| gE5 | | - |

<Example 21>

The polymer of Example 21 includes a polyester, and the polyester includes a polycarbonate ester. The polyester of Example 21 is polymerized by at least two monomers, each of the monomers is selected from a group consisting of a carbonate ester and a polyol, and the carbonate ester can have a structure as shown in Formula (I).

Table 23 shows the properties of an electrolyte including the polymer of Example 21 and the properties of a battery including the electrolyte.

| Table 23 | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | |
| | Carbonate ester | Monomer 3 | Diethyl carbonate) |
| | | Ncc1 | 2 |
| | | Ncc2 | 2 |
| | | Ncc1 + Ncc2 | 4 |
| Polyester | Mn (Dalton) | | 690 |
| | VC (cP) | | 159 |
| | Within the temperature range from -80°C to 80°C | Whether glass transition occurs | |
| | | Is there a melting point | Y |
| | | Is there any crystallization | N |
| | Tm (°C) | | 19 |
| | Td (°C) | | - |
| | Ds (g/cm) | | - |
| | Fpp (°C) | ASTM D93 | - |
| | | ASTM D7094 | - |
| Polycarbonate ester | eMn (Dalton) | | 690 |
| | eVC (cP) | | 159 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 22>

The polymer of Example 22 includes a polyester, and the polyester includes a polycarbonate ester. The polyester of Example 22 is polymerized by at least two monomers, each of the monomers is selected from a group consisting of a carbonate ester and a polyol, and the carbonate ester can have a structure as shown in Formula (I).

Table 24 shows the properties of an electrolyte including the polymer of Example 22 and the properties of a battery including the electrolyte.

<table>
<tr><th colspan="4">Table 24</th></tr>
<tr><td rowspan="11">Polymeric precursor</td><td colspan="2">End-capping method</td><td>-</td></tr>
<tr><td rowspan="4">Polyol</td><td>Monomer 1</td><td>Ethane-1,2-diol</td></tr>
<tr><td>Ncp</td><td>2</td></tr>
<tr><td>Monomer 2</td><td>Butane-1,4-diol</td></tr>
<tr><td>Ncp</td><td>4</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="10">Polyester</td><td colspan="2">Mn (Dalton)</td><td>624</td></tr>
<tr><td colspan="2">VC (cP)</td><td>39.7</td></tr>
<tr><td rowspan="3">Within the temperature range from -80°C to 80°C</td><td>Whether glass transition occurs</td><td>-</td></tr>
<tr><td>Is there a melting point</td><td>Y</td></tr>
<tr><td>Is there any crystallization</td><td>Y</td></tr>
<tr><td colspan="2">Tm (°C)</td><td>16</td></tr>
<tr><td colspan="2">Td (°C)</td><td>-</td></tr>
<tr><td colspan="2">Ds (g/cm)</td><td>-</td></tr>
<tr><td rowspan="2">Fpp (°C)</td><td>ASTM D93</td><td>-</td></tr>
<tr><td>ASTM D7094</td><td>-</td></tr>
<tr><td rowspan="2">Polycarbonate ester</td><td colspan="2">eMn (Dalton)</td><td>624</td></tr>
<tr><td colspan="2">eVC (cP)</td><td>39.7</td></tr>
<tr><td colspan="4">Electrolyte</td></tr>
<tr><td colspan="2">Lithium salt</td><td colspan="2">-</td></tr>
<tr><td colspan="2">Concentration of lithium salt (M)</td><td colspan="2">-</td></tr>
<tr><td colspan="2">Ci ($S \cdot cm^{-1}$)</td><td colspan="2">-</td></tr>
<tr><td colspan="2">Fpe (°C)</td><td colspan="2">-</td></tr>
</table>

<Example 23>

The polymer of Example 23 includes a polyester, and the polyester includes a polycarbonate ester. The polyester of Example 23 is polymerized by at least two monomers, each of the monomers is selected from a group consisting of a carbonate ester and a polyol, and the carbonate ester can have a structure as shown in Formula (I).

Table 25 shows the properties of an electrolyte including the polymer of Example 23 and the properties of a battery including the electrolyte.

| Table 25 | | | |
|---|---|---|---|
| Polymeric precursor | End-capping method | | - |
| | Polyol | Monomer 1 | Propane-1,3-diol |
| | | Ncp | 3 |
| | | Monomer 2 | Butane-1,4-diol |
| | | Ncp | 4 |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 1718 |
| | VC (cP) | | 1149 |
| | Within the temperature range from -80°C to 80°C | Whether glass transition occurs - | |
| | | Is there a melting point | N |
| | | Is there any crystallization | N |
| | Tm (°C) | | - |
| | Td (°C) | | - |
| | Ds (g/cm) | | - |
| | Fpp (°C) | ASTM D93 | - |
| | | ASTM D7094 | - |
| Polycarbonate ester | eMn (Dalton) | | 1718 |
| | eVC (cP) | | 1149 |
| Electrolyte | | | |
| Lithium salt | | - | |
| Concentration of lithium salt (M) | | - | |
| Ci ($S\cdot cm^{-1}$) | | - | |
| Fpe (°C) | | - | |

<Example 24>

The polymer of Example 24 includes a polyester, and the polyester includes a polycarbonate ester. The polyester of Example 24 is polymerized by at least two monomers, each of the monomers is selected from a group consisting of a carbonate ester and a polyol, and the carbonate ester can have a structure as shown in Formula (I).

Table 26 shows the properties of an electrolyte including the polymer of Example 24 and the properties of a battery including the electrolyte.

Table 26

| | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| polyester | Mn (Dalton) | | 1956 |
| | VC (cP) | | Solid |
| | Within the temperature range from -80°C to 80°C | Whether glass transition occurs | - |
| | | Is there a melting point | Y |
| | | Is there any crystallization | Y |
| | Tm (°C) | | 40 |
| | Td (°C) | | - |
| | Ds (g/cm) | | - |
| | Fpp (°C) | ASTM D93 | - |
| | | ASTM D7094 | - |
| Polycarbonate ester | eMn (Dalton) | | 1956 |
| | eVC (cP) | | Solid |
| Electrolyte | | | |
| Lithium salt | - | | |
| Concentration of lithium salt (M) | - | | |
| Ci ($S\cdot cm^{-1}$) | - | | |
| Fpe (°C) | - | | |

<Example 25>

The polymer of Example 25 includes a polyester, and the polyester includes a polycarbonate ester. The polyester of Example 25 is polymerized by at least two monomers, each of the monomers is selected from a group consisting of a carbonate ester and a polyol, and the carbonate ester can have a structure as shown in Formula (I).

Table 27 shows the properties of an electrolyte including the polymer of Example 25 and the properties of a battery including the electrolyte.

<table>
<tr><td colspan="4">Table 27</td></tr>
<tr><td rowspan="9">Polymeric precursor</td><td colspan="2">End-capping method</td><td>-</td></tr>
<tr><td rowspan="4">Polyol</td><td>Monomer 1</td><td>Propane-1,3-diol</td></tr>
<tr><td>Ncp</td><td>3</td></tr>
<tr><td>Monomer 2</td><td>Butane-1,4-diol</td></tr>
<tr><td>Ncp</td><td>4</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="10">Polyester</td><td colspan="2">Mn (Dalton)</td><td>934</td></tr>
<tr><td colspan="2">VC (cP)</td><td>659</td></tr>
<tr><td rowspan="3">Within the temperature range from -80°C to 80°C</td><td>Whether glass transition occurs</td><td></td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>190</td></tr>
<tr><td colspan="2">Ds (g/cm)</td><td>-</td></tr>
<tr><td rowspan="2">Fpp (°C)</td><td>ASTM D93</td><td>-</td></tr>
<tr><td>ASTM D7094</td><td>-</td></tr>
</table>

<table>
<tr><td rowspan="2">Polycarbonate ester</td><td>eMn (Dalton)</td><td>934</td></tr>
<tr><td>eVC (cP)</td><td>659</td></tr>
<tr><td colspan="3">Electrolyte</td></tr>
<tr><td colspan="2">Lithium salt</td><td>-</td></tr>
<tr><td colspan="2">Concentration of lithium salt (M)</td><td>-</td></tr>
<tr><td colspan="2">Ci ($S \cdot cm^{-1}$)</td><td>-</td></tr>
<tr><td colspan="2">Fpe (°C)</td><td>-</td></tr>
</table>

<Example 26>

The polymer of Example 26 includes a polyester, and the polyester includes a polycarbonate ester. The polyester of Example 26 is polymerized by at least two monomers, each of the monomers is selected from a group consisting of a carbonate ester and a polyol, and the carbonate ester can have a structure as shown in Formula (I).

Table 28 shows the properties of an electrolyte including the polymer of Example 26 and the properties of a battery including the electrolyte.

<table>
<tr><th colspan="4">Table 28</th></tr>
<tr><td rowspan="8">Polymeric precursor</td><td colspan="2">End-capping method</td><td>-</td></tr>
<tr><td rowspan="4">Polyol</td><td>Monomer 1</td><td>Propane-1,3-diol</td></tr>
<tr><td>Ncp</td><td>3</td></tr>
<tr><td>Monomer 2</td><td>Butane-1,4-diol</td></tr>
<tr><td>Ncp</td><td>4</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="10">Polyester</td><td colspan="2">Mn (Dalton)</td><td>1823</td></tr>
<tr><td colspan="2">VC (cP)</td><td>4593</td></tr>
<tr><td rowspan="3">Within the temperature range from -80°C to 80°C</td><td>Whether glass transition occurs</td><td></td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>239</td></tr>
<tr><td colspan="2">Ds (g/cm)</td><td>-</td></tr>
<tr><td rowspan="2">Fpp (°C)</td><td>ASTM D93</td><td>-</td></tr>
<tr><td>ASTM D7094</td><td>-</td></tr>
<tr><td rowspan="2">Polycarbonate ester</td><td colspan="2">eMn (Dalton)</td><td>1823</td></tr>
<tr><td colspan="2">eVC (cP)</td><td>4593</td></tr>
<tr><td colspan="4">Electrolyte</td></tr>
<tr><td colspan="2">Lithium salt</td><td colspan="2">-</td></tr>
<tr><td colspan="2">Concentration of lithium salt (M)</td><td colspan="2">-</td></tr>
<tr><td colspan="2">Ci ($S \cdot cm^{-1}$)</td><td colspan="2">-</td></tr>
<tr><td colspan="2">Fpe (°C)</td><td colspan="2">-</td></tr>
</table>

<Example 27>

The polymer of Example 27 includes a polyester, and the polyester includes a polycarbonate ester. The polyester of Example 27 is polymerized by at least two monomers, each of the monomers is selected from a group consisting of a carbonate ester and a polyol, and the carbonate ester can have a structure as shown in Formula (I).

Table 29 shows the properties of an electrolyte including the polymer of Example 27 and the properties of a battery including the electrolyte.

| Table 29 | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 6665 |
| | VC (cP) | | 374 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 161 |
| | Ds (g/cm) | | - |
| | Fpp (°C) | ASTM D93 | - |
| | | ASTM D7094 | - |
| Polycarbonate ester | eMn (Dalton) | | 6665 |
| | eVC (cP) | | 374 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 28>

The polymer of Example 28 includes a polyester, and the polyester includes a polycarbonate ester. The polyester of Example 28 is polymerized by at least two monomers, each of the monomers is selected from a group consisting of a carbonate ester and a polyol, and the carbonate ester can have a structure as shown in Formula (I).

Table 30 shows the properties of an electrolyte including the polymer of Example 28 and the properties of a battery including the electrolyte.

| Table 30 | | | |
|---|---|---|---|
| Polymeric precursor | End-capping method | | - |
| | Polyol | Monomer 1 | Proane-1,2,3-triol |
| | | Ncp | 3 |
| | | Monomer 2 | - |
| | | Ncp | |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 2624 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 205 |
| | Ds (g/cm) | | - |
| | Fpp (°C) | ASTM D93 | - |
| | | ASTM D7094 | - |
| Polycarbonate ester | eMn (Dalton) | | - |
| | eVC (cP) | | 2624 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 29>

The polymer of Example 29 includes a polyester, and the polyester includes a polycarbonate ester. The polyester of Example 29 is polymerized by at least two monomers, each of the monomers is selected from a group consisting of a carbonate ester and a polyol, and the carbonate ester can have a structure as shown in Formula (I).

Table 31 shows the properties of an electrolyte including the polymer of Example 29 and the properties of a battery including the electrolyte.

<table>
<tr><th colspan="4">Table 31</th></tr>
<tr><td rowspan="11">Polymeric precursor</td><td colspan="2">End-capping method</td><td>-</td></tr>
<tr><td rowspan="4">Polyol</td><td>Monomer 1</td><td>Butane-1,4-diol</td></tr>
<tr><td>Ncp</td><td>4</td></tr>
<tr><td>Monomer 2</td><td>Hexane-1,6-diol</td></tr>
<tr><td>Ncp</td><td>6</td></tr>
<tr><td rowspan="4">Carbonate ester</td><td>Monomer 3</td><td>Diethyl carbonate</td></tr>
<tr><td>Ncc1</td><td>2</td></tr>
<tr><td>Ncc2</td><td>2</td></tr>
<tr><td>Ncc1 + Ncc2</td><td>4</td></tr>
<tr><td rowspan="10">Polyester</td><td colspan="2">Mn (Dalton)</td><td>-</td></tr>
<tr><td colspan="2">VC (cP)</td><td>1476</td></tr>
<tr><td rowspan="3">Within the temperature range from -80°C to 80°C</td><td>Whether glass transition occurs</td><td></td></tr>
<tr><td>Is there a melting point</td><td>N</td></tr>
<tr><td>Is there any crystallization</td><td>N</td></tr>
<tr><td colspan="2">Tm (°C)</td><td>-</td></tr>
<tr><td colspan="2">Td (°C)</td><td>227</td></tr>
<tr><td colspan="2">Ds (g/cm)</td><td>-</td></tr>
<tr><td rowspan="2">Fpp (°C)</td><td>ASTM D93</td><td>-</td></tr>
<tr><td>ASTM D7094</td><td>-</td></tr>
<tr><td>Polycarbonate</td><td colspan="2">eMn (Dalton)</td><td>-</td></tr>
<tr><td>ester</td><td colspan="2">eVC (cP)</td><td>1476</td></tr>
<tr><td colspan="4">Electrolyte</td></tr>
<tr><td colspan="2">Lithium salt</td><td colspan="2">-</td></tr>
<tr><td colspan="2">Concentration of lithium salt (M)</td><td colspan="2">-</td></tr>
<tr><td colspan="2">Ci ($S\cdot cm^{-1}$)</td><td colspan="2">-</td></tr>
<tr><td colspan="2">Fpe (°C)</td><td colspan="2">-</td></tr>
</table>

<Example 30>

The polymer of Example 30 includes a polyester, and the polyester includes a polycarbonate ester. The polyester of Example 30 is polymerized by at least two monomers, each of the monomers is selected from a group consisting of a carbonate ester and a polyol, and the carbonate ester can have a structure as shown in Formula (I).

Table 32 shows the properties of an electrolyte including the polymer of Example 30 and the properties of a battery including the electrolyte.

| Table 32 | | | |
|---|---|---|---|
| Polymeric precursor | End-capping method | | - |
| | Polyol | Monomer 1 | Butane-1,4-diol |
| | | Ncp | 4 |
| | | Monomer 2 | Propane-1,2,3-triol |
| | | Ncp | 3 |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 134 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 150 |
| | Ds (g/cm) | | - |
| | Fpp (°C) | ASTM D93 | - |
| | | ASTM D7094 | - |
| Polycarbonate | eMn (Dalton) | | - |
| ester | eVC (cP) | | 134 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 31>

The polymer of Example 31 includes a polyester, and the polyester includes a polycarbonate ester. The polyester of Example 31 is polymerized by at least two monomers, each of the monomers is selected from a group consisting of a carbonate ester and a polyol, and the carbonate ester can have a structure as shown in Formula (I).

Table 33 shows the properties of an electrolyte including the polymer of Example 31 and the properties of a battery including the electrolyte.

| Table 33 | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 5200 |
| | VC (cP) | | 222 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 144 |
| | Ds (g/cm) | | - |
| | Fpp (°C) | ASTM D93 | - |
| | | ASTM D7094 | - |
| Polycarbonate ester | eMn (Dalton) | | 5200 |
| | eVC (cP) | | 222 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 32>

The polymer of Example 32 includes a polyester, and the polyester includes a polycarbonate ester. The polyester of Example 32 is polymerized by at least two monomers, each of the monomers is selected from a group consisting of a carbonate ester and a polyol, and the carbonate ester can have a structure as shown in Formula (I).

Table 34 shows the properties of an electrolyte including the polymer of Example 32 and the properties of a battery including the electrolyte.

| Table 34 | | | |
|---|---|---|---|
| Polymeric precursor | End-capping method | | - |
| | Polyol | Monomer 1 | Ethane-1,2-diol |
| | | Ncp | 2 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 10 |
| | Within the temperature range from -80°C to 80°C | Whether glass transition occurs | |
| | | Is there a melting point | Y |
| | | Is there any crystallization | N |
| | Tm (°C) | | 20 |
| | Td (°C) | | 122 |
| | Ds (g/cm) | | - |
| | Fpp (°C) | ASTM D93 | - |
| | | ASTM D7094 | - |
| Polycarbonate | eMn (Dalton) | | - |
| ester | eVC (cP) | | 10 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 33>

The polymer of Example 33 includes a polyester, and the polyester includes a polycarbonate ester. The polyester of Example 33 is polymerized by at least two monomers, each of the monomers is selected from a group consisting of a carbonate ester and a polyol, and the carbonate ester can have a structure as shown in Formula (I).

Table 35 shows the properties of an electrolyte including the polymer of Example 33 and the properties of a battery including the electrolyte.

| Table 35 | | | |
|---|---|---|---|
| Polymeric precursor | End-capping method | | - |
| | Polyol | Monomer 1 | Ethane-1,2-diol |
| | | Ncp | 2 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | - |
| | VC (cP) | | 17 |
| | Within the temperature range from -80°C to 80°C | Whether glass transition occurs | - |
| | | Is there a melting point | Y |
| | | Is there any crystallization | Y |
| | Tm (°C) | | -55 |
| | Td (°C) | | 120 |
| | Ds (g/cm) | | - |
| | Fpp (°C) | ASTM D93 | - |
| | | ASTM D7094 | - |
| Polycarbonate ester | eMn (Dalton) | | - |
| | eVC (cP) | | 17 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 34>

The polymer of Example 34 includes a polyester, and the polyester includes a polycarbonate ester. The polyester of Example 34 is polymerized by at least two monomers, each of the monomers is selected from a group consisting of a carbonate ester and a polyol, and the carbonate ester can have a structure as shown in Formula (I).

Table 36 shows the properties of an electrolyte including the polymer of Example 34 and the properties of a battery including the electrolyte.

| Table 36 | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| polyester | Mn (Dalton) | | 2529 |
| | VC (cP) | | Solid |
| | Within the temperature range from -80°C to 80°C | Whether glass transition occurs | |
| | | Is there a melting point | Y |
| | | Is there any crystallization | Y |
| | Tm (°C) | | 55 |
| | Td (°C) | | 246 |
| | Ds (g/cm) | | - |
| | Fpp (°C) | ASTM D93 | - |
| | | ASTM D7094 | - |
| Polycarbonate | eMn (Dalton) | | 2529 |
| ester | eVC (cP) | | Solid |
| Electrolyte | | | |
| Lithium salt | | - | |
| Concentration of lithium salt (M) | | - | |
| Ci ($S\cdot cm^{-1}$) | | - | |
| Fpe (°C) | | - | |

<Example 35>

The polymer of Example 35 includes a polyester, and the polyester includes a polycarbonate ester. The polyester of Example 35 is polymerized by at least two monomers, each of the monomers is selected from a group consisting of a carbonate ester and a polyol, and the carbonate ester can have a structure as shown in Formula (I).

Table 37 shows the properties of an electrolyte including the polymer of Example 35 and the properties of a battery including the electrolyte.

| Table 37 | | | |
|---|---|---|---|
| Polymeric precursor | End-capping method | | - |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 492 |
| | VC (cP) | | 7516 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 164 |
| | Ds (g/cm) | | - |
| | Fpp (°C) | ASTM D93 | - |
| | | ASTM D7094 | - |
| Polycarbonate | eMn (Dalton) | | 492 |
| ester | eVC (cP) | | 7516 |
| Electrolyte | | | |
| Lithium salt | | - | |
| Concentration of lithium salt (M) | | - | |
| Ci ($S\cdot cm^{-1}$) | | - | |
| Fpe (°C) | | - | |

<Example 36>

The polymer of Example 36 includes a polyester, and the polyester includes a polycarbonate ester. The polyester of Example 36 is polymerized by at least two monomers, each of the monomers is selected from a group consisting of a carbonate ester and a polyol, and the carbonate ester can have a structure as shown in Formula (I).

Table 38 shows the properties of an electrolyte including the polymer of Example 36 and the properties of a battery including the electrolyte.

| Table 38 | | | |
|---|---|---|---|
| Polymeric precursor | End-capping method | | - |
| | Polyol | Monomer 1 | 3-Methylpentane-1,5-diol |
| | | Ncp | 6 |
| | | Monomer 2 | - |
| | | Ncp | |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 1080 |
| | VC (cP) | | 2244 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 217 |
| | Ds (g/cm) | | - |
| | Fpp (°C) | ASTM D93 | - |
| | | ASTM D7094 | - |
| Polycarbonate ester | eMn (Dalton) | | 1080 |
| | eVC (cP) | | 2244 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 37>

The polymer of Example 37 includes a polyester, and the polyester includes a polycarbonate ester. The polyester of Example 37 is polymerized by at least two monomers, each of the monomers is selected from a group consisting of a carbonate ester and a polyol, and the carbonate ester can have a structure as shown in Formula (I).

Table 39 shows the properties of an electrolyte including the polymer of Example 37 and the properties of a battery including the electrolyte.

| Table 39 | | | |
|---|---|---|---|
| Polymeric precursor | End-capping method | | - |
| | Polyol | Monomer 1 | 2,2-Dimethylpropane-1,3-diol |
| | | Ncp | 5 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 328 |
| | VC (cP) | | Solid |
| | Within the temperature range from -80°C to 80°C | Whether glass transition occurs | - |
| | | Is there a melting point | Y |
| | | Is there any crystallization | N |
| | Tm (°C) | | 68 |
| | Td (°C) | | 145 |
| | Ds (g/cm) | | - |
| | Fpp (°C) | ASTM D93 | - |
| | | ASTM D7094 | - |
| Polycarbonate ester | eMn (Dalton) | | 328 |
| | eVC (cP) | | Solid |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 38>

The polymer of Example 38 includes a polyester, and the polyester includes a polycarbonate ester. The polyester of Example 38 is polymerized by at least two monomers, each of the monomers is selected from a group consisting of a carbonate ester and a polyol, and the carbonate ester can have a structure as shown in Formula (I).

Table 40 shows the properties of an electrolyte including the polymer of Example 38 and the properties of a battery including the electrolyte.

| Table 40 | | | |
|---|---|---|---|
| Polymeric precursor | End-capping method | | |
| | Polyol | Monomer 1 | Butane-1,4-diol |
| | | Ncp | 4 |
| | | Monomer 2 | - |
| | | Ncp | - |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 337 |
| | VC (cP) | | 202 |
| | Within the temperature range from -80°C to 80°C | Whether glass transition occurs | |
| | | Is there a melting point | N |
| | | Is there any crystallization | N |
| | Tm (°C) | | - |
| | Td (°C) | | 166 |
| | Ds (g/cm) | | - |
| | Fpp (°C) | ASTM D93 | - |
| | | ASTM D7094 | - |
| Polycarbonate ester | eMn (Dalton) | | 337 |
| | eVC (cP) | | 202 |
| Electrolyte | | | |
| Lithium salt | | - | |
| Concentration of lithium salt (M) | | - | |
| Ci ($S \cdot cm^{-1}$) | | - | |
| Fpe (°C) | | - | |

<Example 39>

The polymer of Example 39 includes a polyester, and the polyester includes a polycarbonate ester. The polyester of Example 39 is polymerized by at least two monomers, each of the monomers is selected from a group consisting of a carbonate ester and a polyol, and the carbonate ester can have a structure as shown in Formula (I).

Table 41 shows the properties of an electrolyte including the polymer of Example 39 and the properties of a battery including the electrolyte.

| Table 41 | | | |
|---|---|---|---|
| Polymeric precursor | End-capping method | | - |
| | Polyol | Monomer 1 | Hexane-1,6-diol |
| | | Ncp | 6 |
| | | Monomer 2 | - |
| | | Ncp | |
| | Carbonate ester | Monomer 3 | Diethyl carbonate |
| | | Ncc1 | 2 |
| | | Ncc2 | 2 |
| | | Ncc1 + Ncc2 | 4 |
| Polyester | Mn (Dalton) | | 1279 |
| | VC (cP) | | Solid |
| | Within the temperature range from -80°C to 80°C | Whether glass transition occurs | - |
| | | Is there a melting point | Y |
| | | Is there any crystallization | N |
| | Tm (°C) | | 31 |
| | Td (°C) | | 191 |
| | Ds (g/cm) | | - |
| | Fpp (°C) | ASTM D93 | - |
| | | ASTM D7094 | - |
| Polycarbonate ester | eMn (Dalton) | | 1279 |
| | eVC (cP) | | Solid |
| electrolyte | | | |
| Lithium salt | | - | |
| Concentration of lithium salt (M) | | - | |
| Ci ($S\cdot cm^{-1}$) | | - | |
| Fpe (°C) | | - | |

<Example 40>

The polymer of Example 40 includes a polyester, and the polyester includes a polycarbonate ester. The polyester of Example 40 is polymerized by at least two monomers, each of the monomers is selected from a group consisting of a carbonate ester and a polyol, and the carbonate ester can have a structure as shown in Formula (I).

Table 42 shows the properties of an electrolyte including the polymer of Example 40 and the properties of a battery including the electrolyte.

| Table 42 | | | |
|---|---|---|---|
| Polymeric precursor | End-capping method | | - |
| | Polyol | Monomer 1 | 3-Methylpentane-1,5-diol |
| | | Ncp | 6 |
| | | Monomer 2 | - |
| | | Ncp | - |
| | Carbonate ester | Monomer 3 | Diethyl carbonate) |
| | | Ncc1 | 2 |
| | | Ncc2 | 2 |
| | | Ncc1 + Ncc2 | 4 |
| Polyester | Mn (Dalton) | | 620 |
| | VC (cP) | | 963 |
| | Within the temperature range from -80°C to 80°C | Whether glass transition occurs | - |
| | | Is there a melting point | N |
| | | Is there any crystallization | N |
| | Tm (°C) | | - |
| | Td (°C) | | 171 |
| | Ds (g/cm) | | - |
| | Fpp (°C) | ASTM D93 | - |
| | | ASTM D7094 | - |
| Polycarbonate ester | eMn (Dalton) | | 620 |
| | eVC (cP) | | 963 |
| Electrolyte | | | |
| Lithium salt | - | | |
| Concentration of lithium salt (M) | - | | |
| Ci ($S \cdot cm^{-1}$) | - | | |
| Fpe (°C) | - | | |

**Claims**

1. A polymer, which is a composition of a battery, **characterized in** comprising:

   a polyester polymerized by at least two monomers, wherein each of the at least two monomers is selected from a group consisting of a carbonate ester and a polyol;
   wherein a number-average molecular weight of the polyester is Mn, and the following condition is satisfied:

$$Mn \leq 7500 \text{ Dalton}.$$

2. The polymer of claim 1, wherein the carbonate ester is represented by Formula (I):

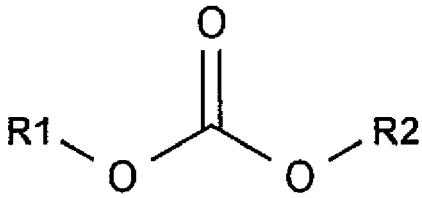

Formula (I),

wherein a carbon number of R1 is Ncc1, a carbon number of R2 is Ncc2, and the following condition is satisfied:

$$2 \le Ncc1+Ncc2 \le 10.$$

**3.** The polymer of claims 1 or 2, wherein a carbon number of the polyol is Ncp, and the following condition is satisfied:

$$1 \le Ncp \le 10.$$

**4.** The polymer of any one of claims 1 to 3, wherein a carbon number of the polyol is Ncp, and the following condition is satisfied:

$$11 \le Ncp \le 20.$$

**5.** The polymer of any one of claims 1 to 4, wherein the polyester comprises a polycarbonate ester, a number-average molecular weight of the polycarbonate ester is eMn, and the following condition is satisfied:

$$300\ Dalton \le eMn \le 2000\ Dalton.$$

**6.** The polymer of any one of claims 1 to 5, wherein a viscosity of the polycarbonate ester is eVC, and the following condition is satisfied:

$$10\ cP \le eVC \le 3000\ cP.$$

**7.** The polymer of any one of claims 1 to 6, wherein the number-average molecular weight of the polyester is Mn, and the following condition is satisfied:

$$100\ Dalton \le Mn \le 3500\ Dalton.$$

**8.** The polymer of any one of claims 1 to 7, wherein a viscosity of the polyester is VC, and the following condition is satisfied:

$$5\ cP \le VC \le 8000\ cP.$$

**9.** The polymer of any one of claims 1 to 8, wherein a glass transition temperature of the polyester is Tg, and the following condition is satisfied:

$$-80°C \le Tg \le -22°C.$$

**10.** The polymer of any one of claims 1 to 9, wherein the polyester is without a glass transition in a range of -80°C to -20°C.

**11.** The polymer of any one of claims 1 to 10, wherein the polyester is without a crystallization in a range of -80°C to 20°C.

**12.** The polymer of any one of claims 1 to 11, wherein a melting point of the polyester is Tm, and the following condition is satisfied:

$$-80°C \leq Tm \leq 50°C.$$

**13.** The polymer of any one of claims 1 to 12, wherein the polyester is without a melting point in a range of -80°C to 50°C.

**14.** The polymer of any one of claims 1 to 13, wherein a pyrolysis temperature of the polyester is Td, and the following condition is satisfied:

$$100°C \leq Td \leq 600°C.$$

**15.** An electrolyte, **characterized in** comprising:

the polymer of any one of claims 1 to 14;
a metal salt; and
an organic solvent, wherein the polymer, the metal salt and the organic solvent are uniformly mixed.

**16.** An electrolyte, **characterized in** comprising:

the polymer of any one of claims 1 to 14; and
a metal salt, wherein the polymer is uniformly mixed with the metal salt.

**17.** A battery, **characterized in** comprising:
the electrolyte of claims 15 or 16.

**18.** The battery of claim 17, wherein a maximum of discharge volumetric capacities from a first cycle of the battery to a twentieth cycle of the battery is VMax, and the following condition is satisfied:

$$40\ mAh/cm^3 \leq VMax \leq 200\ mAh/cm^3.$$

**19.** The battery of claims 17 or 18, wherein a discharge volumetric capacity of a fifth cycle of the battery is V5, a discharge volumetric capacity of a tenth cycle of the battery is V10, and the following condition is satisfied:

$$0.80 \leq V10/V5 \leq 1.40.$$

**20.** The battery of any one of claims 17 to 19, wherein the discharge volumetric capacity of the fifth cycle of the battery is V5, a discharge volumetric capacity of a fiftieth cycle of the battery is V50, and the following condition is satisfied:

$$0.80 \leq V50/V5 \leq 1.40.$$

**21.** The battery of any one of claims 17 to 20, wherein the discharge volumetric capacity of the fifth cycle of the battery is V5, a discharge volumetric capacity of a two hundredth cycle of the battery is V200, and the following condition is satisfied:

$$0.65 \leq V200/V5 \leq 1.40.$$

**22.** The battery of any one of claims 17 to 21, wherein a total number of Coulombic efficiency greater than 90% and

smaller than 110% in first twenty cycles of the battery is n90E20, and the following condition is satisfied:

$$15 \leq n90E20 \leq 20.$$

**23.** A polymer, which is a composition of a battery, **characterized in** comprising:

a polyester comprising an end-capped polycarbonate ester, and the end-capped polycarbonate ester comprising an inert group on an end thereof;
wherein the polyester is polymerized by at least two monomers, and each of the at least two monomers is selected from a group consisting of a carbonate ester and a polyol,

**24.** The polymer of claim 23, wherein a carbon number of the polyol is Ncp, and the following condition is satisfied:

$$1 \leq Ncp \leq 10.$$

**25.** The polymer of claims 23 or 24, wherein a carbon number of the polyol is Ncp, and the following condition is satisfied:

$$11 \leq Ncp \leq 20.$$

**26.** The polymer of any one of claims 23 to 25, wherein a number-average molecular weight of the end-capped polycarbonate ester is cMn, and the following condition is satisfied:

$$100 \text{ Dalton} \leq cMn \leq 1500 \text{ Dalton}.$$

**27.** The polymer of any one of claims 23 to 26, wherein a viscosity of the end-capped polycarbonate ester is cVC, and the following condition is satisfied:

$$5 \text{ cP} \leq cVC \leq 500 \text{ cP}.$$

**28.** The polymer of any one of claims 23 to 27, wherein the polyester is without a glass transition in a range of -80°C to -20°C.

**29.** The polymer of any one of claims 23 to 28, wherein the polyester is without a crystallization in a range of -80°C to 20°C, and the polyester is without a melting point in a range of -60°C to 20°C.

**30.** The polymer of any one of claims 23 to 29, wherein a pyrolysis temperature of the polyester is Td, and the following condition is satisfied:

$$150°C \leq Td \leq 400°C.$$

**31.** The polymer of any one of claims 23 to 30, wherein a density of the polyester is Ds, and the following condition is satisfied:

$$0.50 \text{ g/cm} \leq Ds \leq 2.00 \text{ g/cm}.$$

**32.** An electrolyte, **characterized in** comprising:

the polymer of any one of claims 23 to 31; and
a metal salt, wherein the polymer is uniformly mixed with the metal salt.

**33.** The electrolyte of claim 32, wherein an electrical conductivity of the electrolyte is Ci, and the following condition is

satisfied:

$$1\times10^{-8}\ S\cdot cm^{-1} \le Ci.$$

**34.** A battery, **characterized in** comprising:
the electrolyte of claims 32 or 33.

**35.** The battery of claim 34, wherein a discharge volumetric capacity of a fifth cycle of the battery with a current of 1.0 C for charging and discharging at a constant temperature of 25°C is V5T25, a discharge volumetric capacity of the fifth cycle of the battery with the current of 1.0 C for charging and discharging at a constant temperature of 60°C is V5T60, and the following condition is satisfied:

$$0.80 \le V5T60/V5T25 \le 1.50.$$

**36.** The battery of claims 34 or 35, wherein a discharge volumetric capacity of a fifteenth cycle of the battery with the current of 1.0 C for charging and discharging at the constant temperature of 25°C is V15T25, a discharge volumetric capacity of the fifteenth cycle of the battery with the current of 1.0 C for charging and discharging at the constant temperature of 60°C is V15T60, and the following condition is satisfied:

$$0.80 \le V15T60/V15T25 \le 1.50.$$

**37.** The battery of any one of claims 34 to 36, wherein a discharge volumetric capacity of a hundredth cycle of the battery with the current of 1.0 C for charging and discharging at the constant temperature of 25°C is V100T25, a discharge volumetric capacity of the hundredth cycle of the battery with the current of 1.0 C for charging and discharging at the constant temperature of 60°C is V100T60, and the following condition is satisfied:

$$0.80 \le V100T60/V100T25 \le 2.00.$$

Europäisches Patentamt
European Patent Office
Office européen des brevets

# EUROPEAN SEARCH REPORT

Application Number
EP 24 16 9903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/061449 A1 (MARUO TATSUYA [JP] ET AL) 23 May 2002 (2002-05-23)<br>* paragraphs [0064], [0073], [0074], [0076] *<br>----- | 1-37 | INV.<br>H01M10/0525<br>C08G64/02<br>C08L69/00 |
| X | CN 115 850 676 A (UNIV SHIHEZI)<br>28 March 2023 (2023-03-28)<br>* examples 1-9 *<br>----- | 1-37 | |
| | | | TECHNICAL FIELDS SEARCHED (IPC) |
| | | | H01M<br>C09J<br>C08G<br>C08L |

The present search report has been drawn up for all claims

1

| Place of search | Date of completion of the search | Examiner |
|---|---|---|
| Munich | 29 August 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 9903

This annex lists the patent family members relating to the patent documents cited in the above-mentioned European search report. The members are as contained in the European Patent Office EDP file on
The European Patent Office is in no way liable for these particulars which are merely given for the purpose of information.

29-08-2024

| Patent document cited in search report | Publication date | Patent family member(s) | Publication date |
|---|---|---|---|
| US 2002061449 A1 | 23-05-2002 | AT E346361 T1 | 15-12-2006 |
| | | CA 2357682 A1 | 19-03-2002 |
| | | CN 1360357 A | 24-07-2002 |
| | | DE 60124640 T2 | 13-09-2007 |
| | | EP 1189243 A2 | 20-03-2002 |
| | | JP 2003003078 A | 08-01-2003 |
| | | KR 20020022622 A | 27-03-2002 |
| | | SG 103316 A1 | 29-04-2004 |
| | | TW 540178 B | 01-07-2003 |
| | | US 2002061449 A1 | 23-05-2002 |
| CN 115850676 A | 28-03-2023 | NONE | |

EPO FORM P0459

For more details about this annex : see Official Journal of the European Patent Office, No. 12/82